(19) Europäisches Patentamt
European Patent Office
Office européen des brevets

(11) Veröffentlichungsnummer: **0 079 563**
**B1**

(12) # EUROPÄISCHE PATENTSCHRIFT

(45) Veröffentlichungstag der Patentschrift: **08.01.86**

(51) Int. Cl.[4]: **C 09 B 62/095**, C 09 B 62/515, D 06 P 3/66, D 06 P 3/10

(21) Anmeldenummer: **82110310.8**

(22) Anmeldetag: **09.11.82**

(54) **Wasserlösliche 1:2-Metallkomplex-Azoverbindungen, Verfahren zu ihrer Herstellung und ihre Verwendung als Farbstoffe.**

(30) Priorität: **17.11.81 DE 3145571**

(43) Veröffentlichungstag der Anmeldung: **25.05.83 Patentblatt 83/21**

(45) Bekanntmachung des Hinweises auf die Patenterteilung: **08.01.86 Patentblatt 86/2**

(84) Benannte Vertragsstaaten: **CH DE FR GB IT LI**

(56) Entgegenhaltungen:
**EP - A - 0 040 790**
**FR - A - 2 437 426**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Fuchs, Hermann, Dr., Altenhainer Strasse 2, D-6240 Königstein/Taunus (DE)**

**EP 0 079 563 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung liegt auf dem technischen Gebiet der faserreaktiven Metallkomplexazofarbstoffe.

In der nicht vorveröffentlichten Europäischen Patentanmeldungs-Veröffentlichung Nr. 0 040 790 A (Art. 54(3) EPÜ) sind faserreaktive Farbstoffe beschrieben, die einen 6-Fluoro-s-triazin-2-ylamino-Rest, der in 4-Stellung durch eine Äthergruppe oder eine Mercaptogruppe oder eine Aminogruppe substituiert ist, und als weiteren faserreaktiven Rest einen Rest der Vinylsulfonreihe enthalten.

Mit der vorliegenden Erfindung wurden neue, wertvolle wasserlösliche, symmetrische und asymmetrische 1:2-Chromkomplex- und 1:2-Kobaltkomplex-Azoverbindungen von Monoazoverbindungen der allgemeinen Formel (1)

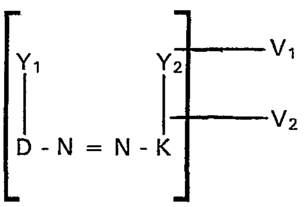 (1)

sowie deren 1:2-Chrom- und 1:2-Kobaltmischkomplexe gefunden. Bei den symmetrischen 1:2-Metallkomplexverbindungen sind jeweils zwei gleiche metallfreie Monoazoverbindungen der allgemeinen Formel (1), bei den asymmetrischen 1:2-Metallkomplexverbindungen jeweils zwei verschiedene Monoazoverbindungen der allgemeinen Formel (1) mit dem Metall komplex verbunden. Die erfindungsgemässen 1:2-Metallmischkomplexe stellen Mischungen von zwei verschiedenen symmetrischen und einer asymmetrischen 1:2-Chrom- oder 1:2-Kobaltkomplexverbindung aus zwei verschiedenen metallfreien Monoazoverbindungen der allgemeinen Formel (1) dar.

In der obigen allgemeinen Formel (1) bedeuten:

$Y_1$ ist eine zur Metallkomplexbildung befähigte Gruppe, die in ortho-Stellung zur Azobrücke an D gebunden ist, wie beispielsweise die Carboxygruppe und insbesondere die Hydroxygruppe;

$Y_2$ ist eine zur Metallkomplexbildung befähigte Gruppe, die an K in ortho-Stellung zur Azogruppe gebunden ist, wie beispielsweise die Aminogruppe und insbesondere die Hydroxygruppe;

D ist der Rest einer Diazokomponente, an den die nachstehend definierte faserreaktive Gruppe $V_1$ oder die nachstehend definierte faserreaktive Gruppe $V_2$ gebunden ist;

K ist der Rest einer Kupplungskomponente, an den die nachstehend definierte faserreaktive Gruppe $V_1$ oder die nachstehend definierte faserreaktive Gruppe $V_2$ gebunden ist;

$V_1$ ist eine Gruppe der allgemeinen Formel (2a)

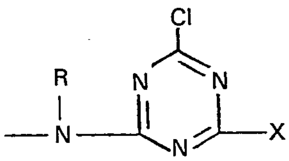 (2a),

die an D oder K gebunden ist, in welcher bedeuten:

R ist ein Wasserstoffatom oder eine Alkylgruppe von 1 bis 4 C-Atomen, wie die Äthylgruppe und insbesondere die Methylgruppe, und

X ist eine gegebenenfalls substituierte Aminogruppe oder eine gegebenenfalls verätherte Hydroxygruppe oder eine Thioäthergruppe;

$V_2$ ist eine Gruppe der allgemeinen Formel (2b)

$$-W-SO_2-Z \qquad (2b),$$

die an D oder K gebunden ist und in welcher bedeuten:

W ist eine direkte Bindung oder eine Gruppe der Formel

- NH -, - N -, - $CH_2$ - oder - $CH_2$ - $CH_2$ -,
  |
  Alk

worin Alk eine niedere Alkylgruppe bedeutet; bevorzugt ist W eine direkte Bindung;

Z ist die Vinyl-, die β-Sulfatoäthyl-, die β-Thiosulfatoäthyl-, die β-Chloräthyl- oder die β-Acetoxyäthyl-Gruppe.

Die Gruppen $V_1$ und $V_2$ sind bevorzugt nicht beide gleichzeitig an D oder K gebunden.

Der Formelrest X stellt insbesondere eine Gruppe der allgemeinen Formel (2c), (2d) oder (2e)

$-O-R^1$, (2c) $-S-R^2$, (2d) 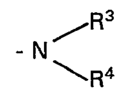 (2e)

dar, in welcher bedeuten:

$R^1$ ist eine gegebenenfalls substituierte niedere Alkylgruppe oder ein gegebenenfalls substituierter Arylrest;

$R^2$ ist eine gegebenenfalls substituierte niedere Alkylgruppe oder ein gegebenenfalls substituierter Arylrest;

$R^3$ ist ein Wasserstoffatom oder ein gegebenenfalls substituierter niederer aliphatischer Rest oder ein cycloaliphatischer Rest;

$R^4$ ist ein Wasserstoffatom oder ein gegebenenfalls substituierter niederer aliphatischer Rest oder ein gegebenenfalls substituierter Arylrest, wobei $R^3$ und $R^4$ gleiche oder voneinander verschiedene Bedeutungen haben können, oder

$R^3$ und $R^4$ bilden zusammen mit dem Stickstoffatom einen heterocyclischen Ring, der einen Alkylenrest von 4 bis 7 C-Atomen enthält oder der 2 oder 3 niedere Alkylenreste und ein oder zwei Heteroatome, wie beispielsweise Stickstoff-, Sauerstoff- und Schwefelatome, enthält, wie beispielsweise den Morpholin-, Piperidin- oder Piperazin-Ring.

Niedere aliphatische Reste sind insbesondere niedere Alkyl- und Alkenylreste.

Die zuvor und im folgenden verwendete Angabe «niedere» bedeutet, dass der in der Gruppe oder in der Verbindung jeweils enthaltene Alkyl- oder Alkylenrest aus 1 bis 4 C-Atomen und der Alkenylrest aus 2 bis 4 C-Atomen besteht. Niedere Alkylgruppen sind vorzugsweise die Äthylgruppe und insbesondere die Methylgruppe; niedere Alkoxygruppen sind

vorzugsweise die Äthoxygruppe und insbesondere die Methoxygruppe.

Substituierte niedere Alkylreste sind beispielsweise Alkylgruppen von 1 bis 4 C-Atomen, die durch einen oder zwei Substituenten aus der Gruppe Acetylamino, Hydroxy, Sulfato, niederes Alkoxy, Phenyl, Naphthyl, durch Sulfo, Carboxy, niederes Alkyl, niederes Alkoxy, Chlor, Sulfamoyl und/oder Carbamoyl substituiertes Phenyl, durch Sulfo, Carboxy, niederes Alkyl, niederes Alkoxy, Chlor, Sulfamoyl und/oder Carbamoyl substituiertes Naphthyl und insbesondere Sulfo und Carboxy substituiert sind. Ein cycloaliphatischer Rest ist beispielsweise der Cyclohexylrest. Arylreste sind vorzugsweise die Phenyl- und Naphthylreste; diese können beispielsweise durch Substituenten aus der Gruppe Carboxy, Sulfo, niederes Alkyl, niederes Alkoxy, Hydroxy und Chlor substituiert sein.

Die Reste der allgemeinen Formel (2e) sind vorzugsweise die Aminogruppe, eine durch eine niedere Alkylgruppe, wie Äthyl- oder Methylgruppe, mono- oder disubstituierte Aminogruppe, eine durch eine niedere Alkylgruppe und einen niederen Carboxyalkyl- oder niederen Sulfoalkyl-Rest substituierte Aminogruppe oder eine Phenylamino- oder Naphthylaminogruppe, wobei deren Phenyl- und Naphthylreste noch durch Methyl, Methoxy, Chlor, Carboxy und/oder Sulfo und deren Stickstoffatom noch durch eine niedere Alkylgruppe substituiert sein können.

Reste der allgemeinen Formel (2c) sind vorzugsweise eine niedere Alkoxygruppe, wie Äthoxy- oder Methoxygruppe, oder eine Phenoxygruppe, die durch eine oder zwei Sulfogruppen substituiert sein kann. Reste der allgemeinen Formel (2d) sind beispielsweise niedere Alkylmercapto-Gruppen.

Bevorzugt ist D ein Benzolkern, an den die oben definierte Gruppe $Y_1$, bevorzugt eine Carboxygruppe und insbesondere Hydroxygruppe, in ortho-Stellung zur Azogruppe gebunden ist und an den die oben definierte faserreaktive Gruppe $V_1$ oder die oben definierte faserreaktive Gruppe $V_2$ gebunden ist und der noch durch einen Substituenten aus der Gruppe Sulfo, Alkyl von 1 bis 4 C-Atomen, Alkoxy von 1 bis 4 C-Atomen, Nitro, Carboxy, Sulfamoyl, Carbamoyl, durch Alkyl von 1 bis 4 C-Atomen mono- oder disubstituiertes Carbamoyl oder Sulfamoyl, N-Phenyl--carbamoyl, N-Phenyl-sulfamoyl, N-Methyl-N-phenyl-carbamoyl, N-Methyl-N-phenyl-sulfamoyl, Chlor und Brom, bevorzugt hiervon insbesondere Sulfo, Methyl, Äthyl, Methoxy, Äthoxy, Carboxy und Chlor, substituiert sein kann. Ebenso ist D bevorzugt ein Naphthalinkern, dessen in ortho-Stellung zur Azogruppe befindliche Gruppe $Y_1$ die Hydroxygruppe ist und an den die oben definierte faserreaktive Gruppe $V_1$ oder die oben definierte faserreaktive Gruppe $V_2$ gebunden ist und der noch durch eine oder zwei Sulfogruppen substituiert sein kann, bevorzugt substituiert ist.

Der Formelrest $-K-Y_2$ ist bevorzugt ein Naphtholrest, an den, an K gebunden, die oben definierte faserreaktive Gruppe $V_1$ oder die oben definierte faserreaktive Gruppe $V_2$ gebunden ist und an den die Azogruppe in ortho-Stellung zur Hydroxygruppe steht und in dem der Naphthalinkern K noch durch eine oder zwei Sulfogruppen substituiert sein kann, bevorzugt substituiert ist.

Weiterhin ist der Formelrest $-K-Y_2$ bevorzugt ein 1-Phenyl- oder 1-Naphthyl-pyrazol-5-on-4-yl-Rest, an den die Azogruppe in 4-Stellung gebunden ist und der in 3-Stellung durch Carbamoyl, niederes Carbalkoxy, Phenyl, Methyl oder Carboxy, bevorzugt Methyl und Carboxy, substituiert ist und dessen in 1-Stellung befindlicher Phenylrest durch die oben definierte faserreaktive Gruppe $V_1$ oder durch die oben definierte faserreaktive Gruppe $V_2$ substituiert ist und noch durch einen oder zwei Substituenten aus der Gruppe Alkyl von 1 bis 4 C-Atomen, Alkoxy von 1 bis 4 C-Atomen, Chlor, Brom, Alkanoylamino von 1 bis 4 C-Atomen im Alkylrest, Carboxy und Sulfo substituiert sein kann, und dessen in 1-Stellung befindlicher Naphthylrest durch die oben definierte Gruppe $V_1$ oder die oben definierte Gruppe $V_2$ substituiert ist und noch durch eine Sulfogruppe und einen Substituenten aus der Gruppe Methyl, Äthyl, Methoxy, Äthoxy, Alkanoylamino von 1 bis 4 C-Atomen im Alkylrest, Carboxy und Chlor oder, bevorzugt, durch eine oder zwei Sulfogruppen substituiert sein kann, insbesondere bevorzugt substituiert ist.

Der Formelrest $-K-Y_2$ ist weiterhin bevorzugt ein Rest der Formel

HO
|
C - $CH_3$
||
- C - CO - NH - Phenyl

oder

HO
|
C - $CH_3$
||
- C - CO - NH - Naphthyl

in welchen der Phenylrest «Phenyl» durch die oben definierte faserreaktive Gruppe $V_1$ oder die oben definierte faserreaktive Gruppe $V_2$ substituiert ist und noch durch einen oder zwei Substituenten aus der Gruppe Alkyl von 1 bis 4 C-Atomen, Alkoxy von 1 bis 4 C-Atomen, Chlor, Carboxy, Sulfo, Carbamoyl und Sulfamoyl substituiert sein kann, und in welchen der Naphthylrest «Naphthyl» durch die oben definierte faserreaktive Gruppe $V_1$ oder die oben definierte faserreaktive Gruppe $V_2$ substituiert ist und noch durch eine Sulfogruppe und einen Substituenten aus der Gruppe Methyl, Äthyl, Methoxy, Äthoxy, Chlor und Carboxy oder, bevorzugt, durch eine oder zwei Sulfogruppen substituiert sein kann, insbesondere bevorzugt substituiert ist.

Die neuen, erfindungsgemässen 1:2-Metallkomplexverbindungen und 1:2-Metallmischkomplexe können in Form der freien Säure und in Form ihrer Salze vorliegen. Bevorzugt sind sie in Form der Salze, insbesondere der Alkali- und Erdalkalimetallsalze, hiervon bevorzugt der Natrium-, Kalium- und auch Calciumsalze. Sie finden bevorzugt in Form der Alkalimetallsalze Verwendung zum Färben und Bedrukken von natürlichen oder regenerierten Cellulosefasermaterialien oder von natürlichen, regenerierten oder synthetischen Polyamidfasermaterialien sowie von Leder.

Die vorliegende Erfindung betrifft weiterhin Verfahren zur Herstellung der obengenannten und definierten erfindungsgemässen Verbindungen. Diese sind dadurch gekennzeichnet, dass man eine Verbindung der allgemeinen Formel (1) oder zwei voneinander verschiedene Verbindungen der allgemeinen Formel (1), in denen vorzugsweise die Formelreste D und/oder K jeweils voneinander verschieden sind, mit einem chrom- oder kobaltabgebenden Mittel in wässrigem Medium bei einem pH-Wert zwischen 3,5 und 7,0, vorzugsweise 5,0 und 6,5, und bei einer Temperatur zwischen 50 und 130°C, vorzugsweise zwischen 80 und 100°C, bei Atmosphärendruck oder unter Druck im abgeschlossenen Gefäss umsetzt, oder dass man eine symmetrische oder asymmetrische 1:2-Chrom- oder 1:2-Kobaltkomplexverbindung oder einen 1:2-Chrom- oder 1:2-Kobaltmischkomplex von metallfreien Azoverbindungen der allgemeinen Formel (3)

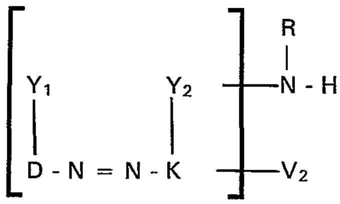

(3)

in welcher $Y_1$, $Y_2$, R und $V_2$ die obengenannten Bedeutungen haben und D den Rest einer Diazokomponente darstellt, an die die Aminogruppe der Formel -N(R)H oder die Gruppe der oben definierten Formel $V_2$ gebunden ist, und K den Rest einer Kupplungskomponente bedeutet, an die die Aminogruppe der Formel -N(R)H oder die oben definierte Gruppe $V_2$ gebunden ist, mit Cyanurchlorid monoacyliert und die so hergestellte Dichlor-s-triazinylamino-Verbindung anschliessend mit einer Verbindung der allgemeinen Formel H-X mit X der obengenannten Bedeutung umsetzt, oder dass man eine solche Chrom- oder Kobaltkomplexverbindung einer Verbindung der oben definierten allgemeinen Formel (3) mit einer Verbindung der allgemeinen Formel (4)

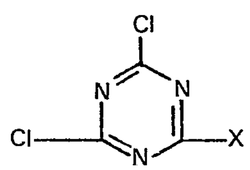

(4),

in welcher X die obengenannte Bedeutung besitzt, umsetzt.

Die bei diesen erfindungsgemässen Verfahren durchgeführten Umsetzungen der Chrom- oder Kobaltkomplexe von Verbindungen der allgemeinen Formel (3) mit Cyanurchlorid oder einer Verbindung der allgemeinen Formel (4) erfolgen analog bekannten Verfahrensweisen solcher Acylierungsreaktionen von Aminoverbindungen mit Chlortriazin-Verbindungen. Sie werden vorzugsweise in wässriger Phase oder auch in wässrig-organischer Phase, bspw. unter Verwendung von Aceton, Glykoldimethyläther, Glykoldiäthyläther, Tetrahydrofuran oder Dioxan, bei einer Temperatur zwischen 5 und 80°C, vorzugsweise zwischen 10 und 60°C, und bei einem pH-Wert zwischen 2,0 und 6,0, vorzugsweise zwischen 3,0 und 5,0, durchgeführt.

Zur Herstellung der reinen symmetrischen 1:2-Metallkomplex-Azoverbindungen setzt man eine metallfreie Azoverbindung der allgemeinen Formel (1) oder (3) in zweifach äquivalenter Menge mit einem chrom- oder kobaltabgebenden Mittel gemäss den Verfahrensbedingungen des oben angegebenen erfindungsgemässen Verfahrens bei gegebenenfalls anschliessender Acylierung, wie oben angegeben, mit Cyanurchlorid und der Verbindung H-X oder der Verbindung der Formel (4) um. Man kann auch so vorgehen, dass man eine 1:1-Chrom- oder 1:1-Kobaltkomplex-Monoazoverbindung der allgemeinen Formel (5a) oder (5b)

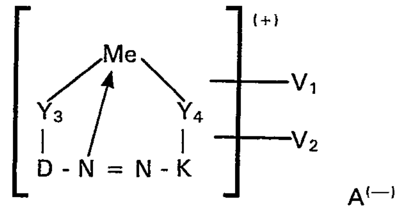

(5a)

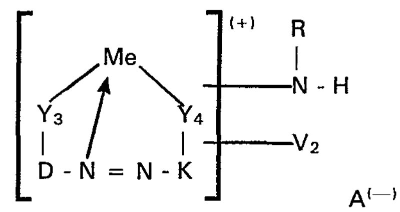

(5b)

in denen D, K, $V_1$, $V_2$ und R die obengenannten Bedeutungen haben, $Me^{(+)}$ für ein Chromkation oder ein Kobaltkation steht und $A^{(-)}$ ein farbloses Anion, wie beispielsweise das Chlorid oder Sulfatanion, bedeutet sowie $Y_3$ ein zur Metallkomplexbildung befähigter bivalenter Rest, wie beispielsweise eine Carbonyloxygruppe und vorzugsweise ein Sauerstoffatom, ist, der in ortho-Stellung zur Azogruppe an D gebunden ist, sowie $Y_4$ einen zur Metallkomplexbildung befähigten bivalenten Rest bedeutet, wie beispielsweise eine Gruppe der Formel -NH- oder ein Sauerstoffatom, der in ortho-Stellung zur Azogruppe an K gebunden ist, wobei die Gruppe $V_1$ an D oder K, die Gruppe der Formel -N(R)H an D oder K und die Gruppe $V_2$ jeweils an D oder K gebunden ist, mit einer metallfreien Azoverbindung der Formel (1) oder (3) deren Formelreste D, K, $V_1$, $V_2$ und R sowie H-$Y_3$ und H-$Y_4$ mit den Formelresten D, K, $V_1$, $V_2$ und R sowie $Y_1$ und $Y_2$ identisch sind, in äquivalenter Menge analog bekannten Verfahrensweisen, beispielsweise in wässrigem oder wässrig-organischem Medium, beispielsweise unter Verwendung von Äthylenglykoldi- oder -monomethyläther, Äthylenglykoldi- oder -monoäthyläther, Äthylenglykol oder Polyglykolen, bei einer Temperatur zwischen 40 und

105°C, vorzugsweise zwischen 80 und 100°C, und bei einem pH-Wert zwischen 4,5 und 9,0, vorzugsweise zwischen 6,0 und 8,0, bei gegebenenfalls anschliessender, oben angegebener Acylierung unter Verwendung einer Verbindung, die eine zu $V_1$ identische Gruppe enthält, umsetzt.

Die asymmetrischen erfindungsgemässen 1:2-Metallkomplex-Azoverbindungen lassen sich unter den oben angegebenen Verfahrensbedingungen in reiner Form oder nahezu reiner Form durch Umsetzung einer 1:1-Chrom- oder 1:1-Kobaltkomplex-Monoazoverbindung der oben definierten allgemeinen Formel (5a) oder (5b) mit einer metallfreien Verbindung der allgemeinen Formel (1) oder (3), wobei die Monoazokomponenten dieser beiden Ausgangsverbindungen voneinander verschieden sind, mit gegebenenfalls nachträglichen, oben angegebenen Acylierungsreaktionen herstellen; diese Umsetzung einer 1:1-Metallkomplexverbindung mit einer anders aufgebauten metallfreien Azoverbindung zur erfindungsgemässen asymmetrischen 1:2-Metallkomplex-Monoazoverbindung kann analog bekannten Verfahrensweisen, bspw. in wässrigem oder wässrig-organischem Medium, beispielsweise unter Verwendung von Äthylenglykoldi- oder -monomethyl- oder -äthyl-äther, Äthylenglykol oder Polyglykolen, bei einer Temperatur zwischen 40 und 105°C, vorzugsweise zwischen 80 und 100°C, und bei einem pH-Wert zwischen 4,5 und 9,0, vorzugsweise zwischen 6,0 und 8,0, durchgeführt werden.

Zur Herstellung der erfindungsgemässen 1:2-Chrom- oder 1:2-Kobaltmischkomplexe geht man gemäss den oben angegebenen erfindungsgemässen Verfahrensbedingungen von je einer einmolaren Menge an jeweils 2 unterschiedlichen metallfreien Monoazoverbindungen der allgemeinen Formel (1) aus, die man mit den chrom- oder kobaltabgebenden Mitteln in wässrigem Medium bei einer Temperatur zwischen 40 und 105°C, vorzugsweise zwischen 80 und 100°C, und bei einem pH-Wert zwischen 4,5 und 9,0, vorzugsweise zwischen 6,0 und 8,0, umsetzt. Chrom- oder kobaltabgebende Mittel sind beispielsweise hierfür üblicherweise verwendete Chrom(III)- und Kobalt(II)-salze, wie insbesondere Chrom(III)-chlorid, -sulfat, -acetat, -fluorid und -salicylat sowie Kobalt(II)-chlorid, -sulfat, -acetat und -hydroxycarbonat. Es entstehen hierbei erfindungsgemäss Gemische aus drei erfindungsgemässen 1:2-Metallkomplexverbindungen, nämlich einer symmetrischen 1:2-Metallkomplexmonoazoverbindung der einen eingesetzten metallfreien Monoazoverbindung, einer symmetrischen 1:2-Metallkomplex-Monoazoverbindung der anderen metallfreien Monoazoverbindung und der asymmetrischen 1:2-Metallkomplex-Monoazoverbindung aus den beiden unterschiedlich aufgebauten metallfreien Monoazoverbindungen.

Die als Ausgangsverbindungen, vorzugsweise für die asymmetrischen 1:2-Metallkomplex-Azoverbindungen, dienenden 1:1-Chromkomplexmonoazoverbindungen entsprechend den allgemeinen Formeln (5a) oder (5b) lassen sich in an und für sich bekannter Weise durch Umsetzung der metallfreien Monoazoverbindungen der allgemeinen Formel (1) bzw. (3) in wässriger, wässrig-organischer oder organischer Phase, beispielsweise unter Verwendung von aliphatischen Alkoholen, Polyalkoholen oder Glykoläthern als organischem Medium, bei einer Temperatur zwischen 80 und 100°C unter Atmosphärendruck oder Überdruck in einer geschlossenen Apparatur mit chromabgebenden Mitteln, wie Chrom(III)-salzen, vorzugsweise Chrom(III)-chlorid oder Chrom(III)-sulfat, herstellen. Die als Ausgangsverbindungen dienenden 1:1-Kobaltkomplex-Monoazoverbindungen entsprechend den allgemeinen Formeln (5a) und (5b), die vorzugsweise zur Herstellung der erfindungsgemässen asymmetrischen 1:2-Kobaltkomplex-Monoazoverbindung eingesetzt werden, lassen sich ebenso in an und für sich bekannter Weise durch Umsetzung der metallfreien Monoazoverbindungen der Formel (1) bzw. (3) in wässriger oder wässrig-organischer Phase mittels kobaltabgebenden Mitteln, wie Kobalt(II)-salzen, beispielsweise Kobalt(II)-chlorid oder Kobalt(II)-sulfat, in Gegenwart von Ammoniak, Pyridin, Alkylendiaminen von 2 bis 4 C-Atomen oder Dialkylentriaminen mit Alkylresten von jeweils 2 bis 4 C-Atomen bei einer Temperatur zwischen 0 und 20°C herstellen.

Die erfindungsgemässen 1:2-Metallkomplexverbindungen und 1:2-Metallmischkomplexe, in welchen der Formelrest Z für die β-Sulfatoäthyl-Gruppe steht, können auch erfindungsgemäss so hergestellt werden, dass man von den entsprechenden 1:2-Metallkomplexverbindungen bzw. 1:2-Metallmischkomplexen von Monoazoverbindungen entsprechend der allgemeinen Formel (1) oder (3), in denen hier der Formelrest Z für die β-Hydroxyäthyl-Gruppe steht, ausgeht, und diese bei einer Temperatur zwischen 0 und 20°C in 95 - 100%iger Schwefelsäure oder vorzugsweise mittels Amidosulfonsäure in Pyridin oder Picolin bei einer Temperatur zwischen 50 und 100°C verestert (sulfatisiert). Die β-Sulfatoäthylsulfonyl-Verbindungen können gegebenenfalls in die β-Thiosulfatoäthylsulfonyl-Verbindungen mittels Natriumthiosulfat unter schwach sauren Bedingungen analog bekannten Verfahrensweisen überführt werden. Nach der Veresterung bzw. Überführung in die Thiosulfatoderivate werden die Verbindungen entsprechend der allgemeinen Formel (3) in der oben angegebenen erfindungsgemässen Weise zu den erfindungsgemässen Metallkomplexverbindungen acyliert.

Wie eben zur Herstellung der erfindungsgemässen Verbindungen beschrieben, lassen sich auch die 1:1-Metallkomplexverbindungen der allgemeinen Formeln (5a) und (5b), in denen hier der Formelrest Z für die β-Hydroxyäthyl-Gruppe steht, in deren Sulfato- und Thiosulfatoderivate überführen und gegebenenfalls die Verbindungen (5b) anschliessend durch die anfangs für die erfindungsgemässen Verbindungen angegebenen Acylierungsreaktionen zu den Metallkomplex-Monoazoverbindungen (5a) umsetzen.

Aromatische Amine, die als Diazokomponenten zur Herstellung der Monoazoverbindungen der allgemeinen Formel (1) oder (3) und somit zur Herstellung der erfindungsgemässen 1:2-Metallkomplexverbindungen und 1:2-Metallmischkomplexe dienen können, sind beispielsweise 2-Aminophenol-4-β-hydr-

oxyäthylsulfon, 2-Aminophenol-5-β-hydroxyäthylsulfon, 2-Amino-4-chlor-phenol-5-β-hydroxyäthylsulfon, 2-Amino-phenol-4-β-sulfatoäthylsulfon-6-sulfonsäure, 2-Aminophenol-4-β-sulfatoäthylsulfon, 2-Aminophenol-4-β-thiosulfatoäthylsulfon, 2-Aminophenol-4-vinylsulfon, 2-Aminophenol-5-β-chloräthylsulfon, 2-Amino-4-methyl-phenol-5-β-hydroxyäthylsulfon, 2-Amino-4-methoxy-phenol-5-β-hydroxyäthylsulfon, 2-Aminophenol-4-β-vinylsulfon-6-sulfonsäure, 2-Amino-4-(β-sulfatoäthylsulfonyl-methyl)-phenol, 2-Amino-4-(N-methyl-N-β-sulfatoäthylsulfonyl)-amino-phenol, 2-Amino-4-chlor-5-(N-methyl-N-β-sulfatoäthylsulfonyl)-amino-phenol, 2-Amino-4-β-sulfatoäthylsulfonyl-benzoesäure, 2-Amino-4-β-thiosulfatoäthylsulfonyl-benzoesäure, 2-Amino-4-vinylsulfonyl-benzoesäure, 2-Amino-5-β-sulfatoäthylsulfonyl-benzoesäure, 2-Amino-5-β-thiosulfatoäthylsulfonyl-benzoesäure, weiterhin aromatische Amine mit einer Acylaminogruppe, die nach Diazotierung und Kupplung und Hydrolyse der Acylaminogruppe zur Umsetzung mit den Chlortriazinen dienen, beispielsweise 4-Acetylamino-2-aminophenol, 4-Acetylamino-2-aminophenol-6-sulfonsäure, 5-Acetylamino-2-aminophenol, 2-Amino-4-acetylamino-benzoesäure, 2-Amino-5-acetylamino-benzoesäure.

Als Kupplungskomponenten für die Herstellung der Monoazoverbindungen der allgemeinen Formel (1) oder (3) und somit zur Herstellung der erfindungsgemässen 1:2-Metallkomplexverbindungen und 1:2-Mischkomplexe können beispielsweise die für faserreaktive Metallkomplexazofarbstoffe üblicherweise eingesetzten Kupplungskomponenten aus der Naphtholreihe, der Aminonaphtholreihe (beispielsweise in Form der Acylaminonaphthol-Verbindung, wobei der Acylaminorest beispielsweise ein niederer Alkanoylamino-, insbesondere Acetylaminorest sein kann, der nach der Kupplungsreaktion zur Aminogruppe hydrolysiert wird, die sodann erfindungsgemäss mit einer Chlortriazinylverbindung umgesetzt wird, oder eine Gruppe der oben angegebenen und definierten Formel (2a) ist), der 1-Aryl-pyrazolon-Reihe und deren 1-(Aminoaryl)-pyrazolon-Derivate (beispielsweise in Form deren Acylaminoverbindungen, wobei der Acylaminorest beispielsweise ein niederer Alkanoylamino-, insbesondere Acetylaminorest sein kann, der nach der Kupplungsreaktion zur Aminogruppe hydrolysiert wird, die sodann erfindungsgemäss mit einer Chlortriazinylverbindung umgesetzt wird, oder eine Gruppe der oben angegebenen und definierten Formel (2a) ist), der Acetoacetyl-arylid-Reihe, wie der Acetoacetyl-anilid- und Acetoacetyl-naphthylamid-Reihe, und deren Aminoarylidderivate (beispielsweise in Form deren Acylaminoverbindungen, wobei der Acylaminorest beispielsweise ein niederer Alkanoylamino-, insbesondere Acetylaminorest sein kann, der nach der Kupplungsreaktion zur Aminogruppe hydrolysiert wird, die sodann erfindungsgemäss mit einer Chlortriazinylverbindung umgesetzt wird, oder eine Gruppe der oben angegebenen und definierten Formel (2a) ist) sowie der Aminonaphthalin-Reihe und der Anilin-Reihe dienen (wobei die kuppelbaren Aminonaphthalin- und Anilin-Verbindungen noch eine Acylaminogruppe gebunden enthalten können und diese Acylaminogruppe, wie zuvor für die anderen Kupplungskomponenten angegeben, beispielsweise eine zur Hydrolyse bestimmte niedere Alkanoylaminogruppe ist oder eine Gruppe der oben definierten allgemeinen Formel (2a) darstellt). Solche Kupplungskomponenten sind beispielsweise 1-Naphthol-4-β-hydroxyäthylsulfon, 1-Naphthol-5-β-hydroxyäthylsulfon, 1-Naphthol-6-β-hydroxyäthylsulfon, 2-Naphthol-5-β-hydroxyäthylsulfon, 2-Naphthol-6-β-hydroxyäthylsulfon und 2-Naphthol-7-β-hydroxyäthylsulfon sowie deren β-Sulfato-, β-Thiosulfato-, β-Chlor- und β-Acetoxyäthylsulfon- und Vinylsulfon-Derivate, 1-N-Acylamino-8-naphthol-3,6-disulfonsäure, 1-N-Acylamino-8-naphthol-4,6-disulfonsäure, 2-N-Acylamino-8-naphthol-5-sulfonsäure, 2-N-Acylamino-8-naphthol-6-sulfonsäure, 2-N-Acylamino-5-naphthol-7-sulfonsäure, 2-N-Methyl-N-acylamino-8-naphthol-6-sulfonsäure, 2-N-Methyl-N-acylamino-5-naphthol-7-sulfonsäure, 3-N-Acylamino-2-naphthol-7-sulfonsäure und 3-N-Acylamino-2-naphthol-7-sulfonsäure, wobei der Acylaminorest in diesen Verbindungen, wie oben bereits erwähnt, zur nachträglichen Hydrolyse dient und hierfür vorzugsweise der Acetylaminorest ist oder einen Rest der obigen Formel (2a) darstellt, weiterhin beispielsweise 1-(3'-β-Sulfatoäthylsulfonyl)-phenyl-3-methyl-pyrazol-5-on, 1-(3'-β-Thiosulfatoäthylsulfonyl)-phenyl-3-methyl-pyrazol-5-on, 1-(4'-β-Sulfatoäthylsulfonyl)-phenyl-3-methyl-pyrazol-5-on, 1-(4'-β-Thiosulfatoäthylsulfonyl)-phenyl-3-methyl-pyrazol-5-on, 1-(3'-β-Sulfatoäthylsulfonyl)-phenyl-3-carboxy-pyrazol-5-on, 1-(4'-β-Thiosulfatoäthylsulfonyl)-phenyl-3-carbomethoxy-pyrazol-5-on, 1-(2'-Methoxy-5'-β-sulfatoäthylsulfonyl)-phenyl-3-carboxy-pyrazol-5-on, 1-(4'-N-Methyl-N-β-sulfatoäthylsulfonyl-amino)phenyl-3-methyl-pyrazol-5-on, 1-(4'-N-Methyl-N-vinylsulfonyl-amino)-phenyl-3-carbomethoxy-pyrazol-5-on, weiterhin 1-(N-Acylamino)-phenyl- oder -naphthyl-pyrazolonverbindungen, deren Acylaminorest jeweils, wie oben bereits erwähnt, nach der Kupplungsreaktion zur hydrolytischen Überführung in die Aminogruppe dient oder ein Rest der oben definierten allgemeinen Formel (2a) ist, wie beispielsweise 1-(2'-Sulfo-4'-N-acetylamino)-phenyl-3-methyl-pyrazol-5-on, 1-(2'-Sulfo-5'-N-acetylamino)-phenyl-3-methyl-pyrazol-5-on, 1-(2'-Sulfo-4'-N-acetylamino)-phenyl-3-carbomethoxy-pyrazol-5-on, 1-(2',5'-Disulfo-4'-acetylamino)-phenyl-3-carbomethoxy-pyrazol-5-on, 1-(2'-Carboxy-4'-acetylamino)-phenyl-3-carbomethoxy-pyrazol-5-on, weiterhin beispielsweise 1-N-Acetoacetylamino-2-methoxy-5-β-sulfatoäthylsulfonyl-benzol, 1-N-Acetoacetylamino-2-methoxy-5-methyl-4-β-thiosulfatoäthylsulfonyl-benzol, 1-N-Acetoacetylamino-3-(N-methyl-N-vinylsulfonyl-amino)-benzol und 1-N-Acetoacetylamino-2-methoxy-5-(N-methyl-N-β-thiosulfatoäthylsulfonyl-amino)-benzol, 1-N-Acetoacetylamino-4-amino-benzol-3-sulfonsäure, 1-N-Acetoacetylamino-3-aminobenzol-4-sulfonsäure, 1-N-Acetoacetylamino-4-aminobenzol-2,5-disulfonsäure und 1-N-Acetoacetylamino-3-aminobenzol-2,4-disulfonsäure.

Von den erfindungsgemässen symmetrischen und asymmetrischen 1:2-Chrom- und 1:2-Kobaltkomplex-Monoazoverbindungen und deren Mischkomplexe können diejenigen hervorgehoben werden, die den allgemeinen Formeln (6), (7) oder (8)

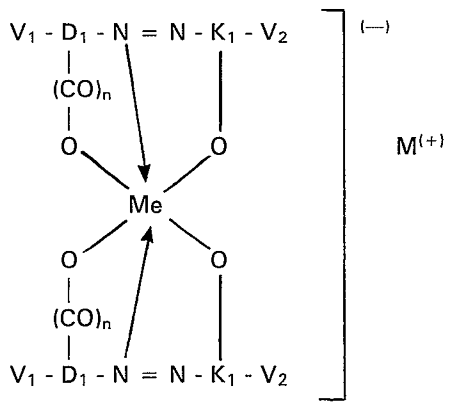

(6)

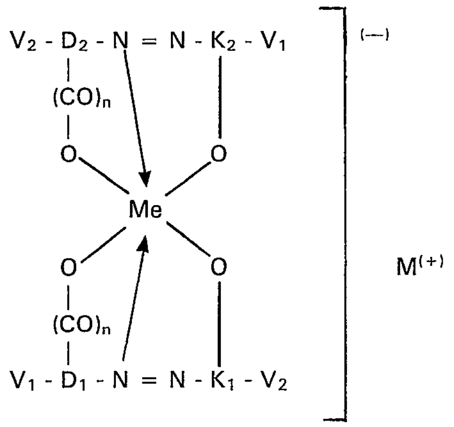

(7)

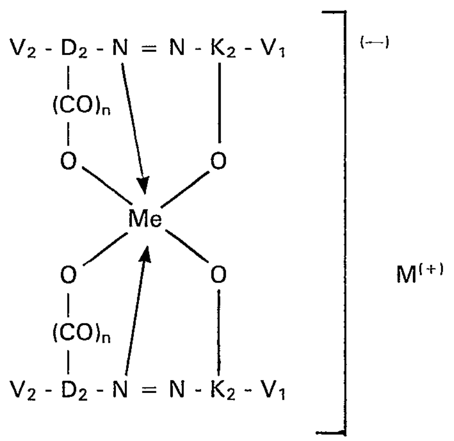

(8)

entsprechen. In diesen Formeln bedeuten:

M ist ein Wasserstoffatom oder das Äquivalent eines ein-, zwei- oder dreiwertigen Metalls, vorzugsweise eines Alkalimetalls oder Erdalkalimetalls, wie des Calciums und insbesondere Natrium oder Kalium;

Me ist das Chrom- oder Kobaltatom;

n ist die Zahl Null oder 1, vorzugsweise Null;

$V_1$ hat die Bedeutung der oben definierten Gruppe der allgemeinen Formel (2a), wobei R bevorzugt ein Wasserstoffatom ist und X bevorzugt für niedere Alkoxygruppe und insbesondere bevorzugt für eine Aminogruppe der oben definierten allgemeinen Formel (2e) steht, in welcher bevorzugt $R^3$ ein Wasserstoffatom oder eine niedere Alkylgruppe, wie insbesondere Methyl- und Äthylgruppe, bedeutet, die durch eine Carboxy- oder Sulfogruppe substituiert sein kann und $R^4$ bevorzugt ein Wasserstoffatom oder eine niedere Alkylgruppe, wie insbesondere die Methyl- oder Äthylgruppe, bedeutet, die durch eine Carbonsäure- oder Sulfonsäuregruppe oder einen gegebenenfalls durch Sulfo substituierten Phenylrest substituiert sein kann, oder bevorzugt einen Phenylrest bedeutet, der durch 1 oder 2 Substituenten aus der Gruppe Sulfo, Carboxy, Methyl, Äthyl, Methoxy, Äthoxy und Chlor, bevorzugt durch 1 oder 2 Sulfogruppen substituiert sein kann, wobei die beiden Formelglieder $R^3$ und $R^4$ zueinander gleiche oder voneinander verschiedene Bedeutungen besitzen können;

$V_2$ hat die Bedeutung der oben definierten Gruppe der allgemeinen Formel (2b), wobei W bevorzugt eine direkte Bindung ist und Z bevorzugt die Vinyl- oder β-Thiosulfatoäthyl-Gruppe oder insbesondere bevorzugt die β-Sulfatoäthyl-Gruppe ist;

$D_1$ ist der Benzolrest, in welchem die Carbonyloxy- bzw. Oxygruppe in ortho-Stellung zur Azogruppe gebunden ist und der neben diesen beiden Gruppen und der Gruppe $V_1$ bevorzugt keinen weiteren Substituenten enthält oder noch durch eine Methyl-, Äthyl-, Methoxy-, Äthoxy-, Carboxy-, Sulfamoyl- oder Carbamoylgruppe oder durch ein Chlor- oder Bromatom oder bevorzugt durch eine Sulfogruppe substituiert ist, oder $D_1$ ist ein Naphthalinrest, in welchem die Carbonyloxy- bzw. Oxygruppe in ortho-Stellung zur Azogruppe gebunden ist und neben diesen beiden Gruppen und der Gruppe $V_1$ noch eine oder zwei Sulfogruppe(n) als zusätzliche(n) Substituenten enthalten kann;

$D_2$ ist der Benzolrest, in welchem die Carbonyloxy- bzw. Oxygruppe in ortho-Stellung zur Azogruppe gebunden ist und der neben diesen beiden Gruppen und der Gruppe $V_2$ keinen weiteren Substituenten enthält oder noch durch eine Methyl-, Äthyl-, Methoxy-, Äthoxy-, Nitro-, Carboxy-, Sulfamoyl- oder Carbamoylgruppe oder durch ein Chlor- oder Bromatom oder bevorzugt durch eine Sulfogruppe substituiert ist, oder $D_2$ ist ein Naphthalinrest, in welchem die Carbonyloxy- bzw. Oxygruppe in ortho-Stellung zur Azogruppe gebunden ist und der neben diesen beiden Gruppen und der Gruppe $V_2$ noch eine Sulfogruppe enthalten kann;

$K_1$ ist ein Naphthalinrest, in welchem die Oxygruppe in ortho-Stellung zur Azogruppe gebunden ist und der neben diesen beiden Gruppen und der Gruppe $V_2$ noch eine Sulfogruppe als weiteren Substituenten enthalten kann, oder

$K_1$ ist der Rest des 1-Phenyl- oder 1-Naphthyl-pyrazol-4,5-ylens, der in 3-Stellung durch Carbamoyl, niederes Carbalkoxy, wie Carbomethoxy und Carbäthoxy, oder Phenyl oder bevorzugt durch Methyl oder Carboxy substituiert ist und dessen in 1-Stellung befindlicher Phenylrest neben der Gruppe $V_2$ keinen weiteren Substituenten enthält oder noch durch 1 oder 2 Substituenten aus der Gruppe Methyl, Äthyl, Methoxy, Äthoxy und Chlor und/oder durch 1 Substituenten aus der Gruppe Brom, Carboxy und Sulfo oder durch 1 Substituenten aus der Gruppe Methyl, Äthyl, Methoxy, Äthoxy und Chlor und

durch 1 Sulfogruppe substituiert ist, und dessen Naphthylrest neben der Gruppe $V_2$ keinen weiteren Substituenten enthält oder noch durch eine oder zwei Sulfogruppen substituiert ist, oder

$K_1$ steht als Rest einer Kupplungskomponente für den Rest des Acetoacetylaminobenzols oder Acetoacetylaminonaphthalins, wobei der Benzolrest neben der Gruppe $V_2$ keinen weiteren Substituenten enthält oder noch durch einen oder zwei Substituenten aus der Gruppe Methyl, Äthyl, Methoxy, Äthoxy und Chlor und/oder durch einen Substituenten aus der Gruppe Brom, Carboxy und Sulfo oder durch einen Substituenten aus der Gruppe Methyl, Äthyl, Methoxy, Äthoxy und Chlor und durch eine Sulfogruppe substituiert ist und der Naphthylrest neben der Gruppe $V_2$ keinen weiteren Substituenten enthält oder noch durch eine oder zwei Sulfogruppen substituiert ist;

$K_2$ ist ein Naphthalinrest, in welchem die Oxygruppe in ortho-Stellung zur Azogruppe gebunden ist und der neben der Gruppe $V_1$ noch durch eine oder zwei Sulfogruppen substituiert ist, oder

$K_2$ ist der 1-Phenyl- oder 1-Naphthyl-pyrazol-4,5-ylen-Rest, der in 3-Stellung durch Carbamoyl, niederes Carbalkoxy, wie Carbomethoxy und Carbäthoxy, oder Phenyl oder bevorzugt durch Methyl oder Carboxy substituiert ist und dessen in 1-Stellung befindlicher Phenylrest neben der Gruppe $V_1$ keinen weiteren Substituenten gebunden enthält oder neben $V_1$ noch durch 1 oder 2 Substituenten aus der Gruppe Methyl, Äthyl, Methoxy und Äthoxy und/oder durch einen Substituenten aus der Gruppe Chlor, Carboxy und Sulfo oder durch einen Substituenten aus der Gruppe Methyl, Äthyl, Methoxy, Äthoxy und Chlor und durch eine Sulfogruppe substituiert ist, und dessen in 1-Stellung befindlicher Naphthylrest neben der Gruppe $V_1$ keinen weiteren Substituenten gebunden enthält oder neben $V_1$ noch durch eine oder zwei Sulfogruppen substituiert ist, oder

$K_2$ steht als Rest einer Kupplungskomponente für den Rest des Acetoacetylaminobenzols oder Acetoacetylaminonaphthalins, wobei der Benzolrest neben der Gruppe $V_1$ keinen weiteren Substituenten gebunden enthält oder neben $V_1$ noch durch einen oder zwei Substituenten aus der Gruppe Methyl, Äthyl, Methoxy, Äthoxy und Chlor und/oder durch eine Carboxy- oder eine Sulfogruppe oder durch einen Substituenten aus der Gruppe Methyl, Äthyl, Methoxy, Äthoxy und Chlor und durch eine Sulfogruppe substituiert ist, und dessen in 1-Stellung befindlicher Naphthylrest neben der Gruppe $V_1$ keinen weiteren Substituenten gebunden enthält oder neben $V_1$ bevorzugt noch durch eine oder zwei Sulfogruppen substituiert ist.

Die Metallkomplexverbindungen der allgemeinen Formel (7) sind asymmetrische erfindungsgemässe 1:2-Metallkomplex-Monoazoverbindungen. Die Metallkomplexverbindungen der allgemeinen Formel (6) und der allgemeinen Formel (8) sind symmetrische erfindungsgemässe 1:2-Metallkomplex-Monoazoverbindungen, falls die jeweils zweifach vorkommenden Formelreste $V_1$, $V_2$, n, $D_1$ und $K_1$ bzw. $D_2$ und $K_2$ in derselben Metallkomplexverbindung identische Bedeutung besitzen; sie stellen jedoch asymmetrische erfindungsgemässe 1:2-Metallkomplexmonoazoverbindungen dar, falls eines oder mehrere dieser Formelgliederpaare voneinander verschieden sind.

Von den Verbindungen der allgemeinen Formel (8) sollen diejenigen hervorgehoben werden, bei denen n für die Zahl Null steht, $V_1$ die obengenannte Gruppe der Formel (2a) bedeutet, in welcher R ein Wasserstoffatom ist und X die Aminogruppe oder eine Phenylaminogruppe oder eine N-Methyl- oder N-Äthyl-phenylamino-Gruppe oder eine durch eine oder zwei Sulfogruppen substituierte Phenylaminogruppe ist, $V_2$ die anfangs genannte und definierte Gruppe der Formel (2b) bedeutet, $D_2$ der Benzolrest ist, in welchem die Oxygruppe in ortho-Stellung zur Azogruppe gebunden ist und der neben dieser Oxygruppe und der Gruppe $V_2$ keinen weiteren Substituenten enthält oder noch durch eine Sulfogruppe als zusätzlichen Substituenten substituiert ist, $K_2$ ein Naphthalinrest ist, in welchem die Oxygruppe in ortho-Stellung zur Azogruppe gebunden ist und der neben der Gruppe $V_1$ noch durch eine oder zwei Sulfogruppen substituiert ist, und $M^{(+)}$ und Me die obengenannten Bedeutungen haben.

Insbesondere hervorzuheben sind sowohl die symmetrischen als auch die asymmetrischen erfindungsgemässen 1:2-Chrom- und 1:2-Kobaltkomplexverbindungen aus den metallfreien Monoazoverbindungen der allgemeinen Formeln (9), (10), (11), (12), (13) oder (14)

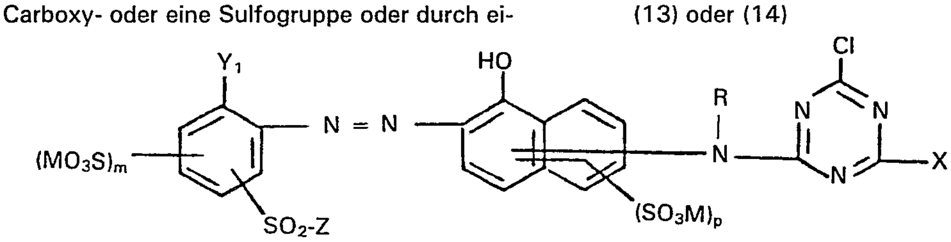

(9)

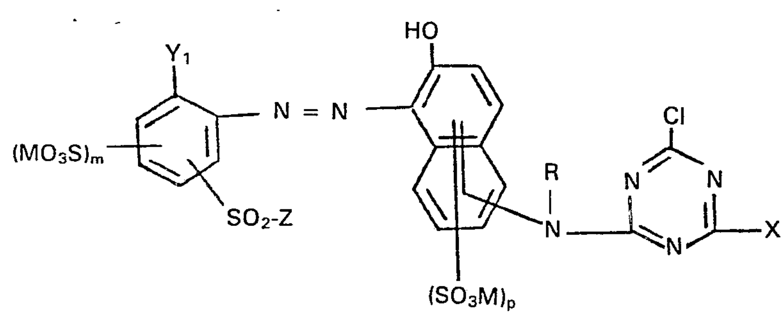

(10)

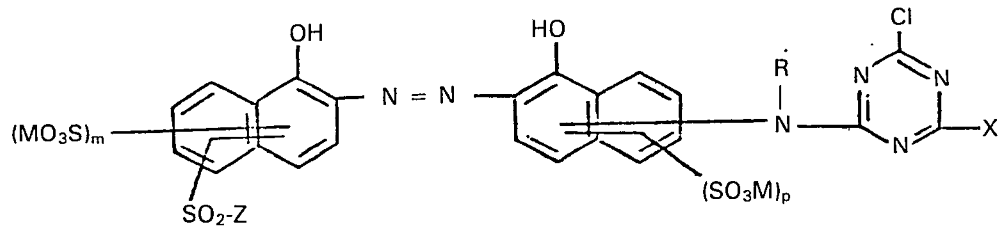

(11)

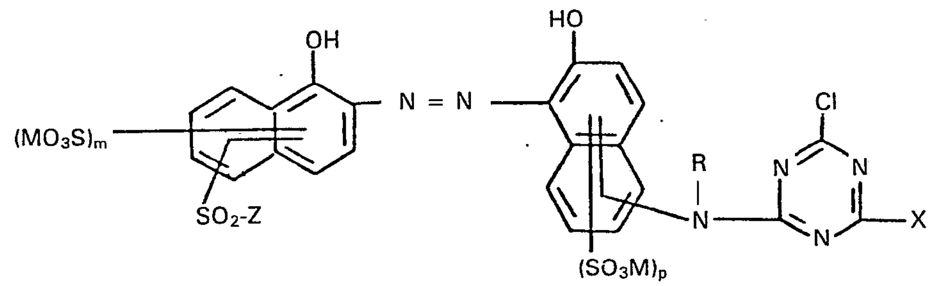

(12)

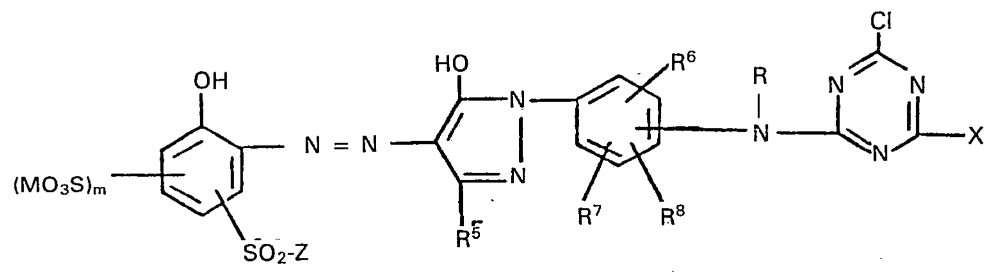

(13)

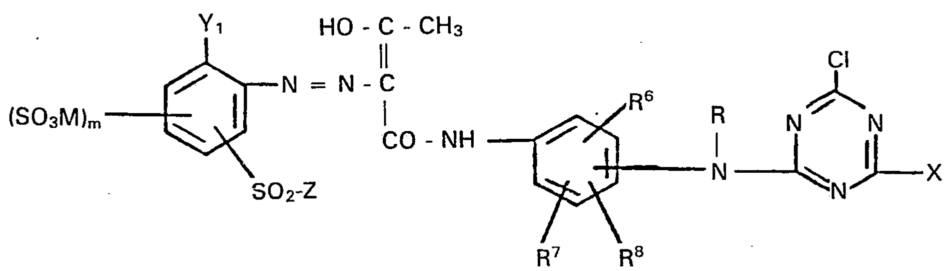

(14)

In diesen Formeln bedeuten:

$Y_1$ ist die Carboxygruppe oder bevorzugt die Hydroxygruppe;

M, R, X und Z haben die obengenannten, insbesondere bevorzugten Bedeutungen;

m steht für die Zahl Null oder 1 (wobei im Falle m = 0 diese Gruppe für ein Wasserstoffatom steht);

p steht für die Zahl 1 oder 2;

$R^5$ ist eine Carbamoyl-, niedere Carbalkoxy-, wie Carbomethoxy- und Carbäthoxy-Gruppe, bevorzugt eine Methyl- oder Carbonsäuregruppe;

$R^6$ ist ein Wasserstoffatom, eine niedere Alkylgruppe, eine Sulfogruppe oder ein Chloratom,

$R^7$ ist ein Wasserstoffatom, eine niedere Alkylgruppe, eine Sulfogruppe oder ein Chloratom und

$R^8$ ist ein Wasserstoffatom oder eine niedere Alkylgruppe, wobei $R^6$, $R^7$ und $R^8$ gleich oder verschieden voneinander sein können und die niedere Alkylgruppe bevorzugt eine Äthylgruppe und insbesondere eine Methylgruppe ist.

Weiterhin können von den erfindungsgemässen Metallkomplexverbindungen hervorgehoben werden sowohl die symmetrischen als auch die asymmetrischen 1:2-Chromkomplex- und 1:2-Kobaltkomplex-Monoazoverbindungen aus den metallfreien Monoazoverbindungen der Formeln (15), (16), (17), (18), (19) oder (20)

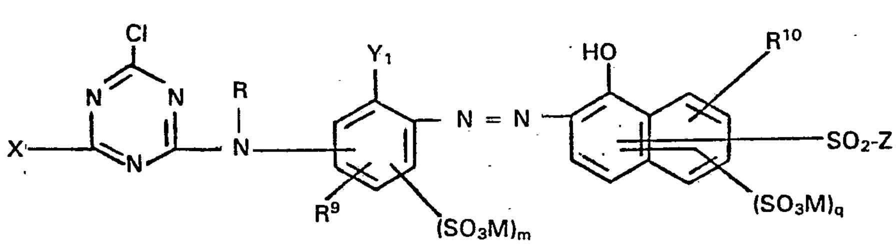

(15)

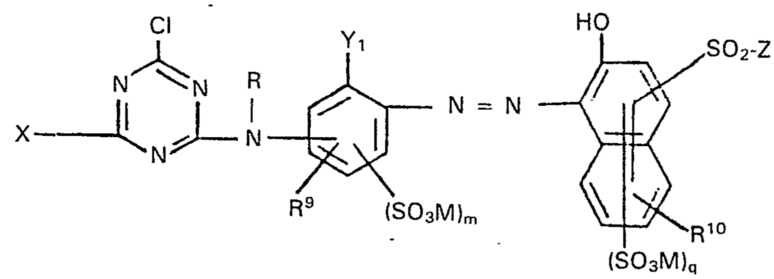

(16)

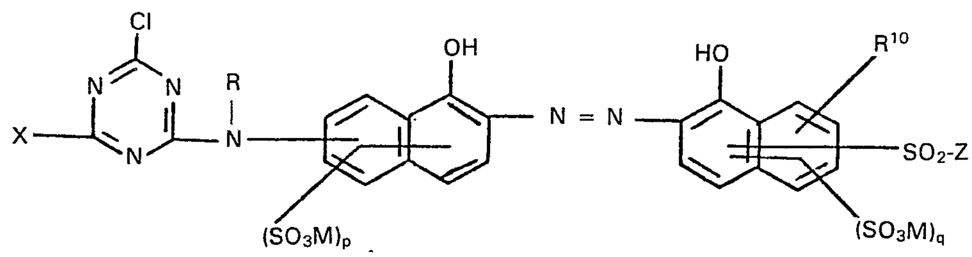

(17)

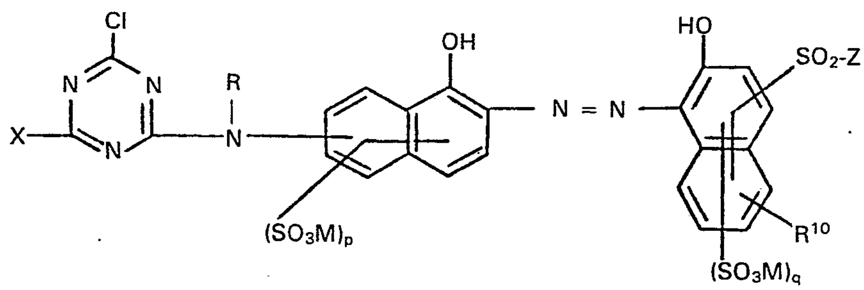

(18)

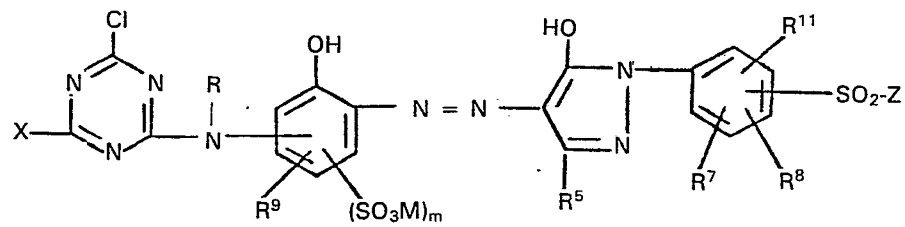

(19)

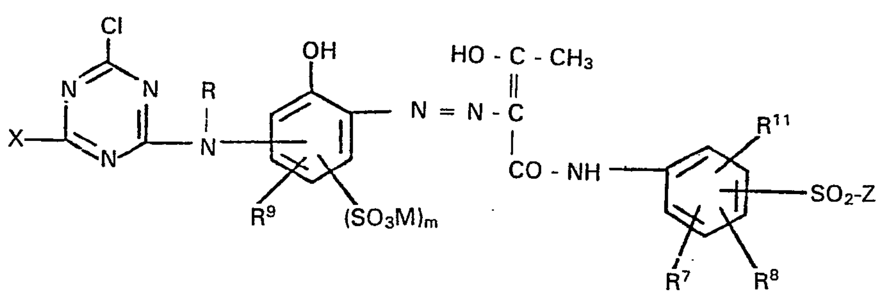

(20)

In diesen Formeln haben M, R, X, Z, $R^5$, $R^6$, $R^7$, $R^8$, $Y_1$, m und p die obengenannten, insbesondere bevorzugten Bedeutungen, $R^9$ ist ein Wasserstoffatom, eine Nitrogruppe oder ein Halogenatom, wie ein Bromatom und bevorzugt ein Chloratom, $R^{10}$ ist ein Wasserstoffatom, die Acetylamino- oder Benzoylaminogruppe, $R^{11}$ ist ein Wasserstoffatom, die Sulfogruppe, die Acetylamino- oder Benzoylaminogruppe, eine niedere Alkylgruppe, wie Äthylgruppe und insbesondere Methylgruppe, oder ein Chloratom, wobei $R^{11}$, $R^7$ und $R^8$ zueinander gleiche oder voneinander verschiedene Bedeutungen besitzen können, und q steht für die Zahl 1.

Von den erfindungsgemässen 1:2-Metallkomplexverbindungen sind weiterhin hervorzuheben die asymmetrischen 1:2-Chrom- und 1:2-Kobaltkomplex-Monoazoverbindungen aus zwei metallfreien Monoazoverbindungen der allgemeinen Formeln (9) bis (14) oder aus zwei metallfreien Monoazoverbindungen der Formeln (15) bis (20) oder aus einer metallfreien Monoazoverbindung der allgemeinen Formeln (9) bis (14) und einer Monoazoverbindung der allgemeinen Formeln (15) bis (20).

Die Abscheidung und Isolierung der erfindungsgemäss hergestellten 1:2-Metallkomplexverbindungen und 1:2-Metallmischkomplexe aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemässen 1:2-Metallkomplexverbindungen und 1:2-Metallmischkomplexe haben faserreaktive Eigenschaften und besitzen sehr gute Farbstoffeigenschaften. Sie können deshalb zum Färben und Bedrucken von hydroxygruppenhaltigen und/oder carbonamidgruppenhaltigen Materialien verwendet werden. Auch können die bei der Synthese der erfindungsgemässen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemässen Verbindungen zum Färben und Bedrucken von hydroxy- und/oder carbonamidgruppenhaltigen Materialien, bevorzugt in Form von Fasermaterialien, insbesondere in Form von Textilfasern, wie Garnen, Wickelkörpern und Geweben, bzw. Verfahren zu deren Anwendung auf diesen Substraten. Hierbei kann man analog bekannten Verfahrensweisen vorgehen, indem man die erfindungsgemässen 1:2-Metallkomplexverbindungen und 1:2-Metallmischkomplexe in gelöster Form auf das Substrat aufbringt und sie gegebenenfalls durch Hitzeeinwirkung und/oder gegebenenfalls durch Einwirkung eines alkalisch wirkenden Mittels darauf fixiert.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4, sowie Leder.

Die erfindungsgemässen Verbindungen lassen sich auf den genannten Substraten, insbesondere auf den genannten Fasermaterialien, nach den für wasserlösliche Metallkomplexfarbstoffe, insbesondere nach den für wasserlösliche faserreaktive Farbstoffe bekannten Anwendungstechniken applizieren und fixieren. Solche Färbe- und Fixierweisen sind in der Literatur zahlreich beschrieben.

Nach dem Klotzverfahren oder Ausziehverfahren aus kurzen Flottenverhältnissen werden auf Cellulosefasern gute Farbausbeuten und ein guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Bevorzugte Verwendung finden die erfindungsgemässen Verbindungen nach den üblichen Druckverfahren für Cellulosefasern, die einphasig, beispielsweise in Anwesenheit von Natriumbicarbonat oder einem anderen säurebindenden Mittel in der Druckpaste und durch anschliessendes Dämpfen der bedruckten Ware bei 100 bis 103°C, oder zweiphasig, beispielsweise durch Bedrucken mit neutraler oder schwach saurer Druckfarbe und anschliessendem Fixieren des Farbstoffes entweder durch Hindurchführen der bedruckten Ware durch eine heisses elektrolythaltiges alkalisches Bad oder durch Überklotzen mit einer alkalischen, elektrolythaltigen Klotzflotte und anschliessendem Verweilen dieses behandelten Materials oder Dämpfen oder Behandlung mit Trokkenhitze, durchgeführt werden können. Man erhält farbstarke Drucke mit gutem Stand der Konturen und einem klaren Weissfond und vorzüglicher Fixierausbeute, die nahezu quantitativ ist. Der Ausfall der Drucke ist von wechselnden Fixierbedingungen nur wenig abhängig.

Bei der Fixierung mittels Trockenhitze nach den üblichen Thermofixierverfahren verwendet man Heissluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der erfindungsgemässen 1:2-Metallkomplexverbindungen und 1:2-Metallmischkomplexe auf den Cellulosefasern bewirkenden Mitteln sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden

Mittel sind beispielsweise Natriumhydroxid, Kaliumhydroxid, Natriumcarbonat, Natriumbicarbonat, Kaliumcarbonat, Natriumformiat, Natriumhydrogenphosphat, Dinatriumhydrogenphosphat, Natriumtrichloracetat, Wasserglas oder Trinatriumphosphat.

Durch die Behandlung der erfindungsgemässen Verbindungen mit den säurebindenden Mitteln, gegebenenfalls unter Wärmeeinwirkung, werden die erfindungsgemässen Verbindungen (Farbstoffe) chemisch an die Cellulosefaser gebunden; insbesondere die Drucke auf Cellulose oder Regeneratcellulose zeigen nach der üblichen Nachbehandlung durch Spülen zur Entfernung von Spuren nicht fixierter Farbstoffanteile ausgezeichnete Nassechtheiten, zumal sich nicht fixierte Farbstoffanteile leicht wegen ihrer guten Kaltwasserlöslichkeit auswaschen lassen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von beispielsweise Stearylamin mit Äthylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemässen 1:2-Metallkomplexverbindungen und 1:2-Metallmischkomplexen hergestellten Färbungen und Drucke werden in sehr hoher Fixierausbeute erhalten. Die erfindungsgemässen Verbindungen liefern somit farbstarke Färbungen, wobei die mit diesen erfindungsgemässen Farbstoffen erhältlichen Nuancen innerhalb eines sehr breiten Farbbereiches liegen und von der chemischen Konstitution der beiden metallfreien Monoazoverbindungen entsprechend der allgemeinen Formel (1) bzw. der für sie ausgewählten Kombination sowie dem komplexbildenden Zentralatom, aus denen diese erfindungsgemässen Farbstoffe aufgebaut sind, abhängig sind; so können die Nuancen der mit den erfindungsgemässen Farbstoffen erhältlichen Färbungen zwischen rotstichig gelb bis violett und zwischen grün, oliv, braun und grau variieren. Die Färbungen und Drucke besitzen sehr gute Echtheiten, wie Fabrikations- und Gebrauchsechtheiten. Insbesondere für Färbungen und Drucke auf Cellulosefasermaterialien sind die guten bis sehr guten Licht- und Nassechtheiten hervorzuheben, wie beispielsweise die verschiedenen Waschechtheiten, so bei 60°C oder 95°C, die saure und alkalische Walkechtheit, die Wasser- und Seewasserechtheit, die saure Überfärbeechtheit, die alkalische und saure Schweissechtheit sowie die Plissier-, Bügel- und Reibechtheiten.

Ebenso ist die erfindungsgemässe Verwendung der erfindungsgemässen 1:2-Metallkomplexverbindungen und 1:2-Metallmischkomplexe auch für das faserreaktive Färben von Wolle von Bedeutung. Insbesondere lässt sich auf filzfrei oder filzarm ausgerüsteter Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists *1972*, 93-99, und *1975*, 33-44) mit sehr guten Echtheitseigenschaften färben.

Das Verfahren des Färbens auf Wolle erfolgt hierbei in üblicher und bekannter Färbeweise, indem man mit der faserreaktiven Verbindung bevorzugt im Ausziehverfahren aus saurem wässrigem Färbebad färbt, bevorzugt zunächst bei einem pH von etwa 3,5 bis 5,5 und gegen Ende der Färbezeit unter Verschieben des pH-Wertes in den neutralen und gegebenenfalls schwach alkalischen Bereich bis zu einem pH-Wert von 8,5, um besonders für hohe Farbtiefen die volle reaktive Bindung zwischen diesem Farbstoff und der Faser herbeizuführen, welche praktisch quantitativ erfolgt.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeit der erfindungsgemässen Verbindungen sehr gut ist, lassen sie sich auch mit Vorteil bei üblichen kontinuierlichen Färbeverfahren einsetzen. Bei Anwendung von Färbetemperaturen von 100 bis 106°C ist eine hohe Baderschöpfung festzustellen. Sie zeigen einen sehr guten Farbaufbau. Ebenso lässt sich Material aus Wollfasern unterschiedlicher Provenienz mit den erfindungsgemässen Verbindungen egal färben. Zur Verbesserung des Egalisierverhaltens kann gegebenenfalls ein übliches Egalisierhilfsmittel, wie beispielsweise N-Methyltaurin, zugesetzt werden.

Bei den mit den erfindungsgemässen Verbindungen erhältlichen Färbungen mit praktisch quantitativer Fixierung der Farbstoffe kann in der Regel auf die übliche ammoniakalische Nachbehandlung der gefärbten Ware verzichtet werden.

Unter Verwendung der üblichen faseraffinen Färbehilfsmittel ergeben die erfindungsgemässen Verbindungen auch auf filzfrei oder filzarm ausgerüsteter Wolle egale Färbungen. Neben der hohen Lichtechtheit dieser Wollfärbungen sind als sehr gute Nassechtheitseigenschaften insbesondere die ausgezeichnete alkalische Schweissechtheit und sehr gute Waschechtheit bei 60°C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile

beziehen sich zu Volumenteilen wie Kilogramm zu Liter.

Die in den Beispielen formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

*Beispiel 1*

29,7 Teile 2-Aminophenol-4-β-sulfatoäthylsulfon werden in 150 Teilen Wasser nach Zugabe von 25 Teilen wässriger 31 %iger Salzsäure drei Stunden gerührt; danach werden 50 Teile Eis zugegeben und zur Diazotierung 20 Volumenteile einer wässrigen 5n-Natriumnitritlösung langsam zugetropft. Man rührt nach positiver Nitritreaktion noch etwa 30 Minuten bei 10 bis 15°C weiter und zersetzt sodann den geringen Überschuss an Nitrit mit wenig Amidosulfonsäure. Zu dieser Diazoniumsalzlösung werden 52,4 Teile 2-[3'-Chlor-5'-(3''-sulfophenyl-amino)-s-triazinyl]-amino-5-naphthol-7-sulfonsäure in Form einer wässrigen Suspension zugegeben; der pH-Wert der Kupplungsmischung wird mit Natriumcarbonat auf 6,8 bis 7,2 eingestellt und bis zur beendeten Kupplungsreaktion gehalten.

Zur Überführung der so hergestellten metallfreien Azoverbindung in die 1:2-Chromkomplexverbindung wird diese Kupplungslösung mit soviel Teilen Chromacetat, die 2,6 Teilen Chrom entsprechen, und 13,6 Teilen kristallisiertem Natriumacetat versetzt und bis zur Beendigung der Chromkomplexbildung bei 95 bis 100°C erhitzt. Die entstehende dunkelblaue Lösung wird zur Klärung filtriert und die erfindungsgemässe Chromkomplex-Azoverbindung in üblicher Weise, beispielsweise durch Eindampfen oder Sprühtrocknen, isoliert. Man erhält ein schwarzes Pulver, das neben anorganischen Elektrolytsalzen das Natriumsalz der Verbindung der Formel

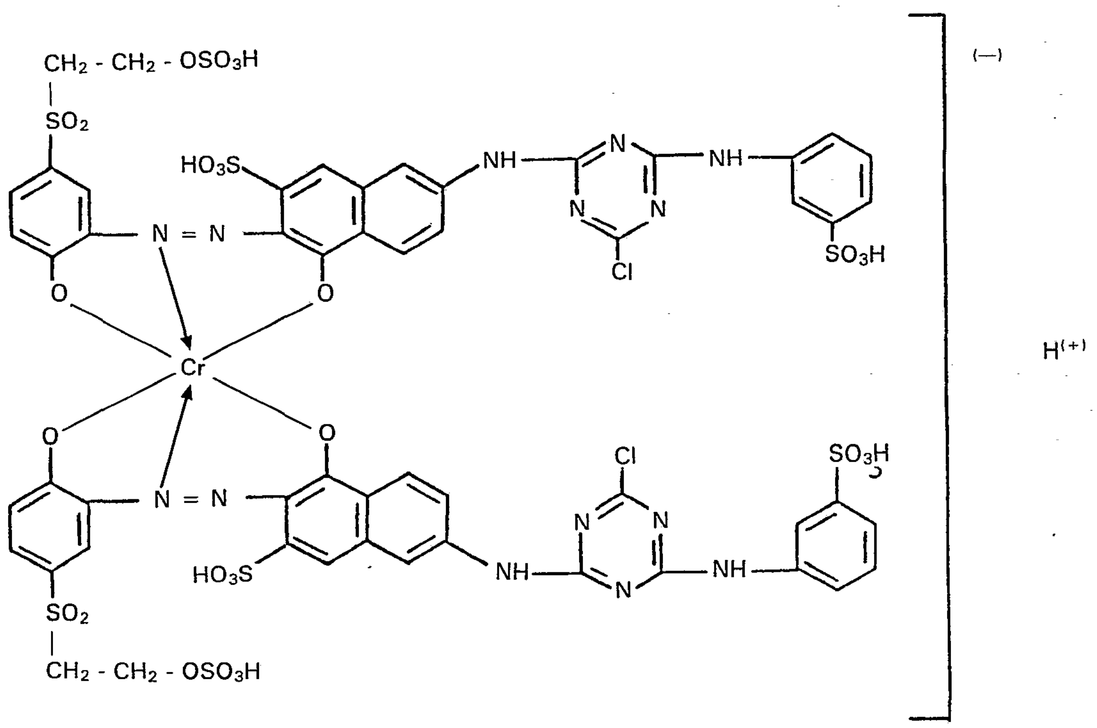

enthält. Diese besitzt sehr gute Farbstoffeigenschaften und eignet sich sehr gut für das Färben und insbesondere für das Bedrucken von Cellulosefasermaterialien nach den für faserreaktive Farbstoffe üblichen Applikations- und Fixiermethoden. Je nach eingesetzter Menge dieser erfindungsgemässen Chromkomplexverbindung werden rotstichig graue bis schwarze Färbungen oder Drucke mit sehr guten Licht- und Nassechtheiten erhalten. Als besonders vorteilhaft kann hervorgehoben werden, dass beim Bedrucken der Cellulosefasermaterialien eine nahezu quantitative Fixierung der erfindungsgemässen Verbindung auf der Faser erfolgt, so dass das Druckereiabwasser nur geringfügig mit diesem Farbstoff belastet ist.

*Beispiel 2*

Man verfährt zur Herstellung einer erfindungsgemässen 1:2-Kobaltkomplex-Monoazoverbindung gemäss den Verfahrensweisen des Beispieles 1, setzt jedoch anstelle des Chromacetats soviel Teile Kobaltcarbonat, die 2,95 Teilen Kobalt entsprechen, in die Metallisierungsreaktion ein und erwärmt das Gemisch auf 75 bis 80°C. Man erhält eine dunkelbordorote Lösung der erfindungsgemässen Verbindung, die man aus dieser Lösung nach Klärfiltration durch Eindampfen oder Sprühtrocknung in Form ihres Natriumsalzes zusammen mit anorganischen Elektrolytsalzen als dunkelbraunes Pulver isoliert. Sie besitzt, in Form der freien Säure geschrieben, die Formel

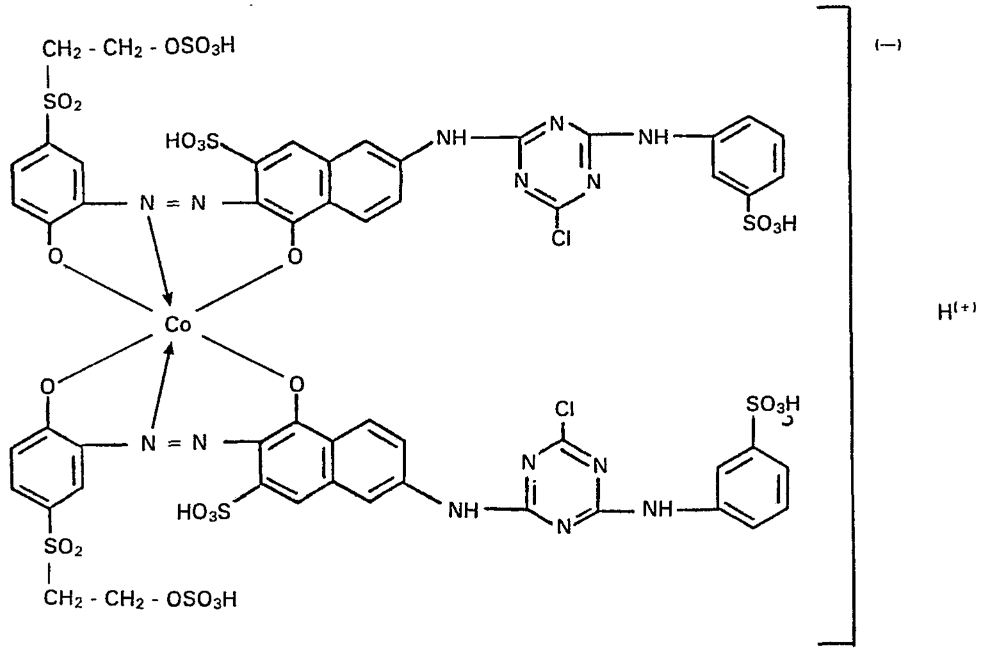

und liefert infolge ihrer guten Farbstoffeigenschaften auf Cellulosefasermaterialien nach den für faserreaktive Farbstoffe übliche Applikations- und Fixiermethoden kräftige, rotstichig braune Färbungen und Drucke von guten Echtheiten. Besonders in den Druckverfahren werden mit dieser erfindungsgemässen 1:2-Kobaltkomplex-Azoverbindung fast quantitative Fixierausbeuten erhalten.

*Beispiel 3*

29,7 Teile 2-Aminophenol-5-β-sulfatoäthylsulfon werden in 150 Teilen Wasser nach Zugabe von 25 Teilen 31%iger wässriger Salzsäure 3 Stunden gerührt; sodann werden 50 Teile Eis zugegeben, und die Diazotierungsreaktion wird durch langsames Zutropfen von 20 Volumenteilen einer wässrigen 5n--Natriumnitritlösung durchgeführt. Nach Eintritt positiver Nitritreaktion rührt man noch etwa 30 Minuten bei 10 bis 15°C nach und zersetzt den Überschuss an Nitrit in üblicher Weise. Zu dieser Diazoniumsalzlösung werden 47,2 Teile 2-(3'-Chlor-5'--N-äthyl-N-phenylamino-s-triazinyl)-amino-8-naphthol-6-sulfonsäure in Form einer wässrigen Suspension zugegeben; der pH-Wert dieses Kupplungsgemisches wird mit Natriumcarbonat auf 7,0 bis 7,2 eingestellt und bis zur Beendigung der Kupplungsreaktion gehalten.

Zur Herstellung der erfindungsgemässen Chromkomplexverbindung gibt man zu dieser Lösung der Azoverbindung soviel Teile Chromacetat, die 2,6 Teilen Chrom entsprechen, und 13,6 Teile kristallis. Natriumacetat; die Chromierung wird unter Druck (3,4 bis 3,8 bar) und bei 125 bis 130°C durchgeführt. Man erhält eine schwarze Lösung, die durch Filtration geklärt wird. Die erfindungsgemässe Verbindung wird durch Eindampfen oder Sprühtrocknen als schwarzes Pulver isoliert; dieses enthält neben anorganischen Elektrolytsalzen das Natriumsalz der Verbindung der Formel

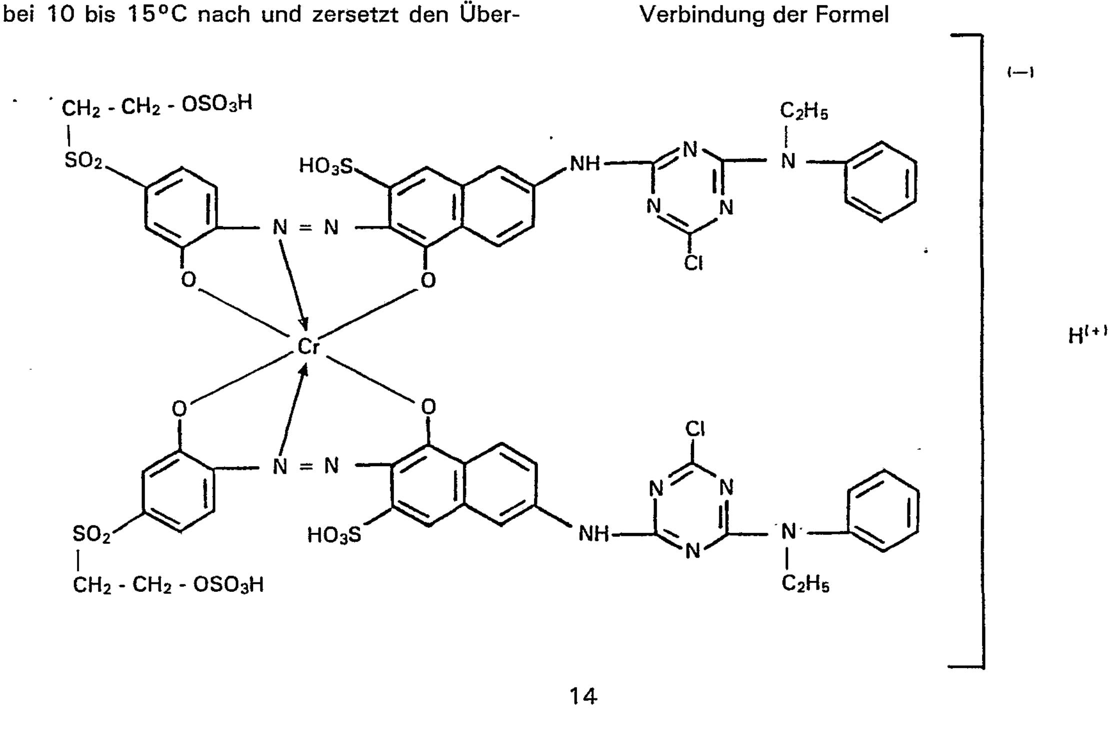

das sehr gute Farbstoffeigenschaften besitzt und auf Cellulosefasermaterialien nach den für faserreaktive Farbstoffe gebräuchlichen Applikations- und Fixiermethoden graue bis schwarze Färbungen und Drucke mit sehr guten Licht- und Nassechtheiten liefert. Für diese erfindungsgemässe Verbindung ist die nahezu quantitative Fixierung beim Druck auf Baumwolle hervorzuheben. Auf Wolle, die waschmaschinenfest, insbesondere nach dem sogenannten Hercosett-Verfahren, ausgerüstet ist, liefert diese erfindungsgemässe 1:2-Chromkomplex-Monoazoverbindung je nach Einsatzmenge rotstichig graue bis schwarze Färbungen mit sehr guter Lichtechtheit und ausgezeichneten Nassechtheiten.

*Beispiel 4*

Man verfährt zur Herstellung einer erfindungsgemässen 1:2-Chromkomplex-Monoazoverbindung gemäss der Verfahrensweise des Beispieles 3, ersetzt jedoch die dort verwendete Kupplungskomponente durch 38,3 Teile 2-(3'-Chlor-5'-methoxy-s-triazinyl)-amino-8-naphthol-6-sulfonsäure; nach der Chromierungsreaktion erhält man eine schwarzgefärbte Lösung, die nach Klärfiltration sprühgetrocknet oder eingedampft wird. Es wird ein schwarzes Pulver erhalten, das neben anorganischen Elektrolytsalzen das Natriumsalz der Verbindung der Formel

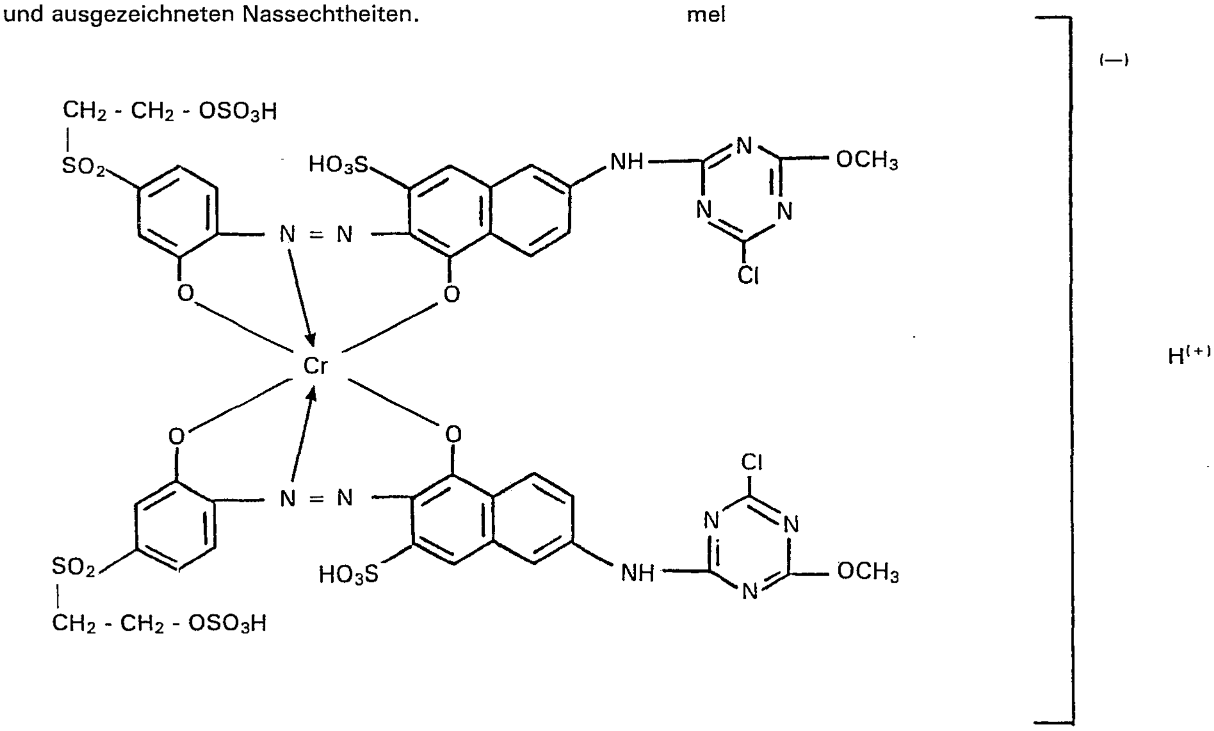

enthält, die sehr gute faserreaktive Farbstoffeigenschaften besitzt und beispielsweise auf Cellulosefasermaterialien in Gegenwart von Alkalien beispielsweise nach Druckverfahren, die in der Technik für faserreaktive Farbstoffe üblich sind, graue bis schwarze Drucke mit sehr guten Gebrauchsechtheiten und hoher Farbausbeute liefert.

*Beispiel 5*

Eine neutrale Lösung von 31,3 Teilen 2-Aminophenol-4-β-thiosulfatoäthylsulfon in 150 Teilen Wasser werden mit 20 Volumenteilen einer wässrigen 5n-Natriumnitritlösung vermischt und langsam zu 50 Teilen Eis und 32 Teilen 31%iger Salzsäure zulaufen gelassen. Nach positiver Nitritreaktion rührt man noch 30 Minuten bei 10 bis 15°C nach und zersetzt überschüssiges Nitrit mit wenig Amidosulfonsäure.

Zur Durchführung der Kupplungsreaktion werden zu dieser Diazoniumsalzlösung 58,4 Teile 1-[3'-(3''-Chlor-5''-(2''',5'''-disulfophenyl)-amino-s-triazinyl)-amino]-phenyl-3-carboxy-pyrazol-5-on in Form einer wässrigen Lösung zugegeben; der pH-Wert der Kupplungsmischung wird mit Natriumcarbonat auf 6,5 eingestellt und bis zur beendeten Reaktion gehalten.

Anschliessend gibt man soviel Teile Chromacetat, die 2,6 Teilen Chrom entsprechen, und 13,6 Teile kristallis. Natriumacetat hinzu und führt die Chromkomplexbildung bei 95 bis 100°C durch. Nach Beendigung dieser Chromierungsreaktion wird die orangerote Lösung filtriert und die erfindungsgemässe Verbindung durch Eindampfen oder Sprühtrocknung isoliert. Man erhält ein braunes Pulver, das neben den Elektrolytsalzen das Natriumsalz der Verbindung der Formel

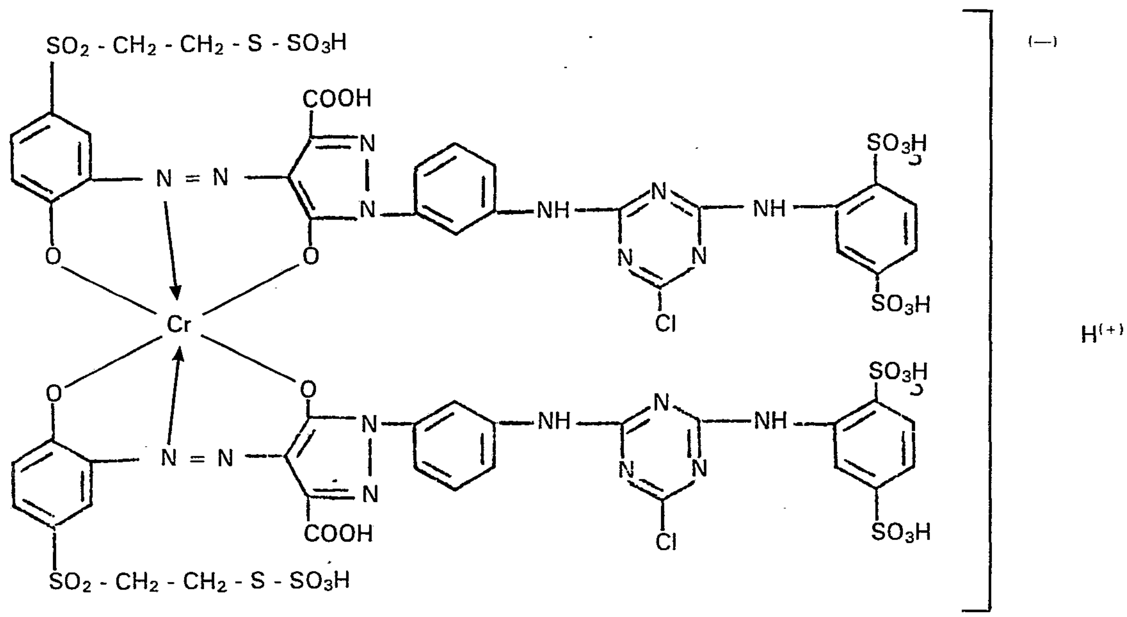

enthält. Diese zeigt sehr gute Farbstoffeigenschaften und liefert insbesondere nach den für faserreaktive Farbstoffe üblichen Applikations- und Fixiermethoden auf Cellulosefasermaterialien, wie Baumwolle, insbesondere im Druck, orangebraune Färbungen, insbesondere Drucke, mit sehr guten Licht- und Nassechtheiten und einer sehr guten Fixierausbeute.

*Beispiel 6*

19,9 Teile 2-Aminophenol-4-vinylsulfon werden in 150 Teilen Wasser mit 32 Teilen 31%iger Salzsäure gelöst; diese Lösung wird mit 50 Teilen Eis versetzt und anschliessend in üblicher Weise mit 20 Volumenteilen einer wässrigen 5n-Natriumnitritlösung diazotiert. Bei positiver Nitritreaktion rührt man noch 30 Minuten bei 10 bis 15°C nach, zersetzt einen Überschuss an Nitrit und gibt zur Kupplung eine wässrige Suspension von 43,5 Teilen 1-(3'-Chlor-5'-amino-s-triazinyl)-amino-8-naphthol-3,6-disulfonsäure hinzu, wobei der pH-Wert mit Natriumcarbonat auf 6,8 bis 7,2 eingestellt und bis zur Beendigung der Kupplungsreaktion gehalten wird.

Anschliessend gibt man soviel Teile Chromacetat, die 2,6 Teilen Chrom entsprechen, und 13,6 Teile kristallis. Natriumacetat hinzu und erhitzt das Chromierungsgemisch auf 90 bis 95°C. Nach Beendigung der Metallisierungsreaktion erhält man eine blauschwarze Lösung, die filtriert wird. Die erfindungsgemässe Chromkomplexverbindung wird durch Sprühtrocknung isoliert. Man erhält ein schwarzes Pulver, das neben den Elektrolytsalzen das Natriumsalz der Verbindung der Formel

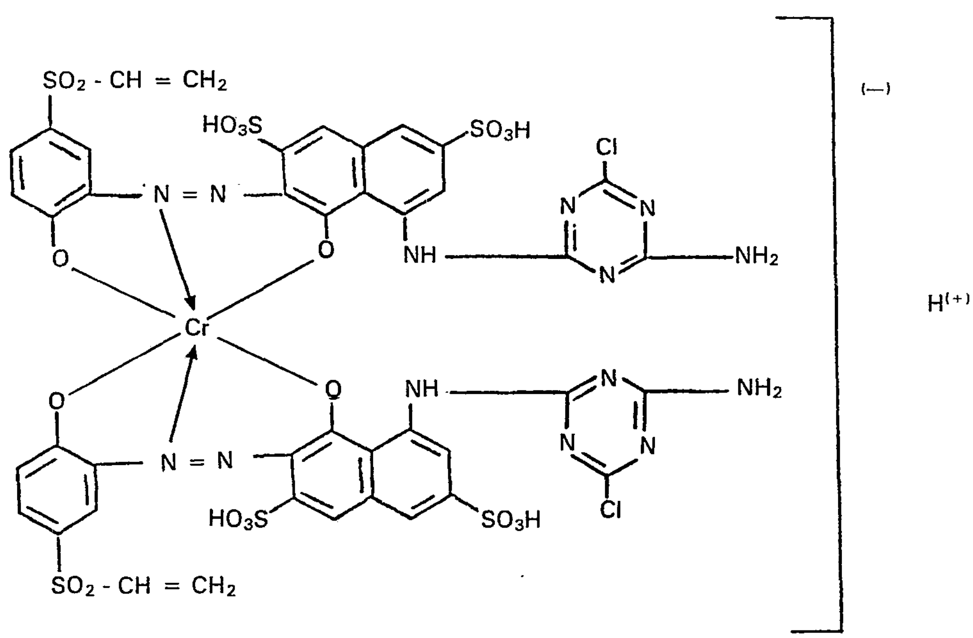

enthält, die sehr gute faserreaktive Farbstoffeigenschaften besitzt und insbesondere im Druck auf Cellulosefasermaterialien, wie Baumwolle, in Gegenwart von Alkali schwarze Drucke von hoher Licht- und Nassechtheit und sehr guter Fixierausbeute liefern.

*Beispiel 7*

Man rührt zwei Stunden 24,6 Teilen 2-Amino-4--acetylamino-phenol-6-sulfonsäure in 150 Teilen Wasser unter Zugabe von 32 Teilen konzentrierter Salzsäure; anschliessend gibt man 50 Teile Eis und sodann langsam 20 Volumenteile einer wässrigen 5n-Natriumnitritlösung hinzu. Die nach der Diazotierungsreaktion erhaltene Diazoniumsalzsuspension wird mit 25,2 Teilen 1-Naphthol-5-β-hydroxyäthylsulfon und 100 Teilen Eis versetzt; der pH-Wert wird mit konzentrierter Natronlauge auf 12 eingestellt und bis zur beendeten Kupplungsreaktion gehalten. Bei gleichem pH-Wert wird die Lösung sodann noch drei Stunden am Rückfluss erhitzt, um die Acetylaminogruppe zu hydrolisieren. Sodann kühlt man auf 20°C ab und scheidet die Azoverbindung mittels konzentrierter Salzsäure ab. Man gewinnt das Produkt durch Abfiltrieren, Trocknen und Vermahlen. Zur Verseterung der β-Hydroxyäthylsulfonyl-Gruppe trägt man diese Azoverbindung unter Rühren in die vierfache Menge an 100%iger Schwefelsäure bei 20°C ein und rührt diese Reaktionsmischung bei dieser Temperatur 6 Stunden. Sodann rührt man dieses Reaktionsgemisch in eine Eis/Wasser-Mischung ein, wobei die Temperatur bei 10°C gehalten wird, neutralisiert die Lösung mit Calciumcarbonat auf einen Wert bis zu 1,3, sodann mittels Natriumcarbonat bis auf 6,5. Man erhitzt dieses Reaktionsgemisch auf 65°C, filtriert ausgefallenes Calciumsulfat ab, versetzt das Filtrat mit Kaliumchlorid und filtriert die ausgesalzene Schwefelsäuremonoester-Verbindung ab. Dieser Filterrückstand wird in 400 Teilen Wasser gelöst und mit einer Suspension von 32,5 Teilen N-(3',5'-Dichlor-s-triazinyl)-anilin-2-sulfonsäure in 150 Teilen Wasser und 50 Teilen Eis versetzt. Der pH-Wert dieser Kupplungsmischung wird mit Natriumcarbonat auf 5,5 bis 6,0 gestellt und bis zur Beendigung der Reaktion gehalten.

Sodann gibt man soviel Teile Chromacetat, die 2,6 Teilen Chrom entsprechen, und 13,6 Teile kristallis. Natriumacetat hinzu und erhitzt dieses Chromierungsgemisch auf 95°C bis zur Beendigung der Reaktion. Die erhaltene Lösung wird geklärt und die erfindungsgemässe 1:2-Chromkomplex-Monoazoverbindung in üblicher Weise durch Eindampfen isoliert. Es wird ein schwarzes Pulver erhalten, das neben Elektrolytsalzen das Alkalimetallsalz, vorwiegend Natriumsalz, der Verbindung der Formel

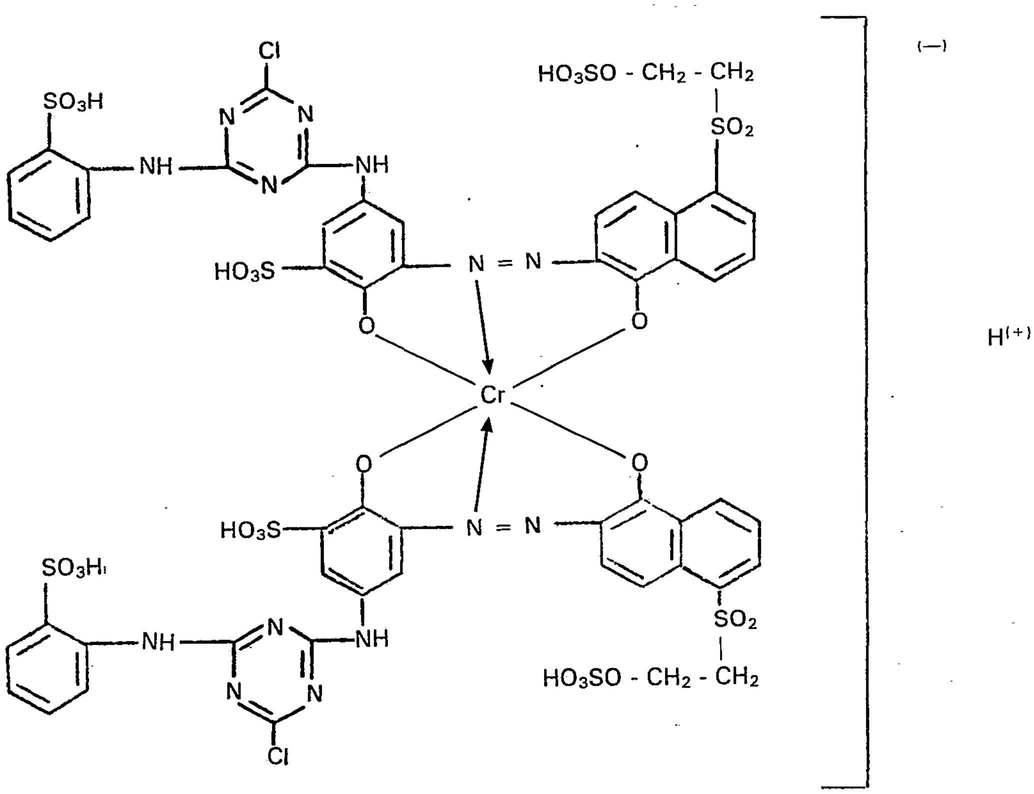

enthält. Diese besitzt sehr gute faserreaktive Farbstoffeigenschaften und liefert insbesondere im Druck auf Cellulosefasermaterialien, wie Baumwolle, nach den für faserreaktive Farbstoffe üblichen Applikations- und Fixiermethoden rotstichig graue Drucke mit sehr guten Licht- und Nassechtheiten und sehr guter Fixierausbeute.

*Beispiel 8*

Zur Herstellung eines erfindungsgemässen 1:2--Chrommischkomplexes werden zunächst die beiden metallfreien Monoazoverbindungen synthetisiert.

*Monoazoverbindung A:*

29,7 Teile 2-Aminophenol-4-β-sulfatoäthylsulfon werden in üblicher Weise in wässriger salzsaurer Lösung mit Natriumnitrit diazotiert, beispielsweise gemäss den Angaben des Beispieles 1. Zu der erhaltenen Diazoniumsalzlösung werden 52,4 Teile 2-[3'-Chlor-5'-(3''-sulfophenylamino)-s-triazinyl]-amino-8-naphthol-6-sulfonsäure in Form einer wässrigen Suspension zugegeben. Die Kupplungsreaktion wird bei einem pH-Wert von 6,8 bis 7,2 durchgeführt, der mit Natriumcarbonat eingestellt und gehalten wird. Die so hergestellte Azoverbindung hat, in Form der freien Säure geschrieben, die folgende Konstitution:

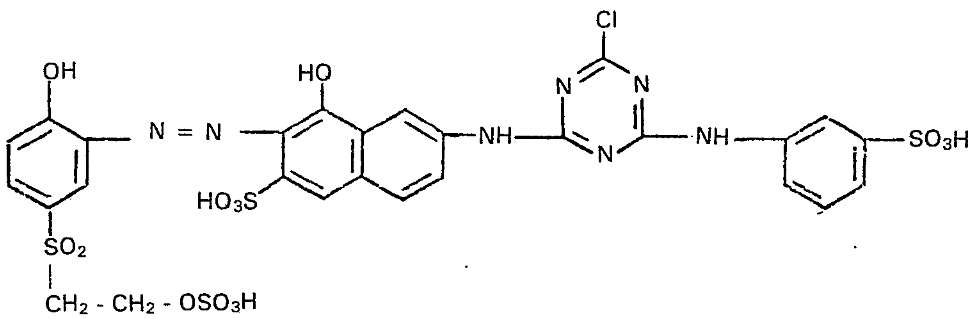

(A)

*Monoazoverbindung B:*

37,7 Teile 2-Aminophenol-4-β-sulfatoäthylsulfon-6-sulfonsäure werden in üblicher Weise in wässriger salzsaurer Lösung mit Natriumnitrit diazotiert. Zu dieser Diazoniumsalzlösung werden sodann 52,4 Teile 2-[3'-Chlor-5'-(2''-sulfophenylamino)-s-triazinyl]-amino-5-naphthol-7-sulfonsäure in Form einer wässrigen Suspension zugegeben. Auch hier wird während der Kupplungsreaktion der pH-Wert mittels Natriumcarbonat auf 6,8 bis 7,2 gehalten. Die so hergestellte Monoazoverbindung hat, in Form der freien Säure geschrieben, die folgende Konstitution:

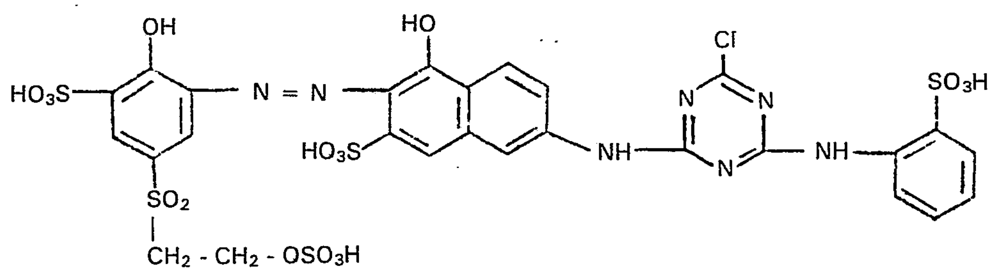

(B)

*Herstellung des erfindungsgemässen 1:2-Chrommischkomplexes:*

Die so hergestellten Lösungen der Monoazoverbindungen A und B werden miteinander vermischt und mit soviel Teilen Chromacetat, die 5,2 Teilen Chrom entsprechen, und 27,5 Teilen kristallis. Natriumacetat versetzt. Zur Chromierungsreaktion wird der Ansatz bei 95°C erhitzt, anschliessend zur Klärung filtriert und sprühgetrocknet. Der so neben Elektrolytsalzen als Natriumsalz isolierte erfindungsgemässe 1:2-Chrommischkomplex besteht aus der symmetrischen 1:2-Chromkomplexverbindung der Monoazoverbindung A, der symmetrischen 1:2-Chromkomplexverbindung der Monoazoverbindung B und der asymmetrischen 1:2-Chromkomplexverbindung der Monoazoverbindungen A und B. Dieser erfindungsgemässe 1:2-Chrommischkomplex stellt ein schwarzes Pulver dar, das unter Anwendung der in der Technik für faserreaktive Farbstoffe üblichen Applikations- und Fixiermethoden auf Cellulosefasermaterialien, wie Baumwolle, in Gegenwart von Alkali graue bis schwarze Färbungen und Drucke mit sehr guten Nassechtheiten und einer sehr guten Lichtechtheit liefern; insbesondere im Druck besitzt dieser 1:2-Chrommischkomplex ausgezeichnete Fixierausbeuten.

*Beispiel 9*

Zur Herstellung eines erfindungsgemässen 1:2-Chrommischkomplexes werden zunächst die beiden metallfreien Monoazoverbindungen getrennt hergestellt.

*Monoazoverbindung C:*

29,7 Teile 2-Aminophenol-4-β-sulfatoäthylsulfon werden in üblicher Weise diazotiert; die Diazoniumsalzlösung wird zur Kupplung mit einer wässrigen Suspension von 39,7 Teilen 2-(3'-Chlor-5'-äthoxy-s-triazinyl)-amino-8-naphthol-6-sulfonsäure versetzt. Der pH-Wert des Kupplungsansatzes wird während der gesamten Reaktion bei 6,8 bis 7,0 gehalten. Die so hergestellte Azoverbindung besitzt, in Form der freien Säure geschrieben, die folgende Konstitution:

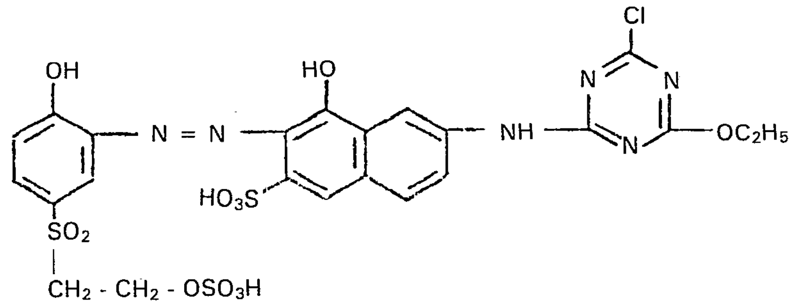

(C).

*Monoazoverbindung D:*

24,6 Teile 2-Amino-4-acetylamino-phenol-6-sulfonsäure werden gemäss den Angaben des Beispieles 6 diazotiert; zu dieser Diazoniumsalzsuspension gibt man 28,2 Teile 1-(4'-β-Hydroxyäthylsulfonyl)-phenyl-3-methyl-pyrazol-5-on. Die Kupplungsreaktion wird bei einem pH-Wert von 10, der mittels Natriumcarbonat eingestellt und gehalten wird, durchgeführt. Danach stellt man mit konzentrierter Natronlauge einen pH-Wert von 12 ein und erhitzt das Reaktionsgemisch unter Rückfluss. Mit konzentrierter Salzsäure wird anschliessend ein pH von 1,5 eingestellt und auf diese Weise die Monoazoverbindung abgeschieden. Das nach Abfiltrieren getrocknete Produkt wird in die 4fache Gewichtsmenge 100%ige Schwefelsäure bei einer Temperatur von 15 bis 20°C eingerührt; der Ansatz wird bis zur quantitativen Sulfatierung weitergerührt und anschliessend auf ein Gemisch von Eis und Wasser gegeben. Mit Calciumcarbonat wird ein pH-Wert von bis zu 1,3 eingestellt, anschliessend wird mit Natriumcarbonat auf einen pH-Wert von 6,5 neutralisiert, das Ganze auf 65°C erhitzt und vom gebildeten Calciumsulfat abfiltriert. Das Filtrat wird zur Trockene eingedampft und die gebildete Monoazoverbindung in 400 Teilen Wasser gelöst. Diese Lösung wird mit einer Suspension von 19,5 Teilen 1,3-Dichlor-5-äthoxy-s-triazin in 50 Teilen Wasser versetzt; der pH-Wert wird mit Natriumcarbonat auf 5,5 bis 6,0 eingestellt und bis zur Beendigung der Acylierungsreaktion gehalten. Die so hergestellte Monoazoverbindung besitzt, in Form der freien Säure geschrieben, die folgende Konstitution:

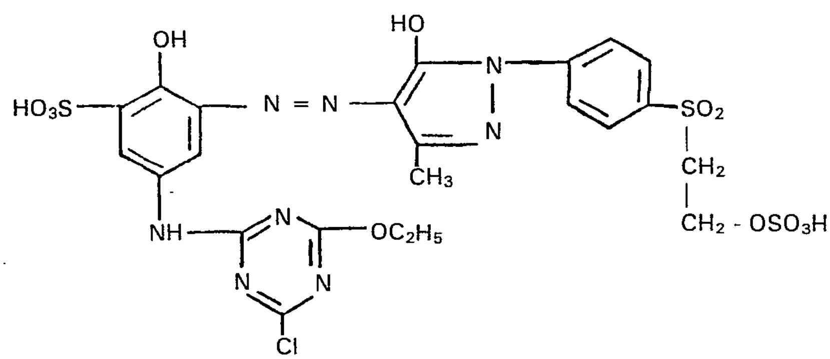

(D)

*Herstellung des erfindungsgemässen 1:2-Chrommischkomplexes:*

Die so hergestellten Lösungen der Monoazoverbindungen C und D werden miteinander vermischt und mit soviel Teilen Chromacetat die 5,2 Teilen Chrom entsprechen, und 27,5 Teilen kristallis. Natriumacetat versetzt; zur Chromierungsreaktion wird der Ansatz bei 95°C erhitzt, anschliessend zur Klärung filtriert und sprühgetrocknet. Der mit Elektrolytsalzen als Natriumsalz isolierte erfindungsgemässe 1:2-Chrommischkomplex besteht aus der symmetrischen 1:2-Chromkomplexverbindung der Monoazoverbindung C, der symmetrischen 1:2-Chromkomplexverbindung der Monoazoverbindung D und der asymmetrischen 1:2-Chromkomplexverbindung der Monoazoverbindungen C und D. Dieser erfindungsgemässe 1:2-Chrommischkomplex liefert unter Anwendung der in der Technik für faserreaktive Farbstoffe üblichen Applikations- und Fixiermethoden auf den in der Beschreibung genannten Materialien, wie insbesondere Cellulosefasermaterialien, wie Baumwolle, dunkelbraune Färbungen und Drucke mit sehr guten Licht- und Nassechtheiten bei einer nahezu quantitativen Fixierausbeute.

*Beispiel 10*

Zur Herstellung einer erfindungsgemässen asymmetrischen 1:2-Kobaltkomplexverbindung werden zunächst die beiden Ausgangsazoverbindungen synthetisiert.

*Monoazoverbindung E:*

29,7 Teile 2-Aminophenol-4-β-sulfatoäthylsulfon werden, wie in Beispiel 1 beschrieben, diazotiert; zu dieser Diazoniumsalzlösung wird eine wässrige Suspension von 57,1 Teilen 1-N-Acetoacetyl-4-N'-[3'-chlor-5'-(2''-methyl-4''-sulfophenyl-amino)-s-triazinyl]-diaminobenzol-3-sulfonsäure hinzugegeben und der pH-Wert während der gesamten Kupplungsreaktion auf 6,5 gehalten.

*1:1-Kobaltkomplex-Monoazoverbindung F:*

Die Lösung der Monoazoverbindung B von Beispiel 8 wird mit Stickstoffgas überlagert und mit einer Lösung von soviel Teilen kristallisiertem Kobaltsulfat, die 2,95 Teilen Kobalt entsprechen, in 100 Teilen Wasser versetzt. Der pH dieser Lösung wird mit einer wässrigen 2n-Natriumcarbonatlösung allmählich auf 7,2 eingestellt und die Temperatur bei 10°C durch Aussenkühlung gehalten. Es wird anschliessend noch 45 Minuten nachgerührt.

*Herstellung der erfindungsgemässen asymmetrischen 1:2-Kobaltkomplexverbindung:*

Die Lösung der Monoazoverbindung E wird zur Lösung der Kobaltkomplexverbindung F gegeben. Unter Einhaltung eines pH-Wertes zwischen 6,8 bis 7,2 erwärmt man diesen Reaktionsansatz langsam auf 60°C und hält die Temperatur bis zur beendeten Metallisierungsreaktion. Es wird anschliessend filtriert und zur Trockene eingedampft. Man erhält ein dunkelgelbes Pulver, das neben anorganischen Elektrolytsalzen das Natriumsalz der Verbindung der Formel

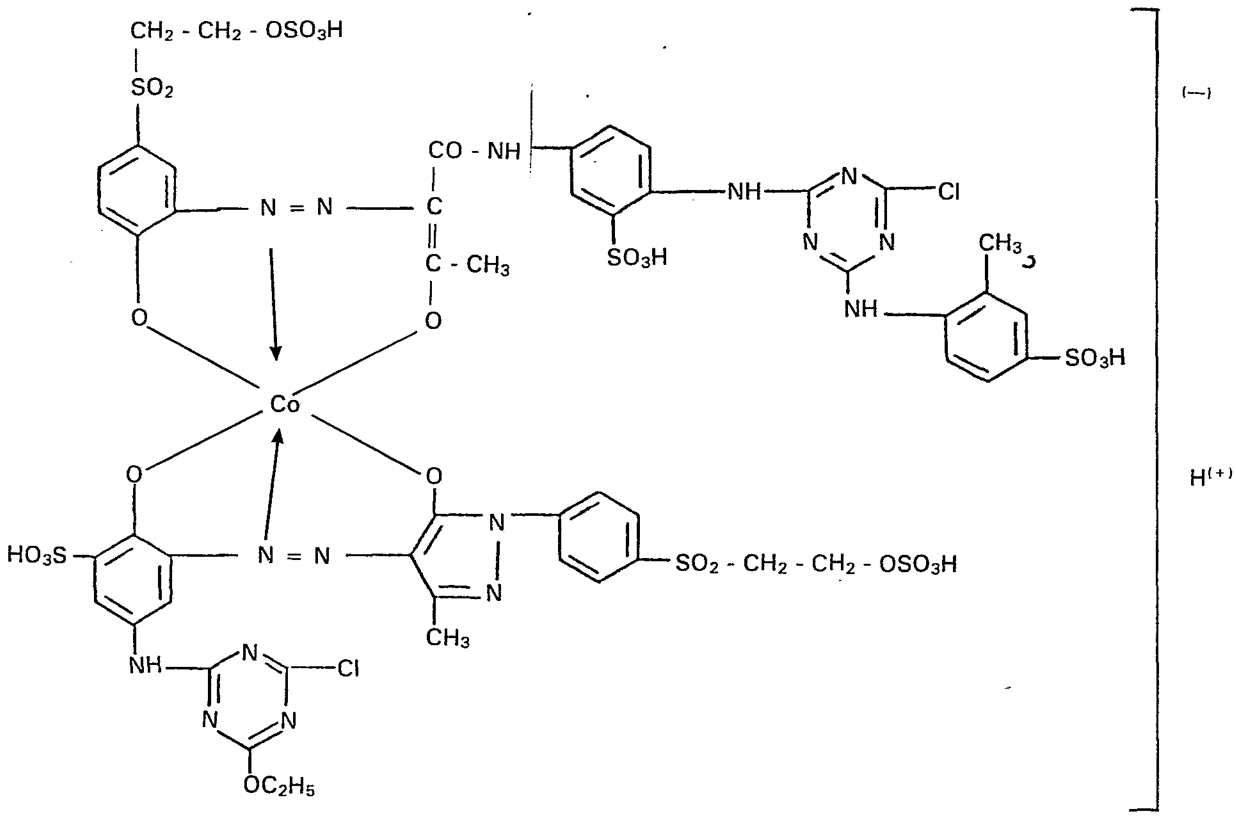

enthält. Diese zeigt sehr gute faserreaktive Farbstoffeigenschaften und liefert beispielsweise beim Bedrucken von Cellulosefasermaterialien nach den in der Technik üblichen Fixiermethoden in Gegenwart von Alkali rotstichig gelbe Färbungen (Drucke) mit sehr guten Licht- und Nassechtheiten. Die Fixierausbeute ist nahezu quantitativ.

*Beispiel 11*

21,7 Teile 2-Aminophenol-4-β-hydroxyäthylsulfon werden in bekannter Weise, beispielsweise analog den Angaben des Beispieles 6, diazotiert. Anschliessend wird eine wässrige Lösung von 37,9 Teilen 1-(2',5'-Disulfo-4'-aminophenyl)-3-carboxy-pyrazol-5-on zugegeben. Der pH-Wert des Kupplungsgemisches wird bis zum Ende der Reaktion mit Natriumcarbonat bei 6,5 gehalten. Sodann stellt man mit Säure einen pH-Wert von 1,5 ein und fällt die Monoazoverbindung mit Natriumchlorid aus, filtriert sie ab, trocknet sie und gibt sie unter Rühren in ein Gemisch aus 300 Volumenteilen Methylglykol, 50 Teilen Wasser und soviel Teilen kristallisiertem Chrom-(III)-chlorid, die 5,2 Teile Chrom entsprechen; dieses Chromierungsgemisch wird bei 105°C bis zur beendeten Chromierungsreaktion erhitzt, das Lösungsmittel anschliessend unter reduziertem Druck abdestilliert und die so hergestellte 1:1-Chromkomplexverbindung getrocknet. Diese wird sodann in 200 Volumenteilen Pyridin zusammen mit 40 Teilen Amidosulfonsäure bis zur vollständigen Sulfatierung bei 50°C erhitzt; der überwiegende Teil des Lösemittels wird anschliessend unter reduziertem Druck abdestilliert. Der Rückstand wird in Eiswasser aufgenommen und mit Natriumcarbonat bei einem pH-Wert von 6,0 gelöst. Zu dieser Lösung gibt man 11,5 Teile 1,3-Dichlor-5-N-äthylamino-s-triazin hinzu und hält bis zur vollständigen Acylierung den pH-Wert mit Natriumcarbonat bei 5,5 bis 6,0 bei einer Temperatur von etwa 40°C.

Die so hergestellte Lösung der 1:1-Chromkomplexverbindung wird mit der Lösung der Monoazoverbindung A des Beispieles 8 versetzt; man erhitzt

die Reaktionsmischung unter Konstanthalten des pH-Wertes bei 6,0 mittels Natriumcarbonat auf 90 °C und hält die Temperatur bei diesem pH-Wert.

Anschliessend filtriert man und isoliert die so hergestellte erfindungsgemässe asymmetrische 1:2-Chromkomplexverbindung der Formel

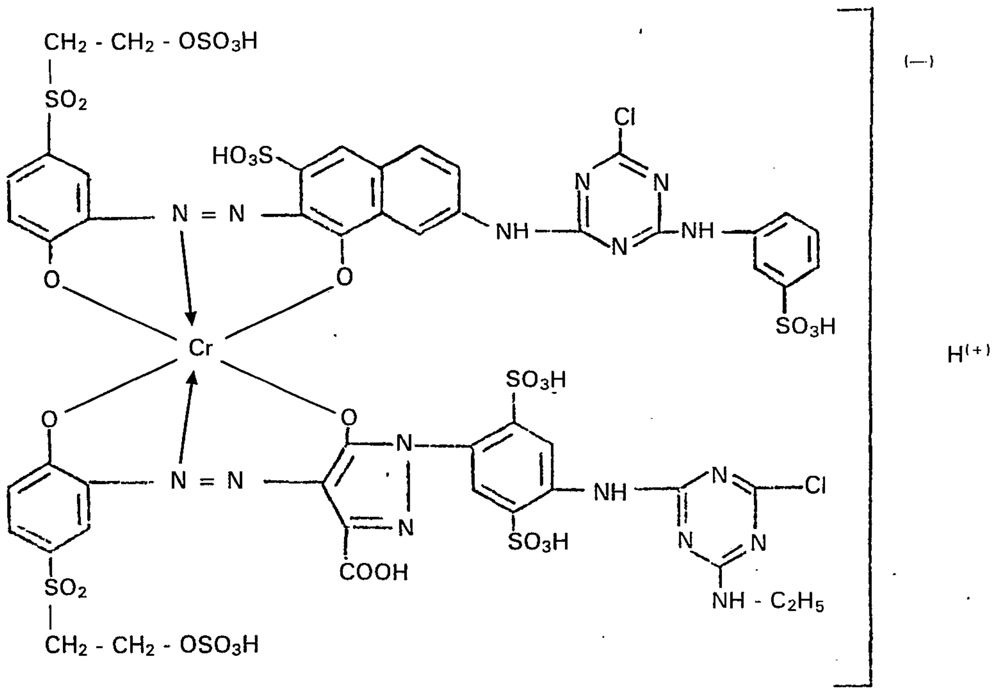

in üblicher Weise, beispielsweise durch Eindampfen oder Sprühtrocknung, in Form ihres Alkalimetallsalzes, wie Natriumsalzes. Diese erfindungsgemässe 1:2-Chromkomplexverbindung besitzt sehr gute Farbstoffeigenschaften und liefert nach den in der Technik üblichen Applikations- und Fixiermethoden auf den in der Beschreibung genannten Materialien, wie insbesondere auf Cellulosefasermaterialien in Gegenwart von Alkali, braune bis dunkelbraune Färbungen mit sehr guten Licht- und Nassechtheiten in sehr guter Fixierausbeute, insbesondere im Druck.

*Beispiel 12*

Zur Herstellung einer erfindungsgemässen asymmetrischen 1:2-Chromkomplexverbindung werden zunächst die beiden Ausgangsazoverbindungen getrennt hergestellt.

*1:1-Chromkomplex der Monoazoverbindung G:*

24,5 Teile 1-Aminobenzol-3-β-hydroxyäthylsulfon-6-carbonsäure werden in üblicher Weise diazotiert. Zu dieser Diazoniumsalzlösung gibt man 27,2 Teile 1-(N-Acetoacetylamino)-3-amino-benzol-4-sulfonsäure und stellt den pH-Wert auf 6,0 bis 6,5 ein. Nach beendeter Kupplungsreaktion wird die gebildete Monoazoverbindung mittels Salzsäure bei 50 °C ausgefällt, abfiltriert, getrocknet und vermahlen. Sie wird in 300 Volumenteile Methylglykol eingerührt, und es werden soviel Teile Chrom(III)-chlorid entsprechend 5,2 Teilen Chrom zugegeben. Die Reaktionsmischung wird am Rückfluss bis zur beendeten Chromierung erhitzt. Sodann wird das Lösemittel unter reduziertem Druck abdestilliert und die als Rückstand zurückbleibende 1:1-Chromkomplexverbindung der Monoazoverbindung isoliert und getrocknet, sodann zusammen mit 40 Teilen Amidosulfonsäure in 200 Volumenteilen Pyridin bei 50 °C sulfatiert. Anschliessend wird der überwiegende Teil des Lösemittels unter reduziertem Druck abdestilliert, der Rückstand in Eiswasser aufgenommen und bei einem pH-Wert von 6,0 mittels Natriumcarbonat gelöst. Zu dieser Lösung gibt man 19 Teile Cyanurchlorid und hält bis zur quantitativen Sulfatierung den pH-Wert zwischen 4,5 und 5,0 und die Temperatur bei 15 °C. Nach Beendigung dieser Acylierungsreaktion wird zu diesem Ansatz eine Lösung von 17,3 Teilen Anilin-3-sulfonsäure in 50 Teilen Wasser zugegeben; zur Durchführung dieser zweiten Acylierungsreaktion wird dieses Reaktionsgemisch bei 80 °C unter Konstanthalten eines pH-Wertes von 6,8 erhitzt; es entsteht der 1:1-Chromkomplex der Monoazoverbindung der Formel G:

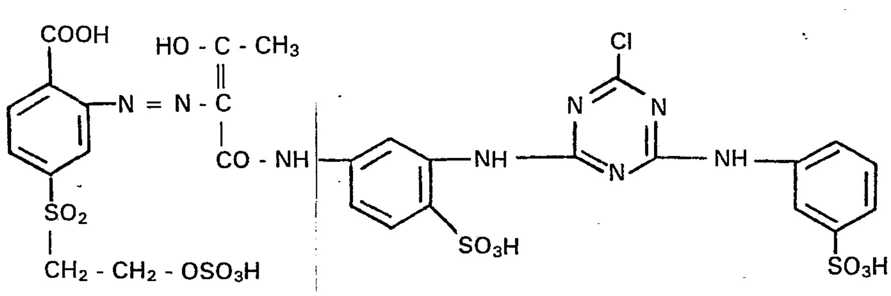

(G)

*Monoazoverbindung H:*

Eine neutrale Lösung von 34,8 Teilen einer auf übliche Weise hergestellten 2-Amino-4-(3'-chlor-5'-methoxy-s-triazinyl)-amino-phenol-6-sulfonsäure in 300 Teilen Wasser werden mit 20 Volumenteilen einer wässrigen 5n-Natriumnitritlösung versetzt und in eine Mischung aus 100 Teilen Eis mit 35 Teilen 31%iger Salzsäure eingerührt. Es wird noch 60 Minuten nachgerührt und überschüssige salpetrige Säure mit Amidosulfonsäure zerstört. Anschliessend gibt man zwecks Kupplung eine Lösung von 44,1 Teilen 2-(N-Methyl-N-β-sulfatoäthyl-sulfonyl)-8-amino-naphthol-6-sulfonsäure in Wasser hinzu, stellt den pH-Wert auf 6,8 und hält ihn bis zur Beendigung der Kupplungsreaktion.

*Herstellung der erfindungsgemässen asymmetrischen 1:2-Chromkomplexverbindung:*

Die beiden Lösungen der 1:1-Chromkomplexverbindung der Monoazoverbindung G und der Monoazoverbindung H werden miteinander vermischt und nach Einstellung des pH-Wertes auf 6,5 auf 98°C erhitzt. Diese Temperatur wird bis zur beendeten 1:2-Chromkomplexbildung gehalten, ebenso der pH-Wert auf 6,8 durch entsprechende Zugabe von Natriumcarbonat. Anschliessend wird der Reaktionsansatz filtriert und das Filtrat eingedampft.

Die erfindungsgemässe asymmetrische 1:2-Chromkomplexverbindung der Formel

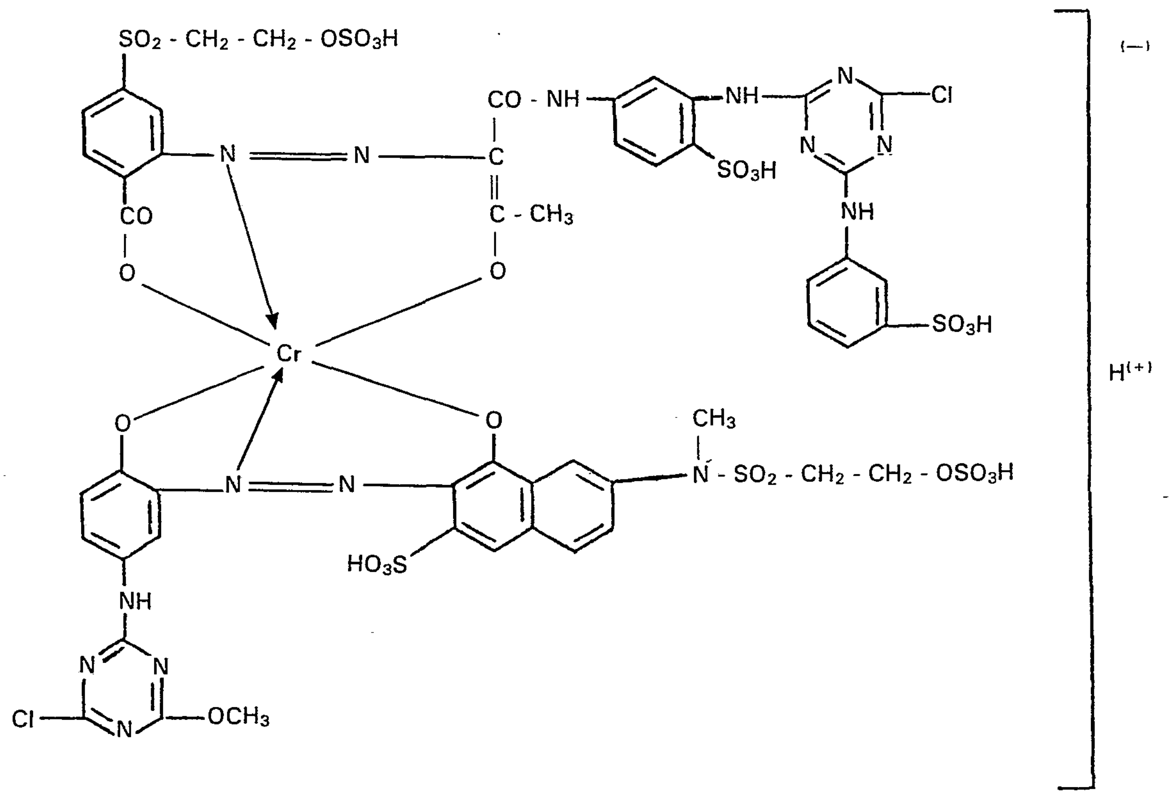

wird in Form ihres Natriumsalzes als olivgrünes Pulver erhalten, das noch anorganische Elektrolytsalze enthält. Diese Verbindung besitzt sehr gute faserreaktive Farbstoffeigenschaften und liefert beispielsweise im Druck auf Cellulosefasermaterialien nach den in der Technik üblichen Verfahren für faserreaktive Farbstoffe grüne Färbungen mit sehr guten Licht- und Nassechtheiten in sehr guter Fixierausbeute.

*Beispiel 13*

Zur Herstellung einer erfindungsgemässen asymmetrischen 1:2-Chromkomplex-Monoazoverbindung werden zunächst die beiden Ausgangsazoverbindungen getrennt hergestellt.

*1:1-Chromkomplex-Monoazoverbindung J:*

Zu einer wässrigen Diazoniumsalzlösung von 29,7 Teilen 2-Aminophenol-4-β-sulfatoäthylsulfon gibt man 23,9 Teile 2-Amino-5-naphthol-7-sulfonsäure und stellt den pH-Wert auf 7,0. Man rührt bei diesem pH-Wert und bei einer Temperatur von 15 bis 20°C bis zur beendeten Kupplungsreaktion weiter und isoliert die gebildete Monoazoverbindung durch Eindampfen. Das trockene Pulver wird sodann in 300 Volumenteile Diglykol eingerührt, mit soviel Teilen kristallisiertem Chrom(III)-chlorid, die 5,2 Teilen Chrom entsprechen, versetzt und unter Rühren bei 110°C bis zur beendeten Komplexbildung erhitzt. Nach Abkühlung auf Raumtemperatur gibt man 500 Teile Wasser hinzu, filtriert zur Klärung und stellt einen pH-Wert von 6,0 ein.

*Monoazoverbindung K:*

Zu einer wässrigen Diazoniumsalzlösung von 37,7 Teilen 2-Aminophenol-4-β-sulfatoäthylsulfon-6-sulfonsäure werden 18,9 Teile 1-(4'-Aminophenyl)-3-methyl-pyrazol-5-on gegeben; der pH-Wert dieses Kupplungsgemisches wird auf 6,5 gestellt. Bis zur Beendigung der Kupplungsreaktion rührt man bei

diesem pH-Wert und bei einer Temperatur von 15 bis 20°C weiter. Die hergestellte Monoazoverbindung hat, in Form der freien Säure geschrieben, die folgende Konstitution:

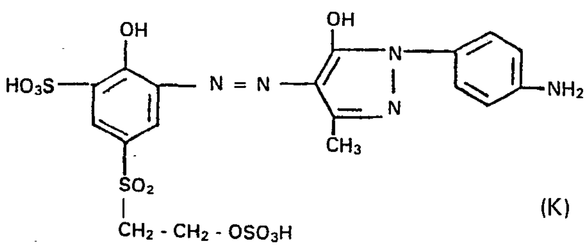

(K)

*Herstellung der erfindungsgemässen asymmetrischen 1:2-Chromkomplexverbindung:*

Die Mischung der beiden Lösungen der 1:1-Chromkomplexverbindung J und der Monoazoverbindung K wird unter Rühren langsam auf 60°C unter Konstanthalten des pH-Wertes bei 6,5 erhitzt, sodann bis zur beendeten 1:2-Chromkomplexbildung bei dieser Temperatur und bei diesem pH-Wert weitergerührt. Die gebildete 1:2-Chromkomplexverbindung wird bei einem pH-Wert von 2,0 durch Aussalzen isoliert und anschliessend in 500 Teilen Wasser unter Neutralisieren gelöst. 36,9 Teile Cyanurchlorid werden hinzugegeben, und die Acylierungsreaktion wird unter Rühren bei einem pH-Wert von 3,5 bis 4,0 und bei einer Temperatur von 20°C durchgeführt. Anschliessend wird die Syntheselösung zur Klärung filtriert und das Filtrat mit 34,6 Teilen Anilin-3-sulfonsäure versetzt. Zur Durchführung dieser zweiten Acylierungsreaktion wird der Ansatz auf einen pH von 6,6 bis 6,8 eingestellt, bei diesem pH bis zu dessen Konstantbleiben und einer Temperatur von etwa 20°C gerührt, sodann auf 50°C erhitzt und unter Rühren bei dieser Temperatur und bei einem pH von 6,7 weitergerührt, bis keine pH-Werte-Änderung mehr eintritt. Die so hergestellte erfindungsgemässe asymmetrische 1:2-Chromkomplexverbindung wird durch Aussalzen isoliert. Es wird ein dunkelbraunes Pulver erhalten, das neben Elektrolytsalz (vorwiegend Natriumchlorid) das Natriumsalz der Verbindung der Formel

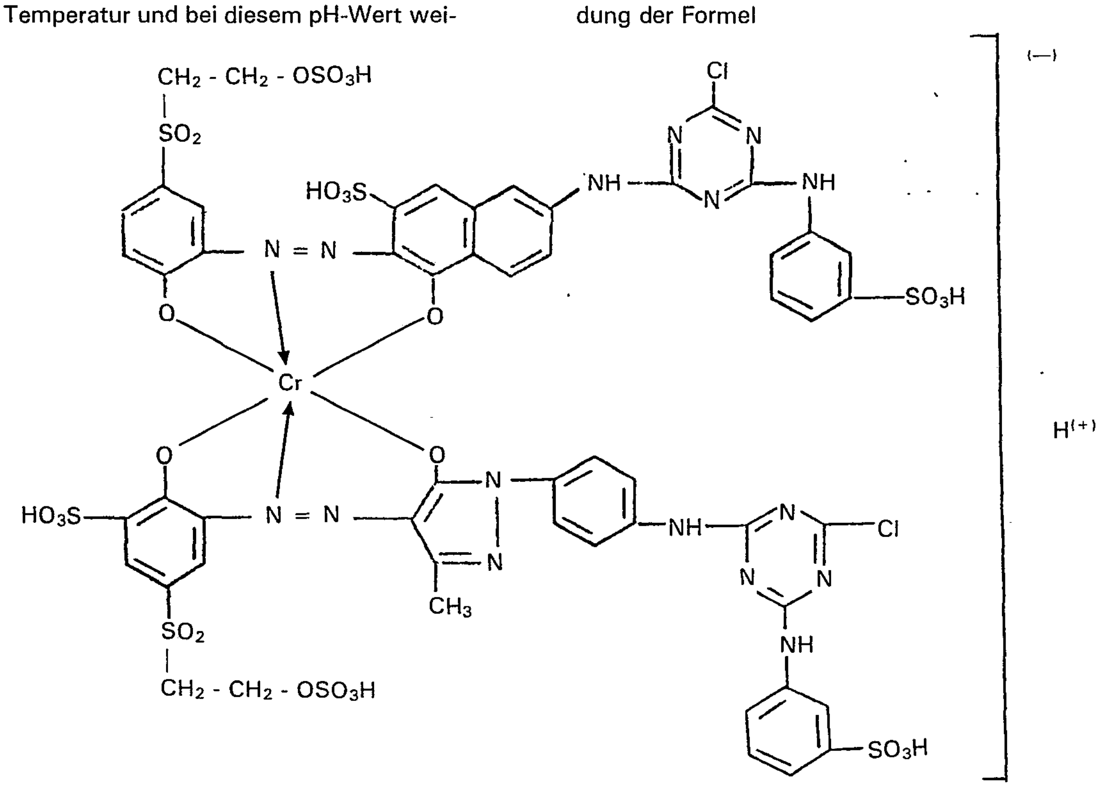

enthält. Diese zeigt sehr gute faserreaktive Farbstoffeigenschaften und liefert beispielsweise nach den Druckmethoden für faserreaktive Farbstoffe auf Cellulosefasern braune Färbungen mit guten Lichtechtheiten und sehr guten Nassechtheiten bei sehr guter Fixierausbeute.

*Beispiele 14 bis 33*

In den nachfolgenden Tabellenbeispielen sind weitere erfindungsgemässe symmetrische 1:2-Metallkomplex-Monoazoverbindungen mit Hilfe ihrer Komponenten, d.h. der dort angegebenen Monoazoverbindung und dem dort angegebenen komplexbildenden Metall, beschrieben. Sie lassen sich aus den entsprechenden kobalt- oder chromabgebenden Verbindungen (Salzen) und den aus der Monoazoverbindung ersichtlichen Komponenten (Diazo- und Kupplungskomponenten, Chlortriazin-Derivaten) in erfindungsgemässer Weise, wie beispielsweise nach einer in den obigen Beispielen 1 bis 7 beschriebenen Verfahrensvarianten, herstellen. Sie werden vorzugsweise in Form ihrer Alkalimetallsalze, wie Natrium- oder Kaliumsalze, isoliert und liefern auf den in der Beschreibung genannten Materialien, wie insbesondere Cellulosefasermaterialien, beispielsweise Baumwolle, nach den in der Technik für faserreaktive Farbstoffe üblichen Applikations- und Fixiermethoden farbstarke Färbungen und Drucke mit guten bis sehr guten Licht- und Nassechtheiten bei hoher Fixierausbeute in dem in dem jeweiligen Tabellenbeispiel für die Färbung auf Baumwolle angegebenen Farbton.

| Bsp. | Symmetrische 1:2-Metallkomplexverbindung der metallfreien Verbindung der Formel | Komplex-metall | Farbton |
|---|---|---|---|
| 14 | 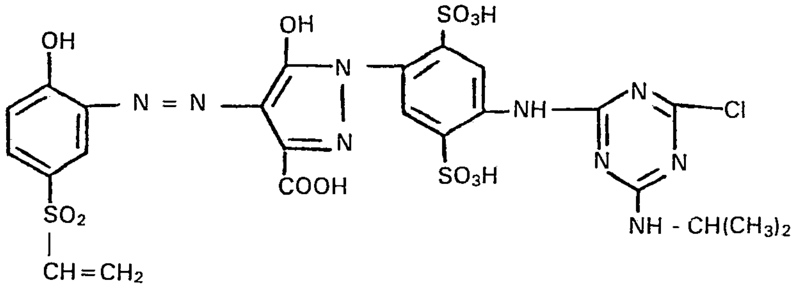 | Cr | orange |
| 15 | 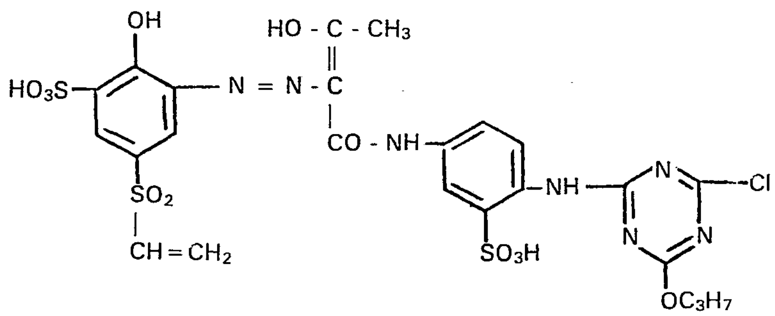 | Co | gelb |
| 16 | 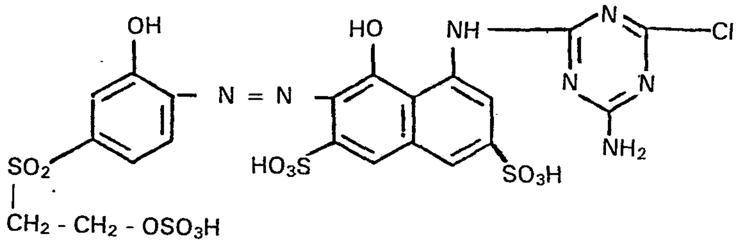 | Cr | grau |
| 17 | 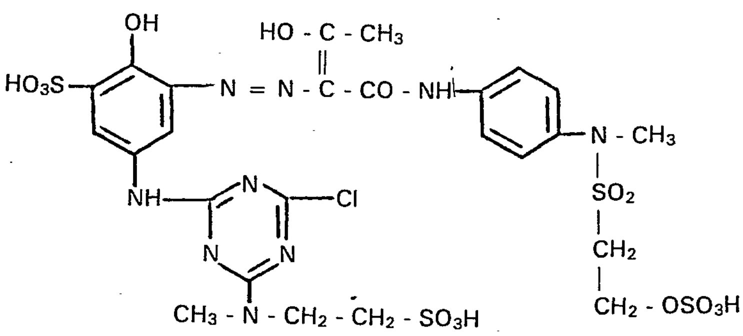 | Co | rotst. gelb |
| 18 | 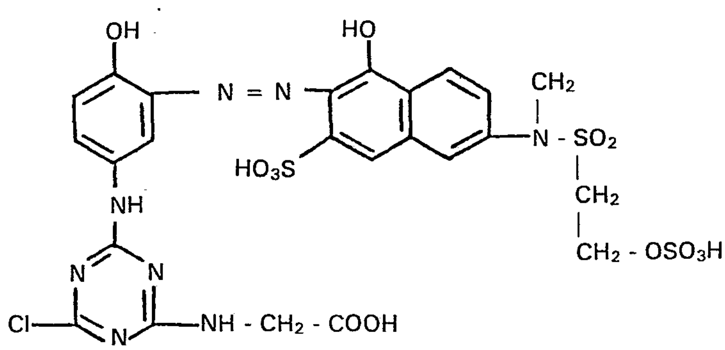 | Cr | grau |

| Bsp. | Symmetrische 1:2-Metallkomplexverbindung der metallfreien Verbindung der Formel | Komplex-metall | Farbton |
|---|---|---|---|
| 19 | 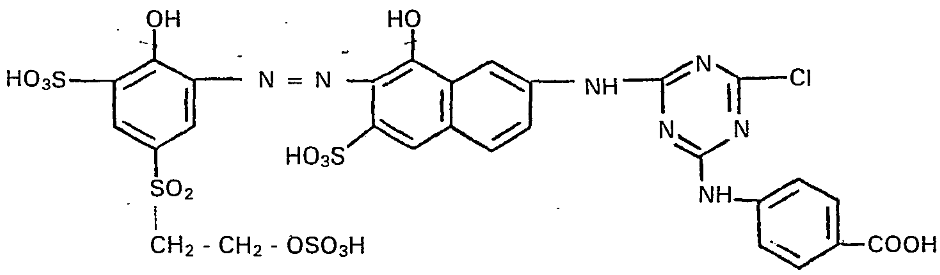 | Co | bordo |
| 20 | 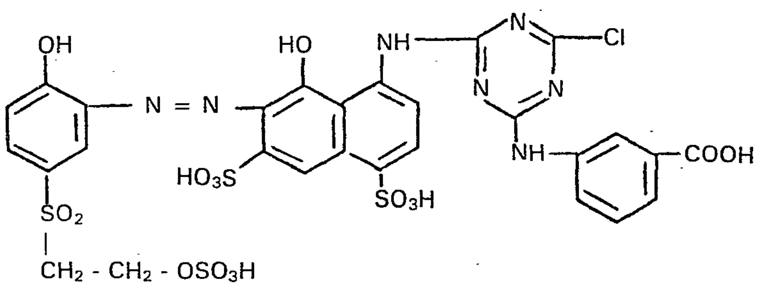 | Cr | grau |
| 21 | 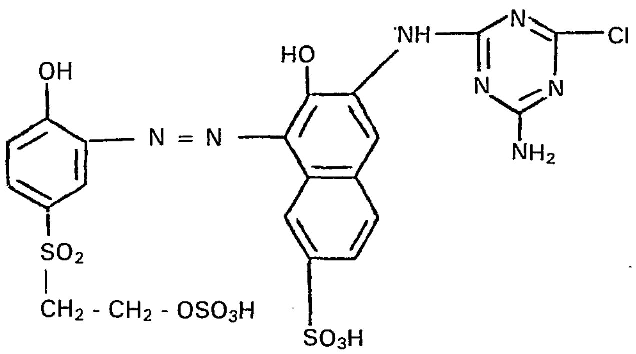 | Co | braun |
| 22 | 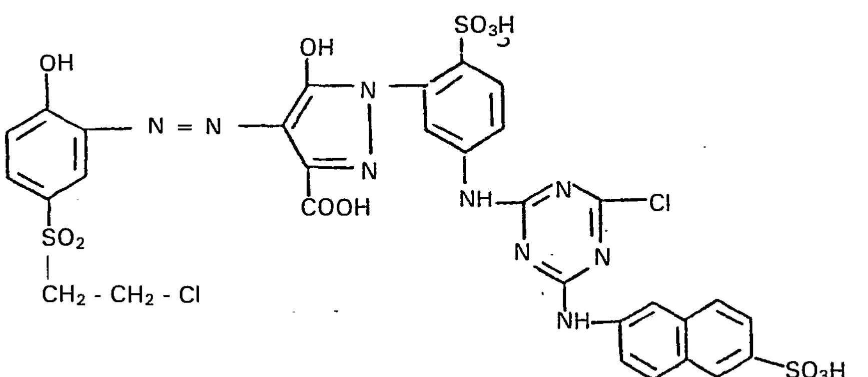 | Co | orange |
| 23 | 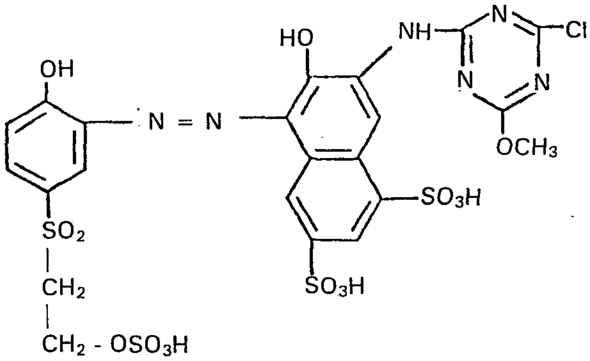 | Co | braun |

| Bsp. | Symmetrische 1:2-Metallkomplexverbindung der metallfreien Verbindung der Formel | Komplex-metall | Farbton |
|---|---|---|---|
| 24 | 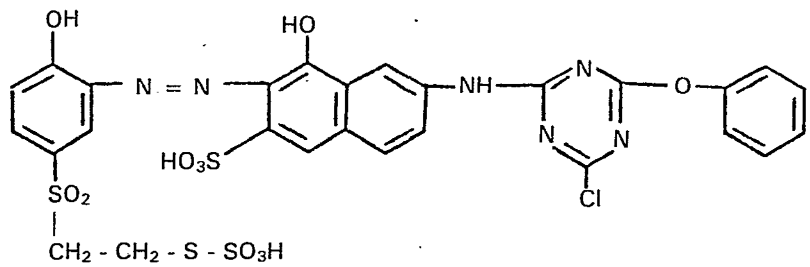 | Cr | rotst. grau |
| 25 | 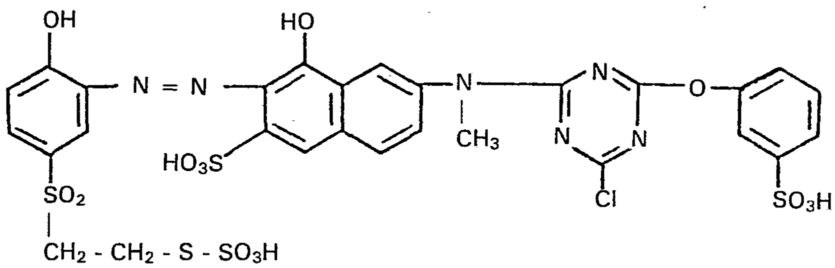 | Co | rotst. grau |
| 26 | 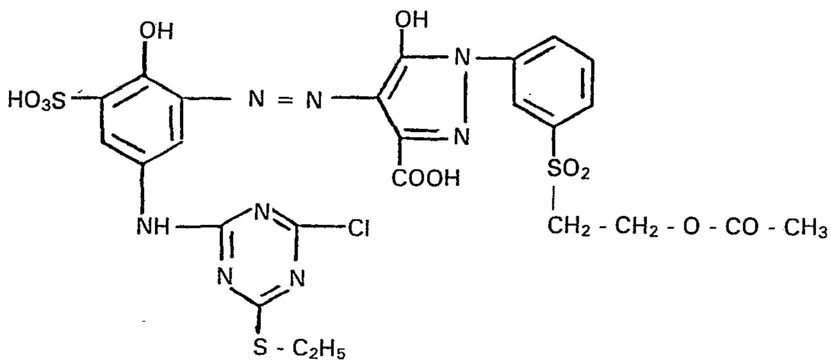 | Co | gelb |
| 27 | 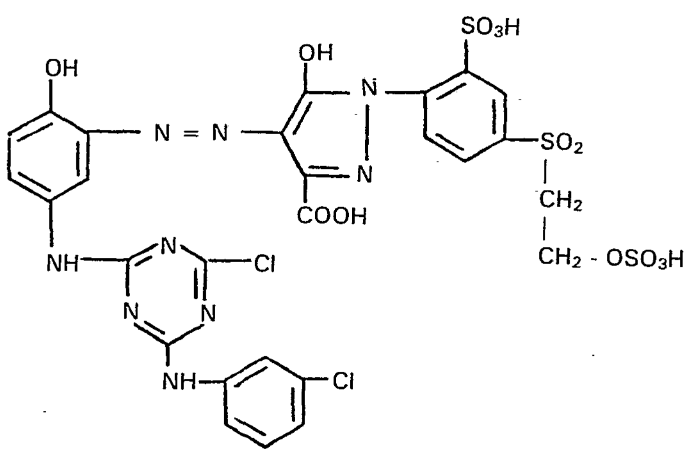 | Cr | orange |

| Bsp. | Symmetrische 1:2-Metallkomplexverbindung der metallfreien Verbindung der Formel | Komplex-metall | Farbton |
|---|---|---|---|
| 28 | 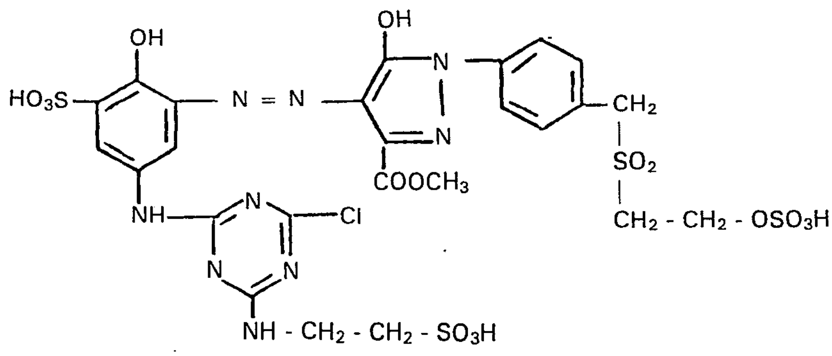 | Co | rotst. gelb |
| 29 | 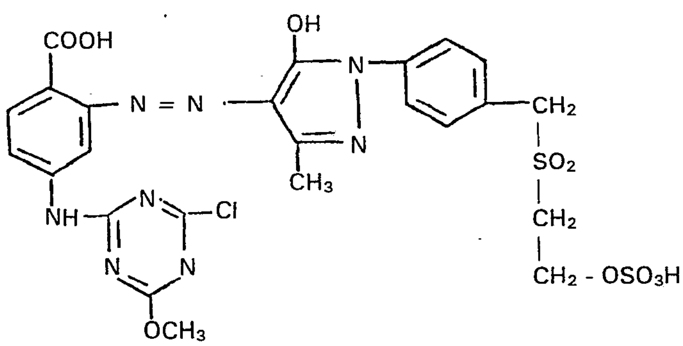 | Co | gelb |
| 30 | 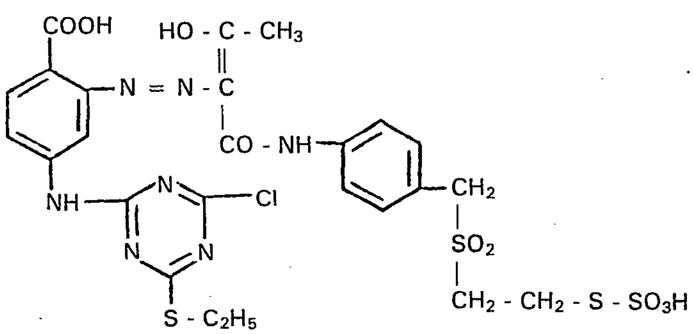 | Co | gelb |
| 31 | 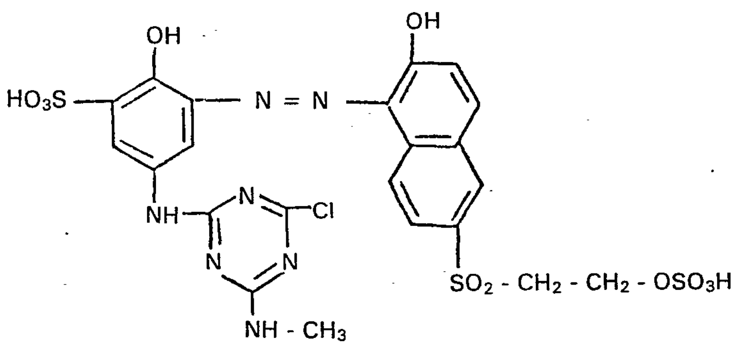 | Cr | violett |

| Bsp. | Symmetrische 1:2-Metallkomplexverbindung der metallfreien Verbindung der Formel | Komplex-metall | Farbton |
|---|---|---|---|
| 32 | 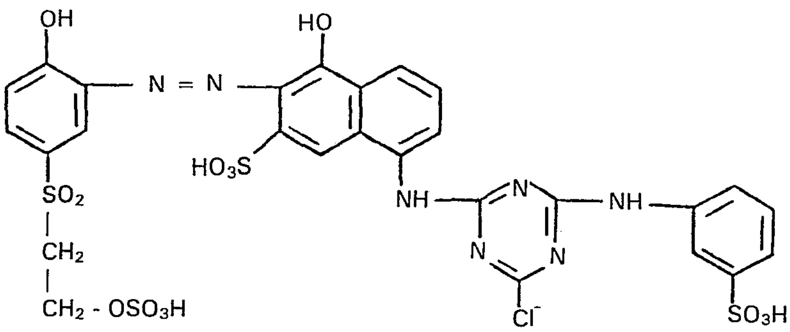 | Cr | grau |
| 33 | 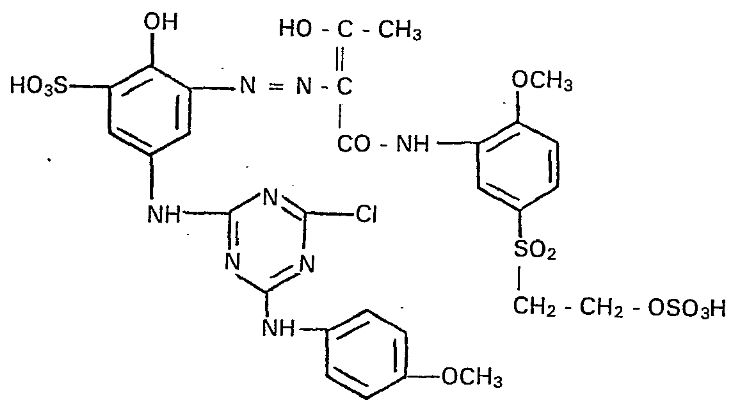 | Co | gelb |

*Beispiele 34 bis 48*

In den nachfolgenden Tabellenbeispielen sind weitere erfindungsgemässe 1:2-Kobalt- und 1:2-Chrommischkomplexe mit Hilfe ihrer Komponenten, d.h. der beiden metallfreien Monoazoverbindungen und dem komplexbildenden Metall, beschrieben. Sie bestehen aus den beiden erfindungsgemässen symmetrischen 1:2-Kobalt- bzw. 1:2-Chromkomplex-Monoazoverbindungen der jeweilig angegebenen metallfreien Monoazoverbindungen und der erfindungsgemässen asymmetrischen 1:2-Kobalt- bzw. 1:2-Chromkomplex-Monoazoverbindungen dieser beiden metallfreien Monoazoverbindungen und lassen sich aus den Gemischen dieser beiden metallfreien Mono-Ausgangsverbindungen und einer entsprechenden metallabgebenden Verbindung (Salz) in erfindungsgemässer Weise, wie beispielsweise nach einer in den obigen Beispielen 8 oder 9 beschriebenen Verfahrensvarianten, herstellen. Sie werden vorzugsweise in Form ihrer Alkalimetallsalze, wie Natriumsalze, isoliert und zeigen ebenfalls sehr gute faserreaktive Farbstoffeigenschaften. Auf den in der Beschreibung genannten Materialien, wie insbesondere Cellulosefasermaterialien, beispielsweise Baumwolle, liefern sie nach den in der Technik üblichen Applikations- und Fixiermethoden für faserreaktive Farbstoffe farbstarke Färbungen und Druck mit guten bis sehr guten Echtheiten in hoher Fixierausbeute in dem in dem jeweiligen Tabellenbeispiel für die Färbung auf Baumwolle angegebenen Farbton.

| Bsp. | 1:2-Metallmischkomplex entspr. Formel (1) mit ... metallfreier Azoverbindung von Beispiel Nr. ... | metallfreier Azoverbindung von Beispiel Nr. ... | Komplex-metall | Farbton |
|---|---|---|---|---|
| 34 | 12, Verbindung G | 13, die N-(2-m-Sulfo-phenylamino--4-chlor-s-triazin-6-yl)--Verbindung von Verbindung K | Co | gelb |
| 35 | 13, die N-(2-m-Sulfo-phenyl--amino-4-chlor-s-triazin-6-yl)--Verbindung von Verbindung K | 14 | Co | gelb |
| 36 | 15 | 16 | Cr | braun |
| 37 | 16 | 17 | Cr | braun |
| 38 | 18 | 19 | Cr | grau |
| 39 | 16 | 20 | Cr | grau |
| 40 | 14 | 22 | Cr | orange |
| 41 | 22 | 24 | Cr | braun |
| 42 | 18 | 27 | Co | braun |
| 43 | 26 | 28 | Co | rotst. gelb |
| 44 | 16 | 30 | Cr | grün |
| 45 | 14 | 22 | Co | rotst. gelb |
| 46 | 19 | 33 | Cr | oliv |
| 47 | 33 | 27 | Cr | rotst. gelb |
| 48 | 33 | 30 | Co | gelb |

*Beispiele 49 bis 58*

In den nachfolgenden Tabellenbeispielen sind weitere erfindungsgemässe asymmetrische 1:2-Chrom- und 1:2-Kobaltkomplex-Monoazoverbindungen mit Hilfe ihrer Komponenten, d.h. der dort angegebenen 1:1-Chrom- bzw. 1:1-Kobaltkomplex-Monoazoverbindung, die jeweils in Form ihrer freien Säure geschrieben sind, und der metallfreien Monoazoverbindung, beschrieben. Sie lassen sich aus diesen Ausgangsverbindungen in erfindungsgemässer Weise, wie beispielsweise in einer in den obigen Beispielen 10 bis 13 beschriebenen Verfahrensvarianten, herstellen. Sie werden vorzugsweise in Form ihrer Alkalimetallsalze, wie Natrium- oder Kaliumsalze, isoliert und zeigen ebenfalls sehr gute faserreaktive Farbstoffeigenschaften. Sie liefern auf den in der Beschreibung genannten Materialien, wie insbesondere Cellulosefasermaterialien, beispielsweise Baumwolle, nach den in der Technik üblichen Applikations- und Fixiermethoden farbstarke Färbungen und Drucke mit guten bis sehr guten Echtheiten und hoher Fixierausbeute in den in dem jeweiligen Tabellenbeispiel für die Färbung auf Baumwolle angegebenen Farbton.

| Bsp. | asymmetrische 1:2-Metallkomplexe entsprechend der Formel (1) mit ... 1:1-Metallkomplexazoverbindung der Formel... | metall-freier Mono-azoverb. von Bsp. Nr. ... | Farbton |
|---|---|---|---|
| 49 | 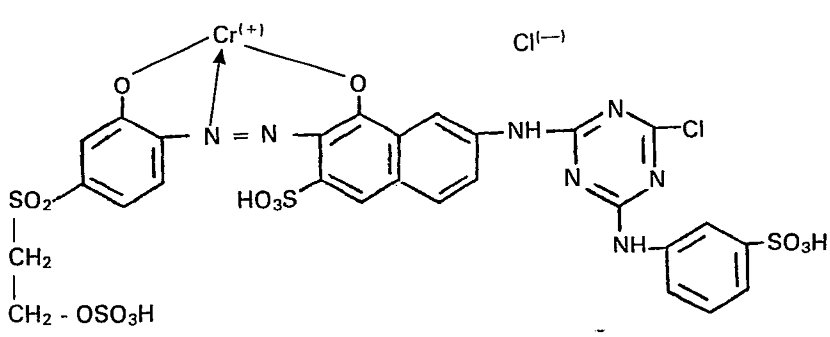 | 22 | braun |

| Bsp. | asymmetrische 1:2-Metallkomplexe entsprechend der Formel (1) mit ...<br>1:1-Metallkomplexazoverbindung der Formel... | metall-freier Mono-azoverb. von Bsp. Nr. ... | Farbton |
|---|---|---|---|
| 50 | dito | 30 | grün |
| 51 | 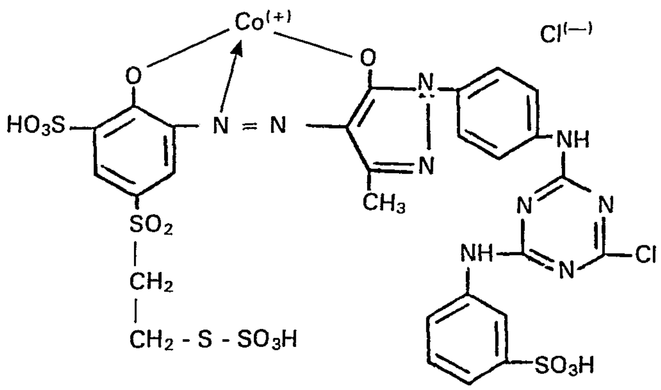 | 16 | braun |
| 52 | dito | 18 | braun |
| 53 | 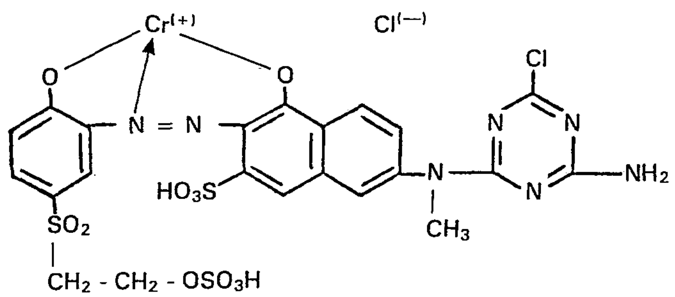 | 17 | braun |
| 54 | dito | 33 | braun |
| 55 | 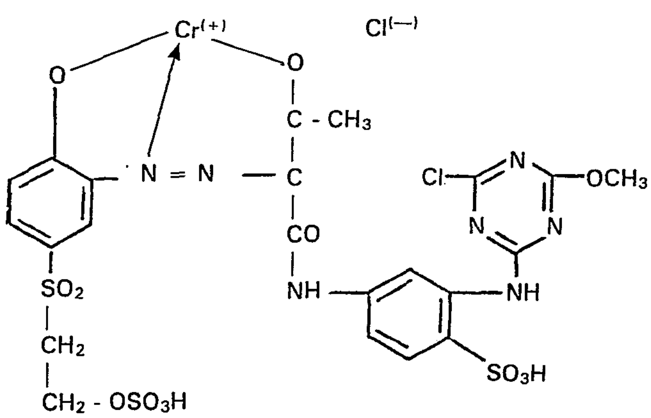 | 19 | braun |
| 56 | dito | 22 | gelb |
| 57 | dito | 26 | gelb |
| 58 | dito | 25 | braun |

**Patentansprüche:**

1. Wasserlösliche, symmetrische oder asymmetrische 1:2-Chromkomplex- und 1:2-Kobaltkomplex-Azoverbindungen von Monoazoverbindungen der allgemeinen Formel (1)

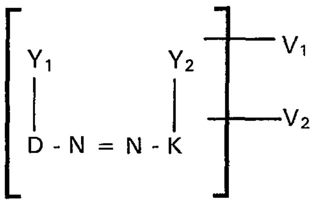

(1)

oder deren 1:2-Chrom- und 1:2-Kobaltmischkomplexe worin bedeuten:

$Y_1$ ist eine zur Metallkomplexbildung befähigte Gruppe, die in ortho-Stellung zur Azobrücke an D gebunden ist;

$Y_2$ ist eine zur Metallkomplexbildung befähigte Gruppe, die an K in ortho-Stellung zur Azogruppe gebunden ist;

D ist der Rest einer Diazokomponente, an den die nachstehend definierte faserreaktive Gruppe $V_1$ oder die nachstehend definierte faserreaktive Gruppe $V_2$ gebunden ist;

K ist der Rest einer Kupplungskomponente, an den die nachstehend definierte faserreaktive Gruppe $V_1$ oder die nachstehend definierte faserreaktive Gruppe $V_2$ gebunden ist;

$V_1$ ist eine Gruppe der allgemeinen Formel (2a)

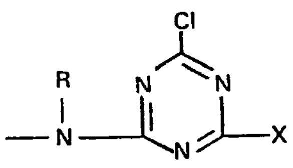

(2a),

die an D oder K gebunden ist, in welcher

R ein Wasserstoffatom oder eine Alkylgruppe von 1 bis 4 C-Atomen ist und

X eine gegebenenfalls substituierte Aminogruppe oder ggf. verätherte Hydroxygruppe oder eine Thioäthergruppe bedeutet;

$V_2$ ist eine Gruppe der allgemeinen Formel (2b)

$$- W - SO_2 - Z \qquad (2b),$$

die an D oder K gebunden ist und in welcher

W ist eine direkte Bindung oder eine Gruppe der Formel

- NH -, - N -, - $CH_2$ - oder - $CH_2$ - $CH_2$ - ist,
|
Alk

worin Alk eine $C_1$-$C_4$ Alkylgruppe ist;

Z ist die Vinyl-, die β-Sulfatoäthyl-, die β-Thiosulfatoäthyl-, die β-Chloräthyl- oder die β-Acetoxyäthyl-Gruppe.

2. Verbindungen nach Anspruch 1, dadurch gekennzeichnet, dass D ein Benzolkern ist, dessen in ortho-Stellung zur Azogruppe stehende Gruppe $Y_1$ eine Carboxygruppe oder eine Hydroxygruppe ist und an den die in Anspruch 1 definierte faserreaktive Gruppe $V_1$ oder die in Anspruch 1 definierte faserreaktive Gruppe $V_2$ gebunden ist und der noch durch einen Substituenten aus der Gruppe Sulfo, Alkyl von 1 bis 4 C-Atomen, Alkoxy von 1 bis 4 C-Atomen, Nitro, Carboxy, Sulfamoyl, Carbamoyl, durch Alkyl von 1 bis 4 C-Atomen mono- oder disubstituiertes Carbamoyl oder Sulfamoyl, N-Phenyl-carbamoyl, N-Phenyl-sulfamoyl, N-Methyl-N-phenyl-carbamoyl, N-Methyl-N-phenyl-sulfamoyl, Chlor und Brom substituiert sein kann.

3. Verbindungen nach Anspruch 1, dadurch gekennzeichnet, dass D ein Benzolkern ist, dessen in ortho-Stellung zur Azogruppe stehende Gruppe $Y_1$ die Hydroxygruppe ist und an den in Anspruch 1 definierte faserreaktive Gruppe $V_1$ oder die in Anspruch 1 definierte faserreaktive Gruppe $V_2$ gebunden ist und der noch durch Substituenten aus der Gruppe Sulfo, Methyl, Äthyl, Methoxy, Äthoxy, Carboxy und Chlor substituiert sein kann, oder dass D ein Naphthalinkern ist, dessen in ortho-Stellung zur Azogruppe befindliche Gruppe $Y_1$ die Hydroxygruppe ist und an den die in Anspruch 1 definierte faserreaktive Gruppe $V_1$ oder $V_2$ gebunden ist und der noch durch eine oder zwei Sulfogruppen substituiert sein kann.

4. Verbindungen nach Anspruch 1, dadurch gekennzeichnet, dass -K-$Y_2$ ein Naphtholrest ist, an den, an K gebunden, die in Anspruch 1 definierte faserreaktive Gruppe $V_1$ oder $V_2$ gebunden ist und an den die Azogruppe in ortho-Stellung zur Hydroxygruppe steht und in dem der Naphthalinkern K noch durch eine oder zwei Sulfogruppen substituiert sein kann.

5. Verbindungen nach Anspruch 1, dadurch gekennzeichnet, dass -K-$Y_2$ ein 1-Phenyl- oder 1-Naphthyl-pyrazol-5-on-4-yl-Rest ist, an den die Azogruppe in 4-Stellung gebunden ist und der in 3-Stellung durch Carbamoyl, niederes Carbalkoxy, Phenyl, Methyl oder Carboxy substituiert ist und dessen in 1-Stellung befindlicher Phenylrest durch die in Anspruch 1 definierte faserreaktive Gruppe $V_1$ oder $V_2$ substituiert ist und noch durch einen oder zwei Substituenten aus der Gruppe Alkyl von 1 bis 4 C-Atomen, Alkoxy von 1 bis 4 C-Atomen, Chlor, Brom, Alkanoylamino von 1 bis 4 C-Atomen im Alkylrest, Carboxy und Sulfo substituiert sein kann, und dessen in 1-Stellung befindlicher Naphthylrest durch die in Anspruch 1 definierte Gruppe $V_1$ oder $V_2$ substituiert ist und noch durch eine Sulfogruppe und einen Substituenten aus der Gruppe Methyl, Äthyl, Methoxy, Äthoxy, Alkanoylamino von 1 bis 4 C-Atomen im Alkylrest, Carboxy und Chlor oder durch eine oder zwei Sulfogruppen substituiert sein kann.

6. Verbindungen nach Anspruch 1, dadurch gekennzeichnet, dass -K-$Y_2$ ein Rest der Formel

HO
|
C - $CH_3$
||
- C - CO - NH - Phenyl

oder

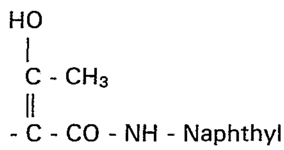

bedeutet, in welchen der Phenylrest «Phenyl» durch die in Anspruch 1 definierte faserreaktive Gruppe $V_1$ oder $V_2$ substituiert ist und noch durch einen oder zwei Substituenten aus der Gruppe Alkyl von 1 bis 4 C-Atomen, Alkoxy von 1 bis 4 C-Atomen, Chlor, Carboxy, Sulfo, Carbamoyl und Sulfamoyl substituiert sein kann, und in welchen der Naphthylrest «Naphthyl» durch die in Anspruch 1 definierte faserreaktive Gruppe $V_1$ oder $V_2$ substituiert ist und noch durch eine Sulfogruppe und einen Substituenten aus der Gruppe Methyl, Äthyl, Methoxy, Äthoxy, Chlor und Carboxy oder durch eine oder zwei Sulfogruppen substituiert sein kann.

7. Verbindungen nach Anspruch 1, dadurch gekennzeichnet, dass X eine niedere Alkoxygruppe, eine Phenoxygruppe, die durch eine oder zwei Sulfogruppen substituiert sein kann, die Aminogruppe, eine durch eine niedere Alkylgruppe mono- oder disubstituierte Aminogruppe oder eine durch eine niedere Alkylgruppe und einen niederen Carboxyalkyl- oder niederen Sulfoalkyl-Rest substituierte Aminogruppe bedeutet oder eine Phenylamino- oder Naphthylaminogruppe ist, wobei deren Phenyl- und Naphthylreste noch durch Methyl, Methoxy, Chlor, Carboxy und/oder Sulfo und deren Stickstoffatom noch durch eine niedere Alkylgruppe substituiert sein können.

8. Verbindungen nach Anspruch 1 der allgemeinen Formel

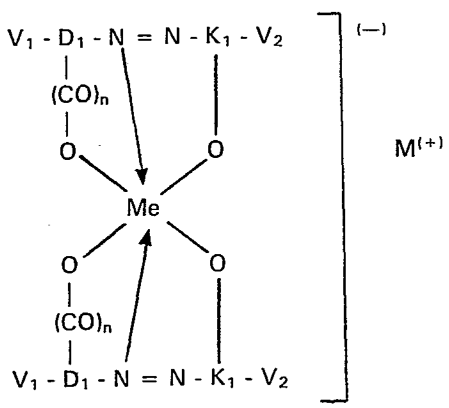

(6)

oder der allgemeinen Formel

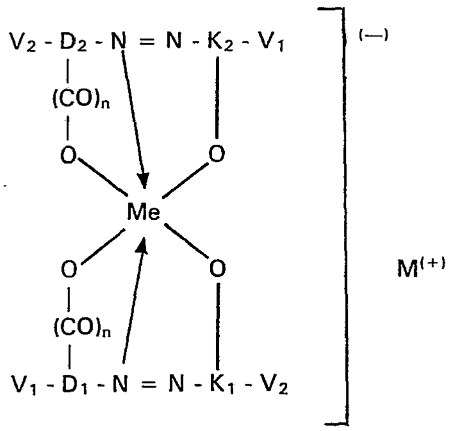

(7)

oder der allgemeinen Formel

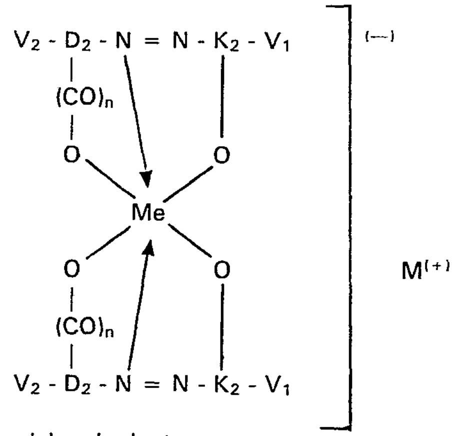

(8)

in welchen bedeuten:

M ist ein Wasserstoffatom oder das Äquivalent eines ein- oder zweiwertigen Metalls;

Me ist das Chrom- oder Kobaltatom;

n ist die Zahl Null oder 1;

$V_1$ ist die in Anspruch 1 genannte Gruppe der Formel (2a), wobei R ein Wasserstoffatom ist und X für eine Aminogruppe der allgemeinen Formel $-NR^3R^4$ steht, in welcher $R^3$ ein Wasserstoffatom oder eine niedere Alkylgruppe bedeutet, die durch eine Carboxy- oder Sulfogruppe substituiert sein kann, und $R^4$ ein Wasserstoffatom oder eine niedere Alkylgruppe ist, die durch eine Carbonsäure- oder Sulfonsäuregruppe oder einen gegebenenfalls durch Sulfo substituierten Phenylrest substituiert sein kann, oder einen Phenylrest bedeutet, der durch 1 oder 2 Substituenten aus der Gruppe Sulfo, Carboxy, Methyl, Äthyl, Methoxy, Äthoxy und Chlor substituiert sein kann, wobei die beiden Formelglieder $R^3$ und $R^4$ gleiche oder voneinander verschiedene Bedeutungen besitzen können;

$V_2$ hat die Bedeutung der in Anspruch 1 definierten Gruppe der allgemeinen Formel (2b);

$D_1$ ist der Benzolrest, in welchem die Carbonyloxy- bzw. Oxygruppe in ortho-Stellung zur Azogruppe gebunden ist und der neben diesen beiden Gruppen und der Gruppe $V_1$ keinen weiteren Substituenten enthält oder noch durch eine Sulfo-, Methyl-, Äthyl-, Methoxy-, Äthoxy-, Carboxy-, Sulfamoyl- oder Carbamoylgruppe oder durch ein Chlor- oder Bromatom substituiert ist, oder $D_1$ ist ein Naphthalinrest, in welchem die Carbonyloxy- bzw. Oxygruppe in ortho-Stellung zur Azogruppe gebunden ist und neben diesen beiden Gruppen und der Gruppe $V_1$ noch eine oder zwei Sulfogruppen als zusätzlichen Substituenten enthalten kann;

$D_2$ ist der Benzolrest, in welchem die Carbonyloxy- bzw. Oxygruppe in ortho-Stellung zur Azogruppe gebunden ist und der neben diesen beiden Gruppen und der Gruppe $V_2$ keinen weiteren Substituenten enthält oder noch durch eine Methyl-, Äthyl-, Methoxy-, Äthoxy-, Nitro-, Carboxy-, Sulfamoyl- oder Carbamoylgruppe oder durch ein Chlor- oder Bromatom oder eine Sulfogruppe substituiert ist, oder $D_2$ ist ein Naphthalinrest, in welchem die Carbonyloxy- bzw. Oxygruppe in ortho-Stellung zur Azogruppe gebunden ist und der neben diesen beiden Gruppen und der Gruppe $V_2$ noch eine Sulfogruppe enthalten kann;

$K_1$ ist ein Naphthalinrest, in welchem die Oxygruppe in ortho-Stellung zur Azogruppe gebunden ist und der neben diesen beiden Gruppen und der Gruppe $V_2$ noch eine Sulfogruppe als weiteren Substituenten enthalten kann, oder

$K_1$ ist der Rest des 1-Phenyl- oder 1-Naphthyl--pyrazol-4,5-ylens, der in 3-Stellung durch Carbamoyl, niederes Carbalkoxy, Phenyl, Methyl oder Carboxy substituiert ist und dessen in 1-Stellung befindlicher Phenylrest neben der Gruppe $V_2$ keinen weiteren Substituenten enthält oder noch durch 1 oder 2 Substituenten aus der Gruppe Methyl, Äthyl, Methoxy, Äthoxy und Chlor und/oder durch 1 Substituenten aus der Gruppe Brom, Carboxy und Sulfo oder durch 1 Substituenten aus der Gruppe Methyl, Äthyl, Methoxy, Äthoxy und Chlor und durch 1 Sulfogruppe substituiert ist, und dessen Naphthylrest neben der Gruppe $V_2$ keinen weiteren Substituenten enthält oder noch durch eine oder zwei Sulfogruppen substituiert ist, oder

$K_1$ steht als Rest einer Kupplungskomponente für den Rest des Acetoacetylaminobenzols oder Acetoacetylaminonaphthalins, wobei der Benzolrest neben der Gruppe $V_2$ keinen weiteren Substituenten enthält oder noch durch einen oder zwei Substituenten aus der Gruppe Methyl, Äthyl, Methoxy, Äthoxy und Chlor und/oder durch 1 Substituenten aus der Gruppe Brom, Carboxy und Sulfo oder durch einen Substituenten aus der Gruppe Methyl, Äthyl, Methoxy, Äthoxy und Chlor und durch 1 Sulfogruppe substituiert ist, und der Naphthylrest neben der Gruppe $V_2$ keinen weiteren Substituenten enthält oder noch durch eine oder zwei Sulfogruppen substituiert ist;

$K_2$ ist ein Naphthalinrest, in welchem die Oxygruppe in ortho-Stellung zur Azogruppe gebunden ist und der neben der Gruppe $V_1$ noch durch eine oder zwei Sulfogruppen substituiert ist, oder

$K_2$ ist der 1-Phenyl- oder 1-Naphthyl-pyrazol-4,5--ylen-Rest, der in 3-Stellung durch Carbamoyl, niederes Carbalkoxy, Phenyl, Methyl oder Carboxy substituiert ist und dessen in 1-Stellung befindlicher Phenylrest neben der Gruppe $V_1$ keinen weiteren Substituenten gebunden enthält oder neben $V_1$ noch durch 1 oder 2 Substituenten aus der Gruppe Methyl, Äthyl, Methoxy und Äthoxy und/oder durch 1 Substituenten aus der Gruppe Chlor, Carboxy und Sulfo oder durch 1 Substituenten aus der Gruppe Methyl, Äthyl, Methoxy, Äthoxy und Chlor und durch 1 Sulfogruppe substituiert ist, und dessen in 1-Stellung befindlicher Naphthylrest neben der Gruppe $V_1$ keinen weiteren Substituenten gebunden enthält oder neben $V_1$ noch durch eine oder zwei Sulfogruppen substituiert ist, oder

$K_2$ steht als Rest einer Kupplungskomponente für den Rest des Acetoacetylaminobenzols oder Acetoacetylaminonaphthalins, wobei der Benzolrest neben der Gruppe $V_1$ keinen weiteren Substituenten gebunden enthält oder neben $V_1$ noch durch einen oder zwei Substituenten aus der Gruppe Methyl, Äthyl, Methoxy, Äthoxy und Chlor und/oder durch eine Carboxy- oder Sulfogruppe oder durch einen Substituenten aus der Gruppe Methyl, Äthyl, Methoxy, Äthoxy und Chlor und durch 1 Sulfogruppe substituiert ist, und dessen Naphthylrest neben der Gruppe $V_1$ keinen weiteren Substituenten gebunden enthält oder neben $V_1$ noch durch eine oder zwei Sulfogruppen substituiert ist.

9. Verbindungen nach Anspruch 1 oder 8, dadurch gekennzeichnet, dass n jeweils für die Zahl Null steht.

10. Verbindungen nach Anspruch 8, dadurch gekennzeichnet, dass $M^{(+)}$ das Natriumion oder das Kaliumion oder das Äquivalent des Calciumions ist.

11. Verbindungen nach Anspruch 1 oder 8, dadurch gekennzeichnet, dass $V_1$ die in Anspruch 1 genannte Gruppe der Formel (2a) bedeutet, in welcher R ein Wasserstoffatom ist und X für eine niedere Alkoxygruppe steht.

12. Verbindungen nach Anspruch 8 der dort angegebenen allgemeinen Formel (8), dadurch gekennzeichnet, dass n für die Zahl Null steht, $V_1$ die in Anspruch 1 beschriebene Gruppe der Formel (2a) bedeutet, in welcher R ein Wasserstoffatom ist und X die Aminogruppe oder eine Phenylaminogruppe oder eine N-Methyl- oder N-Äthyl-phenylamino-Gruppe oder eine durch eine oder zwei Sulfogruppen substituierte Phenylaminogruppe ist, $V_2$ die in Anspruch 1 genannte und definierte Gruppe der Formel (2b) bedeutet, $D_2$ der Benzolrest ist, in welchem die Oxygruppe in ortho-Stellung zur Azogruppe gebunden ist und der neben dieser Oxygruppe und der Gruppe $V_2$ keinen weiteren Substituenten enthält oder noch durch eine Sulfogruppe als zusätzlichen Substituenten substituiert ist, $K_2$ ein Naphthalinrest ist, in welchem die Oxygruppe in ortho-Stellung zur Azogruppe gebunden ist und der neben der Gruppe $V_1$ noch durch eine oder zwei Sulfogruppen substituiert ist, und $M^{(+)}$ und Me die in Anspruch 8 genannten Bedeutungen haben.

13. Verbindungen nach einem der Ansprüche 1 bis 12, dadurch gekennzeichnet, dass $V_2$ für die Vinylsulfonyl- oder die β-Sulfatoäthylsulfonyl-Gruppe steht.

14. Verfahren zur Herstellung der in Anspruch 1 genannten und definierten Metallkomplexverbindungen und Metallmischkomplexe, dadurch gekennzeichnet, dass man eine metallfreie Verbindung der in Anspruch 1 definierten allgemeinen Formel (1) oder der allgemeinen Formel (3)

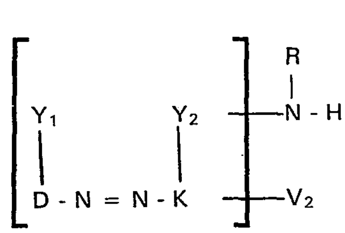
(3)

in welcher $Y_1$, $Y_2$, R und $V_2$ die in Anspruch 1 genannten Bedeutungen haben und D den Rest einer Diazokomponente darstellt, an die die Aminogruppe der Formel -N(R)H oder die Gruppe der Formel $V_2$ gebunden ist, und K den Rest einer Kupplungskomponente bedeutet, an die die Aminogruppe der Formel -N(R)H oder die Gruppe $V_2$ gebunden ist, oder zwei voneinander verschiedene Verbindungen der allgemeinen Formel (1) oder (3) mit einem chrom- oder kobaltabgebenden Mittel umsetzt, wobei man im Falle der Verwendung einer Verbindung der allgemeinen

Formel (3) die erhaltenen Metallkomplexverbindungen oder Metallmischkomplexe mit Cyanurchlorid monoacyliert und anschliessend mit einer Verbindung der allgemeinen Formel H-X mit X der in Anspruch 1 genannten Bedeutung umsetzt oder mit einer Verbindung der allgemeinen Formel (4)

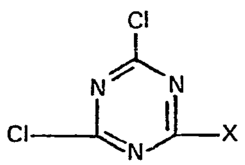

(4)

in welcher X die in Anspruch 1 genannte Bedeutung besitzt, umsetzt, oder
dass man eine 1:2-Chrom- oder 1:2-Kobaltkomplexverbindung oder einen 1:2-Chrom- oder 1:2-Kobaltmischkomplex von Monoazoverbindungen entsprechend der allgemeinen Formel (1) oder (3), in denen hier der Formelrest $V_2$ für die β-Hydroxyäthylsulfonyl-Gruppe steht, bei einer Temperatur zwischen 0 und 20°C in 95 bis 100%iger Schwefelsäure oder mittels Amidosulfonsäure in Pyridin oder Picolin bei einer Temperatur zwischen 50 und 100°C in die entsprechende β-Sulfatoäthylsulfonyl-Verbindung überführt und im Falle der Verwendung einer Metallkomplex- oder Metallmischkomplex-Verbindung der Monoazoverbindungen der allgemeinen Formel (3) die erhaltene β-Sulfatoäthylsulfonyl-Verbindung anschliessend mit Cyanurchlorid monoacyliert und sodann mit einer Verbindung der allgemeinen Formel H-X mit X der in Anspruch 1 genannten Bedeutung umsetzt oder mit einer Verbindung der oben definierten allgemeinen Formel (4) umsetzt.

15. Verfahren nach Anspruch 14 zur Herstellung von symmetrischen 1:2-Chrom- oder 1:2-Kobaltkomplex-Azoverbindungen von Anspruch 1, dadurch gekennzeichnet, dass man eine metallfreie Azoverbindung der allgemeinen Formel (1) oder (3) in zweifach äquivalenter Menge mit einem chrom- oder kobaltabgebenden Mittel umsetzt und im Falle, dass eine Verbindung der allgemeinen Formel (3) als Ausgangsverbindung eingesetzt wurde, anschliessend mit Cyanurchlorid und der Verbindung H-X oder mit der Verbindung der Formel (4) umsetzt, oder dass man eine 1:1-Chrom- oder 1:1-Kobaltkomplex-Monoazoverbindung der allgemeinen Formel (5a) oder (5b)

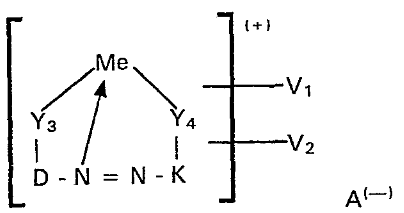

(5a)

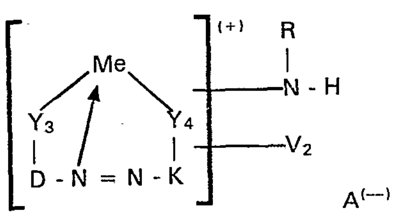

(5b)

in welchen D, K, $V_1$, $V_2$ und R die in Anspruch 1 genannten Bedeutungen haben, $Me^{(+)}$ für ein Chromkation oder ein Kobaltkation steht und $A^{(-)}$ ein farbloses Anion bedeutet sowie $Y_3$ ein zur Metallkomplexbildung befähigter bivalenter Rest ist, der in ortho-Stellung zur Azogruppe an D gebunden ist, sowie $Y_4$ einen zur Metallkomplexbildung befähigten bivalenten Rest bedeutet, der in ortho-Stellung zur Azogruppe an K gebunden ist, wobei die Gruppe $V_1$ an D oder K, die Gruppe der Formel -N(R)H an D oder K und die Gruppe $V_2$ jeweils an D oder K gebunden ist, mit einer metallfreien Azoverbindung der Formel (1) oder (3), deren Formelreste D, K, $V_1$, $V_2$ und R sowie H-$Y_3$ und H-$Y_4$ mit den Formelresten D, K, $V_1$, $V_2$ und R sowie $Y_1$ und $Y_2$ identisch sind, in äquivalenter Menge umsetzt und im Falle, dass eine Verbindung der allgemeinen Formel (5b) und/oder (3) als Ausgangsverbindung eingesetzt wurde, anschliessend mit Cyanurchlorid und mit einer Verbindung der Formel H-X oder mit einer Verbindung der Formel (4) umsetzt.

16. Verfahren nach Anspruch 15 zur Herstellung von asymmetrischen 1:2-Chrom- oder 1:2-Kobaltkomplexverbindungen von Anspruch 1, dadurch gekennzeichnet, dass man eine 1:1-Chrom- oder 1:1-Kobaltkomplex-Monoazoverbindung der in Anspruch 15 angegebenen und definierten allgemeinen Formel (5a) oder (5b) mit einer metallfreien Verbindung der in Anspruch 14 angegebenen und definierten allgemeinen Formel (1) oder (3), wobei die Monokomponenten dieser beiden Ausgangsverbindungen voneinander verschieden sind, umsetzt und im Falle der Verwendung einer Ausgangsverbindung der Formel (5b) oder (3) anschliessend mit Cyanurchlorid und sodann mit einer Verbindung der Formel H-X oder mit einer Verbindung der Formel (4) umsetzt.

17. Verwendung der in Anspruch 1 definierten Metallkomplex-Monoazoverbindungen oder Metallmischkomplexe als Farbstoffe zum Färben von hydroxy- und/oder carbonamidgruppenhaltigem Material.

**Claims**

1. Water-soluble, symmetrical or asymmetrical 1:2-chromium complex or 1:2-cobalt complex azo compounds of monoazo compounds of the general formula (1)

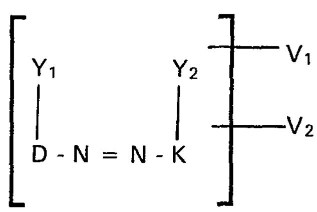

(1)

or their 1:2-chromium and 1:2-cobalt mixed complexes, in which

$Y_1$ is a group which is capable of metal-complex formation and which is bonded to D in ortho-position relative to the azo bridge;

$Y_2$ is a group which is capable of metal-complex formation and which is bonded to K in ortho-position relative to the azo group;

D is the radical of a diazo component to which the fiber-reactive group $V_1$ defined below or the fiber-reactive group $V_2$ defined below is bonded;

K is the radical of a coupling component to which the fiber-reactive group $V_1$ defined below or the fiber-reactive group $V_2$ defined below is bonded;

$V_1$ is a group of the general formula (2a)

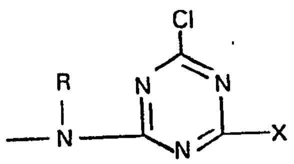 (2a)

which is bonded to D or K and in which

R is a hydrogen atom or an alkyl group of 1 to 4 carbon atoms and

X is an optionally substituted amino group or an optionally etherified hydroxy group or a thioether group;

$V_2$ is a group of the general formula (2b)

$$-W-SO_2-Z \quad (2b)$$

which is bonded to D or K and in which

W is a direct bond or a group of the formula

- NH - , - N(Alk) -, - $CH_2$ - or - $CH_2$ - $CH_2$ -

in which Alk is a $C_1$-$C_4$-alkyl group;

Z is the vinyl, the β-sulfatoethyl, the β-thiosulfatoethyl, the β-chloroethyl or the β-acetoxyethyl group.

2. Compounds according to claim 1, characterized by that D is a benzene nucleus, the group $Y_1$ of which standing in ortho-position relative to the azo group is a carboxy group or a hydroxy group, and to which the fiber-reactive group $V_1$ defined in claim 1 or the fiber-reactive group $V_2$ defined in claim 1 is bonded, and which can be further substituted by a substituent from the group consisting of sulfo, alkyl of 1 to 4 carbon atoms, alkoxy of 1 to 4 carbon atoms, nitro, carboxy, sulfamoyl, carbamoyl, carbamoyl or sulfamoyl each mono- or di-substituted by alkyl of 1 to 4 carbon atoms, N-phenyl-carbamoyl, N-phenyl-sulfamoyl, N-methyl-N-phenyl-carbamoyl, N-methyl-N-phenyl-sulfamoyl, chlorine and bromine.

3. Compounds according to claim 1, characterized by that D is a benzene nucleus, the group $Y_1$ of which standing in ortho-position relative to the azo group is the hydroxy group, and to which the fiber-reactive group $V_1$ defined in claim 1 or the fiber-reactive group $V_2$ defined in claim 1 is bonded, and which can be further substituted by substituents from the group consisting of sulfo, methyl, ethyl, methoxy, ethoxy, carboxy and chlorine, or D is a naphthalene nucleus the group $Y_1$ of which standing in ortho-position relative to the azo group is the hydroxy group, and to which the fiber-reactive group $V_1$ or $V_2$ defined in claim 1 is bonded, and which can be further substituted by one or two sulfo groups.

4. Compounds according to claim 1, characterized by that -K-$Y_2$ is a naphthol radical to which, at K, the fiber-reactive group $V_1$ or $V_2$ defined in claim 1 is bonded and to which the azo group is in ortho-position to the hydroxy group, and in which the naphthalene nucleus K can be further substituted by one or two sulfo groups.

5. Compounds according to claim 1, characterized by that -K-$Y_2$ is a 1-phenylpyrazol- or 1-naphthylpyrazol-5-on-4-yl radical to which the azo group is bonded in the 4-position and which is substituted in the 3-position by carbamoyl, lower carbalkoxy, phenyl, methyl or carboxy, and the phenyl radical of which present in the 1-position is substituted by the fiber-reactive group $V_1$ or $V_2$ defined in claim 1 and can be further substituted by one or two substituents from the group consisting of alkyl of 1 to 4 carbon atoms, alkoxy of 1 to 4 carbon atoms, chlorine, bromine, alkanoylamino having 1 to 4 carbon atoms in the alkyl radical, carboxy and sulfo, and the naphthyl radical of which present in the 1-position is substituted by the group $V_1$ or $V_2$ defined in claim 1 and can be further substituted by a sulfo group and a substituent from the group consisting of methyl, ethyl, methoxy, ethoxy, alkanoylamino having 1 to 4 carbon atoms in the alkyl radical, carboxy and chlorine, or by one or two sulfo groups.

6. Compounds according to claim 1, characterized by that -K-$Y_2$ is a radical of the formula

HO
|
C - $CH_3$
||
- C - CO - NH - phenyl

or

HO
|
C - $CH_3$
||
- C - CO - NH - naphthyl

in which the phenyl radical «phenyl» is substituted by the fiber-reactive group $V_1$ or $V_2$ defined in claim 1 and can be further substituted by one or two substituents from the group consisting of alkyl of 1 to 4 carbon atoms, chlorine, carboxy, sulfo, carbamoyl and sulfamoyl, and in which the naphthyl radical «naphthyl» is substituted by the fiber-reactive group $V_1$ or $V_2$ defined in claim 1 and can be further substituted by a sulfo group and a substituent from the group consisting of methyl, ethyl, methoxy, ethoxy, chlorine and carboxy, or by one or two sulfo groups.

7. Compounds according to claim 1, characterized by that X denotes a lower alkoxy group, a phenoxy group which can be substituted by one or two sulfo groups, the amino group, an amino group which is mono- or disubstituted by a lower alkyl group, an amino group which is substituted by a lower alkyl group and a lower carboxyalkyl or a lower sulfoalkyl group, or is a phenylamino or naphthylamino group in which the phenyl and naphthyl radicals thereof can be further substituted by methyl, methoxy, chlorine, carboxy and/or sulfo and

the nitrogen atom thereof can be further substituted by a lower alkyl group.

8. Compounds according to claim 1, of the general formula

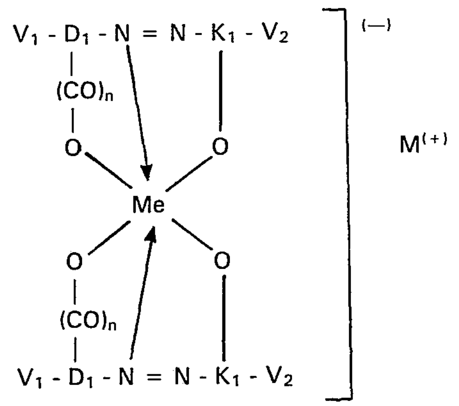

(6)

or of the general formula

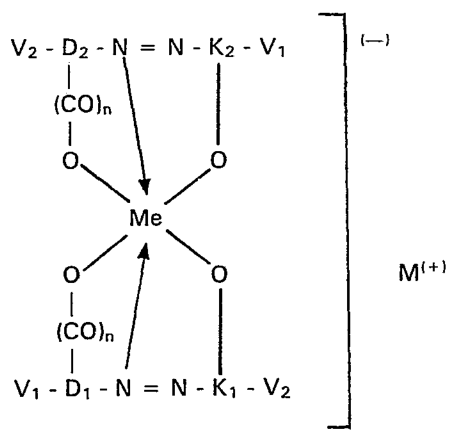

(7)

or of the general formula

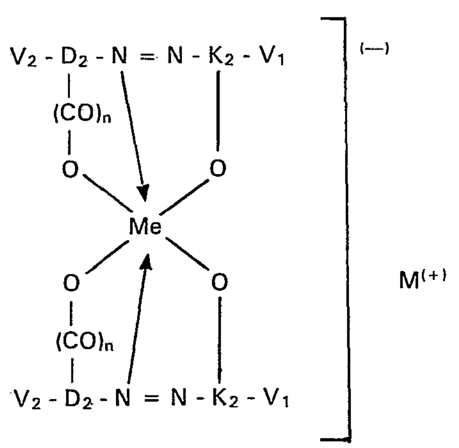

(8)

in which:

M is a hydrogen atom or is the equivalent of a mono- or divalent metal;

Me is the chromium or cobalt atom;

n is the number zero or 1;

$V_1$ is the group of the formula (2a) mentioned in claim 1, in which R is a hydrogen atom and X represents an amino group of the formula $-NR^3R^4$ in which $R^3$ denotes a hydrogen atom or a lower alkyl group which can be substituted by a carboxy or sulfo group, and $R^4$ is a hydrogen atom or a lower alkyl group which can be substituted by a carboxy group or a sulfo group or by a phenyl radical which is optionally substituted by sulfo, or is a phenyl radical which can be substituted by 1 or 2 substituents from the group consisting of sulfo, carboxy, methyl, ethyl, methoxy, ethoxy and chlorine, and the two formula moieties $R^3$ and $R^4$ can be identical to or different from one another;

$V_2$ has the meaning of the group of the formula (2b) defined in claim 1;

$D_1$ is the benzene radical in which the carbonyloxy or oxy group is bonded in ortho-position relative to the azo group and which does not contain any further substituent in addition to these two groups and the group $V_1$, or which is further substituted by a sulfo, methyl, ethyl, methoxy, ethoxy, carboxy, sulfamoyl or carbamoyl group or by a chlorine or bromine atom, or $D_1$ is a naphthalene radical in which the carbonyloxy or oxy group is bonded in ortho-position relative to the azo group and which can contain, in addition to these two groups and the group $V_1$, one or two sulfo groups as additional substituents;

$D_2$ is the benzene radical in which the carbonyloxy or oxy group is bonded in ortho-position relative to the azo group and which does not contain any further substituents in addition to these two groups and the group $V_2$, or which is further substituted by a methyl, ethyl, methoxy, ethoxy, nitro, carboxy, sulfamoyl or carbamoyl group or by a chlorine or bromine atom or a sulfo group, or $D_2$ is a naphthalene radical in which the carbonyloxy or oxy group is bonded in ortho-position relative to the azo group and which can contain a sulfo group in addition to these two groups and the group $V_2$;

$K_1$ is a naphthalene radical in which the oxy group is bonded in ortho-position relative to the azo group and which can contain a sulfo group as a further substituent in addition to these two groups and the group $V_2$, or

$K_1$ is the radical 1-phenyl- or 1-naphthyl-pyrazol-4,5-ylene which is substituted in the 3-position by carbamoyl, lower carbalkoxy, phenyl, methyl or carboxy, and the phenyl radical of which present in the 1-position does not contain any further substituent in addition to the group $V_2$ or is further substituted by 1 or 2 substituents from the group consisting of methyl, ethyl, methoxy, ethoxy and chlorine, and/or by 1 substituent from the group consisting of bromine, carboxy and sulfo, or by 1 substituent from the group consisting of methyl, ethyl, methoxy, ethoxy and chlorine and by 1 sulfo group, and the naphthyl group of which present in the 1-position does not contain any further substituent in addition to the group $V_2$ or is further substituted by one or two sulfo groups, or

$K_1$ as the radical of a coupling component represents the radical of acetoacetylaminobenzene or acetoacetylaminonaphthalene, where the benzene radical does not contain any further substituent in addition to the group $V_2$ or is further substituted by one or two substituents from the group consisting of methyl, ethyl, methoxy, ethoxy and chlorine,

and/or by 1 substituent from the group consisting of bromine, carboxy and sulfo, or by 1 substituent from the group consisting of methyl, ethyl, methoxy, ethoxy and chlorine and by 1 sulfo group, and the naphthyl radical does not contain any further substituent in addition to the group $V_2$ or is further substituted by one or two sulfo groups;

$K_2$ is a naphthalene radical in which the oxy group is bonded in the ortho-position relative to the azo group and which is further substituted by one or two sulfo groups in addition to the group $V_1$, or

$K_2$ is the radical 1-phenyl- or 1-naphthyl-pyrazol--4,5-ylene which is substituted in the 3-position by carbamoyl, lower carbalkoxy, phenyl, methyl or carboxy, and the phenyl radical of which present in the 1-position does not contain any further substituent in addition to the group $V_1$ or is, in addition to $V_1$, further substituted by 1 or 2 substituents from the group consisting of methyl, ethyl, methoxy and ethoxy, and/or by 1 substituent from the group consisting of chlorine, carboxy and sulfo, or by 1 substituent from the group consisting of methyl, ethyl, methoxy, ethoxy and chlorine and by 1 sulfo group, and the naphthyl radical of which present in the 1-position does not contain any further substituent in addition to the group $V_1$ or is, in addition to $V_1$, further substituted by one or two sulfo groups, or

$K_2$ as the radical of a coupling component represents the radical of acetoacetylaminobenzene or acetoacetylaminonaphthalene, where the benzene radical does not contain any further substituent in addition to the group $V_1$ or is, in addition to $V_1$, further substituted by 1 or 2 substituents from the group consisting of methyl, ethyl, methoxy, ethoxy and chlorine, and/or by a carboxy or sulfo group, or by 1 substituent from the group consisting of methyl, ethyl, methoxy, ethoxy and chlorine and by 1 sulfo group, and the naphthyl radical of which does not contain any further substituent in addition to the group $V_1$ or is, in addition to $V_1$, further substituted by one or two sulfo groups.

9. Compounds according to claim 1 or 8, characterized by that n represents in each case the number zero.

10. Compounds according to claim 8, characterized by that $M^{(+)}$ is the sodium ion or the potassium ion or the equivalent of the calcium ion.

11. Compounds according to claim 1 or 8, characterized by that $V_1$ denotes the group of the formula (2a) mentioned in claim 1, in which R is a hydrogen atom and X represents a lower alkoxy group.

12. Compounds according to claim 8, of the general formula (8) indicated there, characterized by that n represents the number zero, $V_1$ denotes the group of the formula (2a) described in claim 1 and in which R is a hydrogen atom and X is the amino group or a phenylamino group or a N-methyl- or N-ethyl--phenylamino group or a phenylamino group which is substituted by one or two sulfo groups, $V_2$ denotes the group of the formula (2b) mentioned and defined in claim 1, $D_2$ is the benzene radical in which the oxy group is bonded in ortho-position relative to the azo group and which does not contain any further substituent in addition to this oxy group and the group $V_2$ or os further substituted by a sulfo group as an additional substituent, $K_2$ is a naphthalene radical in which the oxy group is bonded in ortho-position relative to the azo group and which is further substituted by one or two sulfo groups in addition to the group $V_1$, and $M^{(+)}$ and Me have the meanings mentioned in claim 8.

13. Compounds according to any of claims 1 to 12 characterized by that $V_2$ represents the vinylsulfonyl or the β-sulfatoethylsulfonyl group.

14. A process for the preparation of the metal-complex compounds or metal mixed complexes mentioned and defined in claim 1, characterized by that a metal-free compound of the general formula (1) defined in claim 1 or of the formula (3)

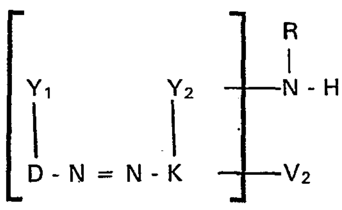

(3)

(in which $Y_1$, $Y_2$, R and $V_2$ have the meanings mentioned in claim 1 and D represents the radical of a diazo component to which the amino group of the formula -N(R)H or the group of the formula $V_2$ is bonded, and K denotes the radical of a coupling component to which the amino group of the formula -N(R)H or the group $V_2$ is bonded) is reacted, or that two compounds of the general formula (1) or (3) which differ from each other are reacted, with a chromium- or cobalt-donating agent, and in the case where a compound of the general formula (3) is used the metal complex compounds or metal mixed complexes obtained are monoacylated with cyanuric chloride and then reacted with a compound of the general formula H-X with X of the meaning mentioned in claim 1, or with a compound of the general formula (4)

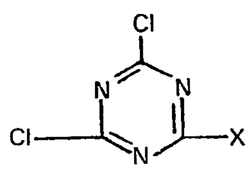

(4)

in which X has the meaning mentioned in claim 1 or that a 1:2-chromium or 1:2-cobalt complex compound or a 1:2-chromium or 1:2-cobalt mixed complex of a monoazo compound corresponding to the general formula (1) or (3) in which, in this case, the formula radical $V_2$ represents the β-hydroxyethylsulfonyl group, is converted into the corresponding β-sulfatoethylsulfonyl compound at a temperature between 0 and 20°C in 95 to 100% strength sulfuric acid or by means of sulfamic acid in pyridine or picoline at a temperature between 50 and 100°C, and if the metal-complex or metal mixed complex compound of the monoazo compounds of the general formula (3) is used the β-sulfatoethylsulfonyl compound obtained is then monoacylated with cyanuric chloride and then reacted with a compound

of the general formula H-X with X of the meaning mentioned in claim 1, or is reacted with a compound of the general formula (4) defined above.

15. A process according to claim 14 for the preparation of symmetrical 1:2-chromium or 1:2-cobalt complex azo compounds of claim 1, characterized by that a metal-free azo compound of the general formula (1) or (3) is reacted, in a twofold equivalent amount, with a chromium- or cobalt-donating agent, and if a compound of the general formula (3) was used as starting compound, is then reacted with cyanuric chloride and the compound H-X or with the compound of formula (4), or that a 1:1-chromium or 1:1-cobalt complex monoazo compound of the general formula (5a) or (5b)

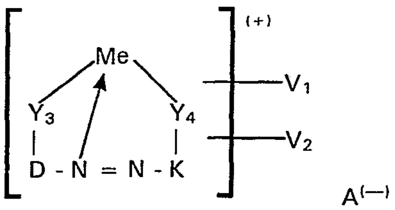
(5a)

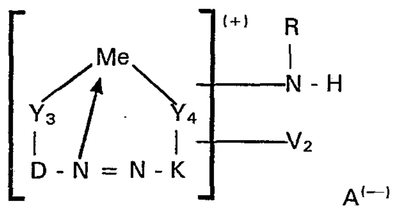
(5b)

(in which D, K, $V_1$, $V_2$ and R have the meanings mentioned in claim 1, $Me^{(+)}$ represents a chromium cation or a cobalt cation, and $A^{(-)}$ denotes a colorless anion, and $Y_3$ is a bivalent radical which is capable of metal-complex formation and which is bonded to D in ortho-position relative to the azo group, and $Y_4$ denotes a bivalent radical which is capable of metal-complex formation and which is bonded to K in ortho-position relative to the azo group, the group $V_1$ being bonded to D or K, the group of the formula -N(R)H being bonded to D or K, and the group $V_2$ being bonded in each case to D or K) is reacted, in an equivalent amount, with a metal-free azo compound of the formula (1) or (3), the formula radicals of which, namely D, K, $V_1$, $V_2$ and R as well as H-$Y_3$ and H-$Y_4$, are identical to the formula radicals D, K, $V_1$, $V_2$ and R as well as $Y_1$ and $Y_2$, and if a compound of the general formula (5b) and/or (3) was used as a starting compound is then reacted with cyanuric chloride and with a compound of the formula H-X, or is reacted with a compound of the formula (4).

16. A process according to claim 15 for the preparation of asymmetrical 1:2-chromium or 1:2-cobalt complex compounds of claim 1, characterized by that a 1:1-chromium or 1:1-cobalt complex monoazo compound of the general formula (5a) or (5b) indicated and defined in claim 15, is reacted with a metal-free compound of the general formula (1) or (3) indicated and defined in claim 14, the mono-components of these two starting compounds being different from each other, and if a starting compound of the formula (5b) or (3) was used is then reacted with cyanuric chloride and then with a compound of the formula H-X, or with a compound of the formula (4).

17. Use of the metal-complex monoazo compounds or metal mixed complexes defined in claim 1, as dyestuffs for coloring hydroxy- and/or carboxamide groups containing material.

**Revendications**

1. Complexes azoïques de chrome 1:2 ou de cobalt 1:2, symétriques ou asymétriques, qui sont solubles dans l'eau et qui dérivent de composés mono-azoïques répondant à la formule générale (1), ou complexes de chrome 1:2 ou de cobalt 1:2 mixtes dérivant de ces composés mono-azoïques, les divers symboles présents dans la formule (1) ayant les significations suivantes:

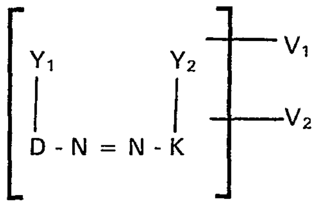
(1)

$Y_1$ représente un radical apte à former un complexe avec un métal, radical qui occupe, sur D, une position ortho par rapport au pont azoïque,

$Y_2$ représente un radical apte à former un complexe avec un métal, radical qui se trouve, sur K, en une position ortho par rapport au radical azo,

D représente le radical d'une composante de diazotation, auquel est lié le radical réactif $V_1$ défini ci-dessous ou le radical réactif $V_2$ défini ci-dessous,

K représente le radical d'un copulant, auquel est lié le radical réactif $V_1$ défini ci-dessous ou le radical réactif $V_2$ défini ci-dessous,

$V_1$ représente un radical, lié à D ou à K, qui répond à la formule générale (2a)

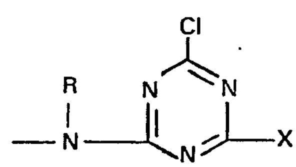
(2a)

dans laquelle

R représente un atome d'hydrogène ou un radical alkyle contenant de 1 à 4 atomes de carbone, et

X représente un radical amino éventuellement substitué, un radical hydroxy éventuellement éthérifié ou un radical de thio-éther,

$V_2$ représente un radical, lié à D ou à K, qui répond à la formule générale (2b):

$$-W-SO_2-Z \qquad (2b)$$

dans laquelle

W représente une liaison directe ou un radical répondant à l'une des formules:

- NH -, 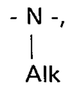, - $CH_2$ - et - $CH_2$ - $CH_2$ -

où Alk représente un radical alkyle contenant de 1 à 4 atomes de carbone, et

Z représente un radical vinyle, sulfato-2 éthyle, thiosulfato-2 éthyle, chloro-2 éthyle ou acétoxy-2 éthyle.

2. Composés selon la revendication 1, caractérisés en ce que D représente un noyau benzénique dont le substituant $Y_1$, en position ortho par rapport au radical azo, est un radical carboxy ou un radical hydroxy, qui porte le radical $V_1$ réactif défini à la revendication 1 ou le radical $V_2$ réactif défini à la revendication 1, et qui peut en outre porter un substituant pris dans l'ensemble constitué par les radicaux sulfo, alkyles en $C_1$-$C_4$, alcoxy en $C_1$-$C_4$, nitro, carboxy, sulfamoyle, carbamoyle, carbamoyles et sulfamoyles porteurs d'un ou deux alkyles en $C_1$-$C_4$, N-phényl-carbamoyle, N-phényl-sulfamoyle, N-méthyl-N-phényl-carbamoyle, N-méthyl-N-phényl-sulfamoyle, chloro et bromo.

3. Composés selon la revendication 1, caractérisés en ce que D représente un noyau benzénique dont le substituant $Y_1$, en position ortho relativement au radical azo, est un radical hydroxy, qui porte le radical réactif $V_1$ défini à la revendication 1 ou le radical réactif $V_2$ défini à la revendication 1, et qui peut en outre porter des substituants pris dans l'ensemble constitué par les radicaux sulfo, méthyle, éthyle, méthoxy, éthoxy, carboxy et chloro, ou en ce que D représente un noyau naphtalénique dont le substituant $Y_1$, en position ortho par rapport au radical azo, est un radical hydroxy, qui peut porter le radical réactif $V_1$ ou le radical réactif $V_2$ définis à la revendication 1 et qui peut en outre porter un ou deux radicaux sulfo.

4. Composés selon la revendication 1, caractérisés en ce que -K-$Y_2$ désigne un radical de naphtol qui porte, sur K, le radical réactif $V_1$ ou le radical réactif $V_2$ définis à la revendication 1, sur lequel le radical azo est en position ortho par rapport au radical hydroxy, et dont le noyau naphtalénique K peut en outre porter un ou deux radicaux sulfo.

5. Composés selon la revendication 1, caractérisés en ce que -K-$Y_2$ est un radical phényl-1 ou naphtyl-1 pyrazolone-5 yle-4 à la position 4 duquel est lié le radical azo, qui porte, en sa position 3, un radical carbamoyle, un radical alcoxycarbonyle inférieur ou un radical phényle, méthyle ou carboxy, et dont le radical phényle, en position 1, porte le radical réactif $V_1$ ou le radical réactif $V_2$ définis à la revendication 1 et peut en outre porter un ou deux substituants pris dan l'ensemble constitué par les alkyles en $C_1$-$C_4$, les alcoxy en $C_1$-$C_4$, le chlore, le brome, les alcanoylamino contenant de 1 à 4 atomes de carbone dans la partie alkyle, le radical carboxy et le radical sulfo, et dont le radical naphtyle en position 1 porte le radical $V_1$ ou le radical $V_2$ définis à la revendication 1 et peut en outre porter un radical sulfo et un substituant pris dans l'ensemble constitué par les radicaux méthyle, éthyle, méthoxy, éthoxy, alcanoylamino à alkyle en $C_1$-$C_4$, carboxy et chloro, ou un ou deux radicaux sulfo.

6. Composés selon la revendication 1, caractérisés en ce que -K-$Y_2$ est un radical répondant à l'une des formules:

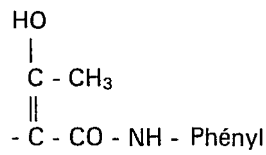

et

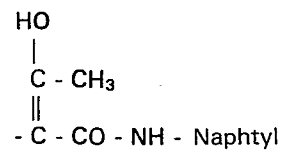

où le radical phényle désigné par «Phényl» porte le radical réactif $V_1$ ou le radical réactif $V_2$ définis à la revendication 1 et peut en outre porter un ou deux substituants pris dans l'ensemble constitué par les alkyles en $C_1$-$C_4$, les alcoxy en $C_1$-$C_4$, le chlore et les radicaux carboxy, sulfo, carbamoyle et sulfamoyle, et où le radical naphtyle désigné par «Naphtyl» porte le radical réactif $V_1$ ou le radical réactif $V_2$ définis à la revendication 1 et peut en outre porter un radical sulfo et un substituant pris dans l'ensemble constitué par les radicaux méthyle, éthyle, méthoxy, éthoxy, chloro et carboxy, ou un ou deux radicaux sulfo.

7. Composés selon la revendication 1, caractérisés en ce que X représente un radical alcoxy inférieur, un radical phénoxy éventuellement porteur d'un ou deux radicaux sulfo, un radical amino, un radical amino porteur d'un ou de deux radicaux alkyles inférieurs, ou un radical amino porteur d'un radical alkyle inférieur et d'un radical carboxy-alkyle inférieur ou sulfo-alkyle inférieur, ou est un radical phénylamino ou naphtylamino dont le radical phényle ou naphtyle peut en outre porter un radical méthyle, méthoxy, chloro, carboxy et/ou sulfo et dont l'atome d'azote peut en outre porter un radical alkyle inférieur.

8. Composés selon la revendication 1 qui répondent à la formule générale (6):

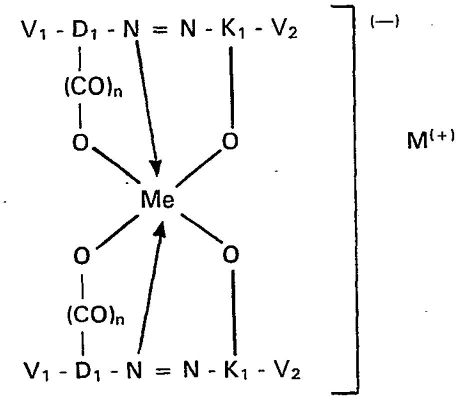

(6)

ou à la formule générale (7):

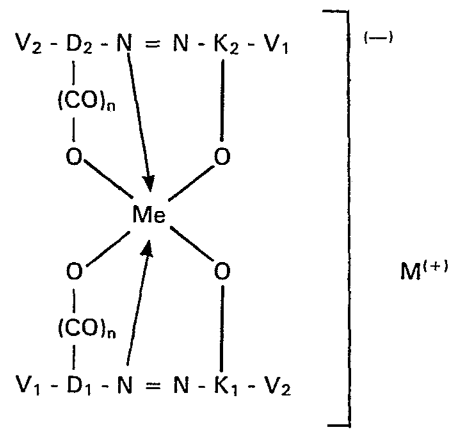

(7)

ou à la formule générale (8):

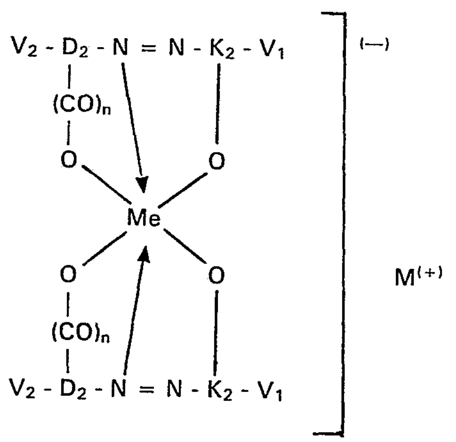

(8)

dans lesquelles:

M représente un atome d'hydrogène ou l'équivalent d'un métal univalent ou bivalent,

Me représente un atome de chrome ou de cobalt,

n représente le nombre zéro ou le nombre 1,

$V_1$représente un radical de formule (2a) tel que défini à la revendication 1 dans lequel R représente un atome d'hydrogène et X un radical amino de formule $-NR^3R^4$ dans lequel $R^3$ représente un atome d'hydrogène ou un radical alkyle inférieur éventuellement porteur d'un radical carboxy ou sulfo et $R^4$ représente un atome d'hydrogène ou un radical alkyle inférieur éventuellement porteur d'un radical carboxy ou sulfo ou d'un radical phényle, lui-même éventuellement porteur d'un sulfo, ou un radical phényle qui peut porter un ou deux substituants pris dans l'ensemble constitué par les radicaux sulfo, carboxy, méthyle, éthyle, méthoxy, éthoxy et chloro, les deux radicaux $R^3$ et $R^4$ pouvant être identiques l'un à l'autre ou différents l'un de l'autre,

$V_2$ représente un radical de formule générale (2b) tel que défini à la revendication 1,

$D_1$ représente un radical benzénique sur lequel le radical carbonyloxy ou oxy se trouve en position ortho par rapport au radical azo et qui, à part ces deux radicaux et le radical $V_1$, ne porte aucun substituant supplémentaire ou porte en outre un radical sulfo, méthyle, éthyle, méthoxy, éthoxy, carboxy, sulfamoyle ou carbamoyle ou un atome de chlore ou de brome, ou $D_1$ représente un radical naphtalénique sur lequel le radical carbonyloxy ou oxy se trouve en position ortho par rapport au radical azo et qui, à part ces deux radicaux et le radical $V_1$, peut porter un ou deux radicaux sulfo comme substituant(s) supplémentaire(s),

$D_2$ représente un radical benzénique sur lequel le radical carbonyloxy ou oxy se trouve en position ortho par rapport au radical azo et qui, à part ces deux radicaux et le radical $V_2$, ne porte pas de substituant supplémentaire ou porte un radical méthyle, éthyle, méthoxy, éthoxy, nitro, carboxy, sulfamoyle ou carbamoyle ou un atome de chlore ou de brome ou un radical sulfo, ou $D_2$ représente un radical naphtalénique sur lequel le radical carbonyloxy ou oxy se trouve en position ortho par rapport au radical azo et qui, à part ces deux radicaux et le radical $V_2$, peut porter un radical sulfo,

$K_1$ représente un radical naphtalénique sur lequel le radical oxy est en position ortho par rapport au radical azo et qui, à part ces deux radicaux et le radical $V_2$, peut porter un radical sulfo comme substituant supplémentaire, ou

$K_1$ représente un radical phényl-1 ou naphtyl-1 pyrazolène-4,5 qui porte, en position 3, un carbamoyle, un alcoxycarbonyle inférieur, un phényle, un méthyle ou un carboxy, dont le phényle de la position 1 ne porte pas de substituant autre que le radical $V_2$ ou porte un ou deux substituants pris dans l'ensemble constitué par les radicaux méthyle, éthyle, méthoxy, éthoxy et chloro et/ou un substituant pris dans l'ensemble constitué par le brome, le carboxy et le sulfo, ou un substituant pris dans l'ensemble constitué par les radicaux méthyle, éthyle, méthoxy, éthoxy et chloro, et un radical sulfo, et dont la naphtyle de la position 1 ne porte pas de substituant autre que le radical $V_2$ ou porte, en plus, un ou deux radicaux sulfo, ou

$K_1$ représente, en tant que radical d'un copulant, le radical de l'acétoacétylamino-benzène ou d'un acétoacétylamino-naphtalène, le radical benzénique ne portant pas de substituant, abstraction faite du radical $V_2$ ou portant, en plus, un ou deux substituants pris dans l'ensemble constitué par les radicaux méthyle, éthyle, méthoxy, éthoxy et chloro et/ou un substituant pris dans l'ensemble constitué par les radicaux bromo, carboxy et sulfo ou un substituant pris dans l'ensemble constitué par les radicaux méthyle, éthyle, méthoxy, éthoxy et chloro et un radical sulfo, et le radical naphtalénique ne portant pas de substituant autre que le radical $V_2$ ou portant, en plus, un ou deux radicaux sulfo,

$K_2$ représente un radical naphtalénique sur lequel le radical oxy est en position ortho par rapport au radical azo et qui, en plus du radical $V_1$, porte un ou deux radicaux sulfo, ou

$K_2$ représente un radical phényl-1 ou naphtyl-1 pyrazolène-4,5 qui porte, en position 3, un carbamoyle, un alcoxycarbonyle inférieur, un phényle, un méthyle ou un carboxy, dont le radical phényle qui lui est lié par la position 1 ne porte pas de substituant en plus du radical $V_1$ ou porte, en plus de $V_1$, un ou deux substituants pris dans l'ensemble constitué par

les radicaux méthyle, éthyle, méthoxy et éthoxy et/ou un substituant pris dans l'ensemble constitué par le chlore, le carboxy et le sulfo ou un substituant pris dans l'ensemble constitué par les radicaux méthyle, éthyle, méthoxy, éthoxy et chloro et un radical sulfo, et dont le radical naphtyle qui lui est lié par sa position 1 ne porte pas de substituant autre que le radical $V_1$ ou porte, en plus de $V_1$, un ou deux radicaux sulfo, ou

$K_2$ représente, en tant que radical d'un copulant, le radical de l'acétoacétylamino-benzène ou d'un acétoacétylamino-naphtalène, dont le radical benzénique ne porte pas de substituant supplémentaire en plus du radical $V_1$ ou porte, en plus de $V_1$, un ou deux substituants pris dans l'ensemble constitué par les radicaux méthyle, éthyle, méthoxy, éthoxy et chloro et/ou un radical carboxy ou un radical sulfo ou un substituant pris dans l'ensemble constitué par les radicaux méthyle, éthyle, méthoxy, éthoxy et chloro et un radical sulfo, et dont le radical naphtyle ne porte pas de substituant autre que le radical $V_1$ ou porte, en plus de $V_1$, un ou deux radicaux sulfo.

9. Composés selon l'une des revendications 1 et 8, caractérisés en ce que n représente le nombre zéro.

10. Composés selon la revendication 8, caractérisés en ce que $M^{(+)}$ représente l'ion sodium ou l'ion potassium ou un équivalent de l'ion calcium.

11. Composés selon l'une des revendications 1 et 8, caractérisés en ce que $V_1$ représente un radical de formule (2a) tel que défini à la revendication 1 dans lequel R représente un atome d'hydrogène et X un radical alcoxy inférieur.

12. Composés selon la revendication 8 répondant à la formule générale (8) représentée dans cette revendication 8, composés caractérisés en ce que n représente le nombre zéro, $V_1$ représente un radical de formule (2a) tel que défini à la revendication 1 dans lequel R représente un atome d'hydrogène et X un radical amino ou un radical phénylamino ou un radical N-méthyl- ou N-éthyl-phénylamino ou un radical phénylamino porteur d'un ou deux radicaux sulfo, $V_2$ représente un radical répondant à la formule (2b) qui a été représentée et définie à la revendication 1, $D_2$ représente un radical benzénique qui porte le radical oxy en ortho par rapport au radical azo et qui, en plus de ce radical oxy et du radical $V_2$, ne porte pas de substituant supplémentaire ou porte un radical sulfo, $K_2$ représente un radical naphtalénique qui porte le radical oxy en ortho par rapport au radical azo et qui, en plus du radical $V_1$, porte un ou deux radicaux sulfo, et $M^{(+)}$ et Me ont les significations qui ont été données à la revendication 8.

13. Composés selon l'une quelconque des revendications 1 à 12, caractérisés en ce que $V_2$ représente un radical vinylsulfonyle ou un radical sulfato-2 éthylsulfonyle.

14. Procédé de préparation des complexes métallisés et des complexes métallisés mixtes définis à la revendication 1, procédé caractérisé en ce qu'on fait réagir un composé non métallisé répondant à la formule générale (1) définie à la revendication 1 ou à la formule générale (3):

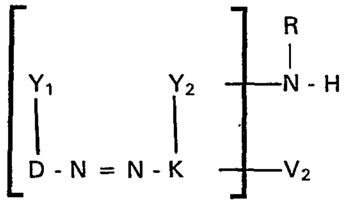 (3)

dans laquelle $Y_1$, $Y_2$, R et $V_2$ ont les significations données à la revendication 1, D représente le radical d'une composante de diazotation portant le radical amino -N(R)H ou le radical $V_2$, et K représente le radical d'un copulant portant le radical amino -N(R)H ou le radical $V_2$, ou deux composés de formule générale (1) ou (3) différents l'un de l'autre, avec un agent cédant du chrome ou du cobalt, et, dans le cas où l'on a utilisé un composé de formule générale (3), on mono-acyle avec le chlorure de cyanuryle les complexes métallisés ou les complexes mixtes métallisés obtenus, puis on fait réagir avec un composé H-X dans lequel X a la signification donnée à la revendication 1, ou encore on les fait réagir avec un composé répondant à la formule générale (4):

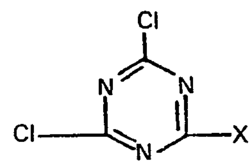 (4)

dans laquelle X a la signification donnée à la revendication 1, ou en ce qu'on transforme un complexe de chrome ou de cobalt 1:2 ou un complexe mixte de chrome ou de cobalt 1:2 dérivant de composés mono-azoïques de formule générale (1) ou de formule générale (3) dans lesquels, cette fois, $V_2$ représente un radical hydroxy-2 éthylsulfonyle, à une température comprise entre 0 et 20°C dans de l'acide sulfurique d'une concentration comprise entre 95 et 100%, ou au moyen d'acide sulfamique dans de la pyridine ou de la picoline, à une température comprise entre 50 et 100°C, en le composé sulfato-2 éthylsulfonyle correspondant, et, dans le cas où on a utilisé un complexe métallisé ou un complexe métallisé mixte dérivant de composés mono-azoïques de formule générale (3), on mono-acyle ensuite, au moyen du chlorure de cyanuryle, le composé sulfato-2 éthylsulfonylique obtenu, puis on fait réagir le composé ainsi mono-acylé avec un composé H-X dans lequel X a la signification donnée à la revendication 1, ou encore on fait réagir le composé obtenu cité avec un composé répondant à la formule générale (4) définie ci-dessus.

15. Procédé selon la revendication 14 pour la préparation de complexes azoïques de chrome 1:2 ou de cobalt 1:2 symétriques selon la revendication 1, procédé caractérisé en ce qu'on fait réagir un composé azoïque non métallisé de formule générale (1) ou (3), en une quantité représentant deux fois la quantité équivalente, avec un agent cédant du chrome ou du cobalt, et, dans le cas où l'on a utilisé un composé de formule générale (3) comme corps de départ, on fait ensuite réagir le composé obtenu avec le chlorure de cyanuryle et avec un composé H-X, ou on le fait

réagir avec un composé de formule 4, ou en ce qu'on fait réagir, en des quantités équivalentes, un complexe mono-azoïque de chrome 1:1 ou de cobalt 1:1 répondant à l'une des formules générales (5a) et (5b):

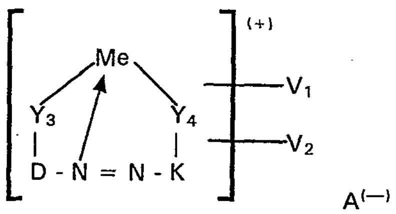

(5a)

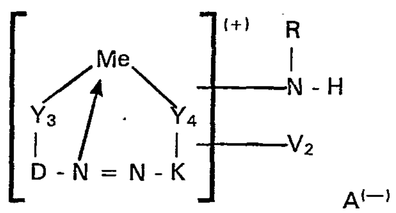

(5b)

dans lesquelles D, K, $V_1$, $V_2$ et R ont les significations données à la revendication 1, $Me^{(+)}$ représente un cation de chrome ou de cobalt, $A^{(-)}$ représente un anion incolore, $Y_3$ représente un radical bivalent qui est apte à former un complexe métallique et qui se trouve, sur D, en une position ortho par rapport au radical azo, et $Y_4$ représente un radical bivalent qui est apte à former un complexe métallique et qui se trouve, sur K, en une position ortho par rapport au radical azo, le radical $V_1$ étant porté par D ou par K, le radical -N(R)H par D ou K et le radical $V_2$, dans chacune des deux formules, par D ou K, avec un composé azoïque non métallisé répondant à la formule (1) ou à la formule (3) dont les radicaux D, K, $V_1$, $V_2$ et R ainsi que H-$Y_3$ et H-$Y_4$ sont identiques aux radicaux D, K, $V_1$, $V_2$ et R ainsi que $Y_1$ et $Y_2$, après quoi, dans le cas où l'on est parti d'un composé de formule générale (5b) et/ou de formule générale (3), on fait réagir avec le chlorure de cyanuryle et avec un composé de formule H-X, ou avec un composé de formule (4).

16. Procédé selon la revendication 15 pour la préparation de complexes de chrome 1:2 ou de cobalt 1:2 asymétriques selon la revendication 1, procédé caractérisé en ce qu'on fait réagir un complexe mono-azoïque de chrome 1:1 ou de cobalt 1:1 répondant à l'une des formules générales (5a) et (5b) qui ont été représentées et définies à la revendication 15, avec un composé non métallisé répondant à l'une des formules générales (1) et (3) définies à la revendication 14, les mono-composantes de ces deux corps de départ devant être différentes l'une de l'autre, et, dans le cas où l'on est parti d'un corps de départ de formule (5b) ou (3), on fait ensuite réagir le composé obtenu avec le chlorure de cyanuryle, puis avec un composé de formule H-X, ou on le fait réagir avec un composé de formule (4).

17. Application des complexes mono-azoïques métallisés ou des complexes mixtes métallisés définis à la revendication 1 comme colorants pour la teinture de matières contenant des radicaux hydroxy et/ou des radicaux carbamoyles.